# EUROPÄISCHE PATENTSCHRIFT

(11) **EP 2 109 993 B1**
(45) Veröffentlichungstag und Bekanntmachung des Hinweises auf die Patenterteilung: **01.08.2012**
(21) Anmeldenummer: 07856524.9
(22) Anmeldetag: 10.12.2007
(51) Int. Cl.: H04N 7/26, G06T 9/00

(54) **VORRICHTUNG UND VERFAHREN ZUM KODIEREN EINES TRANSFORMATIONSKOEFFIZIENTENBLOCKES**
DEVICE AND METHOD FOR ENCODING A BLOCK OF TRANSFORMATION COEFFICIENTS
DISPOSITIF ET PROCÉDÉ POUR CODER UN BLOC DE COEFFICIENTS ISSUS D'UNE TRANSFORMÉE

(30) Priorität: 27.12.2006 DE 102006061647; 27.12.2006 DE 102006061648; 27.12.2006 DE 102006061651
(43) Veröffentlichungstag der Anmeldung: 21.10.2009
(60) Teilanmeldung: 09011939.7
(73) Patentinhaber: Fraunhofer-Gesellschaft zur Förderung der angewandten Forschung e.V., 80686 München (DE)
(72) Erfinder: MOHR, Joerg, 91126 Schwabach (DE)
(74) Vertreter: Schenk, Markus
(86) Internationale Anmeldenummer: PCT/EP2007/010756
(87) Internationale Veröffentlichungsnummer: WO 2008/080516

(56) Entgegenhaltungen:
- CHANG Y-W ET AL: "Parallel Embedded Block Coding Architecture for JPEG 2000" IEEE TRANSACTIONS ON CIRCUITS AND SYSTEMS FOR VIDEO TECHNOLOGY, IEEE SERVICE CENTER, PISCATAWAY, NJ, US, Bd. 15, Nr. 9, 1. September 2005 (2005-09-01), Seiten 1086-1097, XP011138382 ISSN: 1051-8215
- HUNG-CHI FANG ET AL: "18.2 - 81MS/s JPEG2000 Single-Chip Encoder with Rate-Distortion Optimization" SOLID-STATE CIRCUITS CONFERENCE, 2004. DIGEST OF TECHNICAL PAPERS. ISS CC. 2004 IEEE INTERNATIONAL SAN FRANCISCO, CA, USA FEB. 15-19, 2004, PISCATAWAY, NJ, USA,IEEE, 15. Februar 2004 (2004-02-15), Seiten 328-337, XP010722286 ISBN: 978-0-7803-8267-1
- YU-WEI CHANG ET AL: "124Ms/s pixel-pipelined motion-JPEG 2000 codec without tile memory" SOLID-STATE CIRCUITS, 2006 IEEE INTERNATIONAL CONFERENCE DIGEST OF TEC HNICAL PAPERS FEB. 6-9, 2006, PISCATAWAY, NJ, USA,IEEE, 6. Februar 2006 (2006-02-06), Seiten 1586-1595, XP010940557 ISBN: 978-1-4244-0079-9
- GANGADHAR M ET AL: "FPGA based EBCOT architecture for JPEG 2000" FIELD-PROGRAMMABLE TECHNOLOGY (FPT), 2003. PROCEEDINGS. 2003 IEEE INTE RNATIONAL CONFERENCE ON 15-17 DEC. 2003, PISCATAWAY, NJ, USA,IEEE, 15. Dezember 2003 (2003-12-15), Seiten 228-233, XP010688340 ISBN: 978-0-7803-8320-3
- GANGADHAR ET AL: "FPGA based EBCOT architecture for JPEG 2000" MICROPROCESSORS AND MICROSYSTEMS, IPC BUSINESS PRESS LTD. LONDON, GB, Bd. 29, Nr. 8-9, 1. November 2005 (2005-11-01), Seiten 363-373, XP005048129 ISSN: 0141-9331
- CHUNG-JR LIAN ET AL: "Analysis and Architecture Design of Block-Coding Engine for EBCOT in JPEG 2000" IEEE TRANSACTIONS ON CIRCUITS AND SYSTEMS FOR VIDEO TECHNOLOGY, IEEE SERVICE CENTER, PISCATAWAY, NJ, US, Bd. 13, Nr. 3, 1. März 2003 (2003-03-01), Seiten 219-230, XP011071936 ISSN: 1051-8215
- CHARILAOS CHRISTOPOULOS ET AL: "The JPEG2000 still image coding system: An Overview" JOINT PHOTOGRAPHIC EXPERT GROUP CONFERENCE, CROWBOROUGH : JPEG FORUM LTD, GB, 29. Januar 2001 (2001-01-29), XP017205128
- YU-WEI CHANG ET AL: "Word-Level Parallel Architecture of JPEG 2000 Embedded Block Coding Decoder" IEEE TRANSACTIONS ON MULTIMEDIA, IEEE SERVICE CENTER, PISCATAWAY, NJ, US, Bd. 9, Nr. 6, 1. Oktober 2007 (2007-10-01), Seiten 1103-1112, XP011192011 ISSN: 1520-9210

## Beschreibung

Die vorliegende Erfindung bezieht sich auf die Kodierung von Transformationskoeffizientenblöcken, wie z.B. eines Bildes, wie sie beispielsweise im Verlauf der digitalen Bildkompressionsmethode nach dem JPEG2000-Standard vorkommt.

Die Schritte des JPEG2000-Kodierprozesses umfassen ein optionales Aufteilen des Bildes in sogenannte Kacheln bzw. Tiles, d.h. rechteckige Bildbereiche, eine Gleichsignalanteilpegelverschiebung, eine optionale Transformation der Farbkomponenten, die Durchführung einer diskreten WaveletTransformation, eine skalare Quantisierung der Wavelet-Koeffizienten, eine Anordnung der quantisierten Wavelet-Koeffizienten in zweidimensionalen Feldern, sogenannten "Codeblöcken", eine Block-Kodierung umfassend einen sogenannten "Koeffizientenbitmodellierprozess" und einen arithmetischen Kodiervorgang sowie ein Anordnen der kodierten Codeblock-Daten zu einem standardkonformen Kodierstrom. Beschrieben sind die Schritte beispielsweise in Christopoulos et al.: The JPEG2000 Still Image Coding System: An Overview, IEEE Transactions on Consumer Electronics, Bd. 46, Nr. 4, S. 1103-1127, November 2000.

Der rechenintensivste Teil unter diesen Schritten ist das Koeffizientenbitmodellieren. Bei diesem Schritt wird ein Codeblock in sogenannte Magnitude- bzw. Betragsbitebenen zerlegt, die in der Reihenfolge von den MSBs bzw. den signifikantesten Bits zu den LSBs bzw. den wenigst signifikanten Bits angeordnet bzw. erzeugt werden, sowie zugehörige Vorzeichenbits, die gesondert gehandhabt bzw. betrachtet werden. Jede Betragsbitebene wird in einer Folge von drei Coding-Pässen bzw. Kodierdurchläufen moduliert, mit Ausnahme der ersten Bitebene, die nur mit einem Kodierdurchlauf moduliert wird. Diese Kodierdurchläufe durchlaufen die Bits einer Betragsbitebene in einer bestimmten Reihenfolge. Angefangen wird am Bit der Position oben links, dann drei darunter liegende Bits, bevor um eine Spalte nach rechts gesprungen wird. So entsteht ein sogenannter Stripe bzw. Streifen der Breite des Codeblocks und der Höhe von vier Koeffizienten. Nachdem ein Codeblock so in horizontaler Richtung prozessiert wurde, wird der nächste Stripe vier Koeffizientenpositionen tiefer verarbeitet usw.

ISO/IEC15444-1 beschreibt näher, ob und welches Kodierschema während eines Kodierdurchlaufes zur Anwendung kommt. Insbesondere wird diese Entscheidung koeffizientenweise getroffen. In anderen Worten ausgedrückt werden beim ersten Kodierdurchlauf nur bestimmte Koeffizienten moduliert. Unter den restlichen Koeffizienten kodiert der zweite Kodierdurchlauf ebenfalls einen Teil. Der Rest wird von dem dritten Kodierdurchlauf modelliert. Welcher Koeffizient zu welchem Kodierdurchlauf gehört, hängt u.a. davon ab, ob der jeweilige Koeffizient signifikant ist bzw. von der Signifikanz seiner direkten Nachbarn. ISO/IEC15444-1, im Folgenden kurz der Standard genannt, definiert hierzu eine binäre Statusvariable für jeden Koeffizienten in einem Codeblock, den sogenannten "Signifikanzstatus". Anfänglich auf "insignifikant" initialisiert, wechselt sie auf "signifikant" an der Betragsbitebene, an der erstmalig ein gesetztes Bit des Koeffizienten zu modellieren ist und bleibt so bis zum Ende der Modellierung dieses Codeblocks gesetzt.

Für ein Bit eines Koeffizienten, das während eines Kodierdurchlaufes in einer bestimmten Bitebene durch ein Kodierschema modelliert wird, wird ein Datenbit zusammen mit jeweils einem Kontext-Index erzeugt. Dieser Kontext-Index ergibt sich in erster Linie aus den SignifikanzstatusVariablen des Koeffizienten und seiner Nachbarn. Bei bestimmten Kodierdurchläufen, nämlich dem ersten und dem dritten, ergibt sich, dass auch das Vorzeichenbit des aktuellen Koeffizienten zusammen mit einem Kontext-Index zu modellieren ist, der wiederum von den Signifikanzstatusvariablen und der Vorzeichen seiner Nachbarn abhängt. Ein sogenanntes "Betragsverfeinerungs"- bzw. MR-Kodierschema bzw. der zweite Kodierdurchlauf wertet zusätzlich aus, ob dieses Schema bereits bei vorhergehenden Bitebenen auf den zu modellierenden Koeffizienten angewendet wurde, oder zum ersten Mal. Der nachgeschaltete arithmetische Kodierer erwartet die Bit-Kontext-Paare in der auf die oben beschriebene Weise festgelegten Reihenfolge.

Folgt man der Reihenfolge, in der die Bit-Kontext-Paare von dem arithmetischen Kodierer gemäß dem Standard zu Enkodieren sind, ergibt sich daraus eine sequentielle Folge in Bezug auf die Kodierdurchläufe, wie sie im Vorhergehenden beschrieben wurde, und wie sie insbesondere auch durch Software-Implementierungen eingehalten wird. Durch Implementierungen in Hardware lässt sich eine höhere Kodiergeschwindigkeit erreichen. Beispielsweise können mehrere Codeblöcke unabhängig voneinander gleichzeitig kodiert werden, indem mehrere Blockkodierer parallel instantiiert werden. Dies stellt allerdings einen enormen Ressourcenverbrauch dar, wie z.B. im Hinblick auf die benötigten Transistoren auf einer integrierten Schaltung oder im Hinblick auf die Gatteräquivalente bei einem FPGA (Field Programmable Gate Array).

In Lian et al.: Analysis and Architecture Design of Block-Coding Engine for EBCOT in JPEG 2000, IEEE Transactions on Circuits and Systems for Video Technology, Bd. 13, Nr. 3, März 2003, S. 219-230, wird beispielsweise ein Hardwaredesign des Block-Coders in JPEG2000 beschrieben, bei der Einsparungen an erforderlichen Überprüfungen pro Koeffizient in jedem Durchlauf, ob der jeweilige Koeffizient zu dem jeweiligen Durchlauf gehört, erzielt werden, indem die Zugehörigkeitsüberprüfungen parallelisiert werden und je nach Zugehörigkeit keines oder eines oder mehr Bits zu dem jeweiligen Durchlauf 4-er-Spalten oder Gruppen von 4-er-Spalten pro Durchlauf übersprungen werden. Einen Schritt weiter geht eine in Gangadhar und Bhatia: FPGA based EBCOT Architecture for JPEG2000, Field-Programmable Technology (FPT), 2003, Proceedings 2003, IEE International Conference, S. 228 bis 233, vorgeschlagene Hardwarelösung für den JPEG2000-Blockkodierer, wonach die Durchläufe parallelisiert werden, so dass weniger Taktzyklen zur Kodierung der Codeblöcke notwendig sind. Neben einem Speicher zur Speicherung der Betragsbits und Vorzeichenbits ist dabei ein Puffer zur Zwischenspeicherung aktualisierter Signifikanzstatusvariablen zwischen einer Verarbeitungseinheit vorgesehenen, die sich um den ersten Kodierdurchlauf kümmert, und einer zweiten Verarbeitungseinheit, die für die Kodierdurchläufe 2 und 3 zuständig ist.

Es bleibt aber weiterhin wünschenswert, eine in Hardware effektiv implementierbare Lösung für die Kodierung von Transformationskoeffizientenblöcken zu finden, wie sie eben beispielsweise bei der JPEG2000-Kodierung vorkommt. In Chang et al.: "Parallel Embedded Block Coding Architecture for JPEG 2000 ", IEEE Transactions On Circuits And Systems For Video Technology, Bd. 15, Nr. 9, 1. September 2005, S. 1086-1097, wird eine Blockkodierungsarchitektur für JPEG 2000 vorgestellt, wonach alle Bitebenen parallel verarbeitet werden. Jede der Bitebenen wird sequenziell von mehreren Blöcken verarbeitet, nämlich einem Pass-Klassifizierungs- bzw. PC-Modul, gefolgt von einem Kontextbildungs- bzw. CF-Modul, das über einen FIFO mit einer arithmetischen Einheit AE verbunden ist. Die Verarbeitung innerhalb der PC- und CF-Module erfolgt bitweise.

Die Aufgabe der vorliegenden Erfindung besteht darin, ein Verfahren und eine Vorrichtung zum Kodieren eines Blockes von Transformationskoeffizienten, wie z.B. diejenigen eines Bildes, zu schaffen, die eine effektivere Implementierung in Hardware ermöglichen.

Diese Aufgabe wird durch eine Vorrichtung gemäß Anspruch 1 und ein Verfahren gemäß Anspruch 14 gelöst.

Gemäß einem ersten Aspekt umfasst eine Vorrichtung zum Kodieren eines Blockes von Transformationskoeffizienten, wobei die Transformationskoeffizienten jeweils mittels mehrerer Betragsbits dargestellt sind, so dass dieselben eine Folge von Betragsbitebenen definieren, einen Vorkodierer zum Durchlaufen der Betragsbits einer vorbestimmten der Betragsbitebenen in Tupeln von jeweils einer Mehrzahl von benachbarten Betragsbits und Kodieren vorbestimmter der Betragsbits der Tupel in Datenwörter derart, dass ein vorbestimmtes Betragsbit zusammen mit einem zugeordneten Vorzeichenbit in eines der Datenwörter kodiert wird, oder dass ein vorbestimmtes Betragsbit zusammen mit einem anderen vorbestimmten Betragsbit des gleichen Tupels in eines der Datenwörter kodiert wird, einen Datenwortzwischenspeicher zum Zwischenspeichern der Datenwörter und einen Entropiekodierer zum Kodieren der Datenwörter (aus dem Datenwortzwischenspeicher in einen kodierten Datenstrom.

Ein Kerngedanke des ersten Aspektes besteht darin, dass durch die Verwendung eines Vorkodierers, der beim Durchlaufen der Betragsbits einer vorbestimmten Betragsbitebene in Tupeln von jeweils einer Mehrzahl von benachbarten Betragsbits vorbestimmte der Betragsbits der Tupel jeweils aber zusammen mit einem Vorzeichenbit oder zu mehreren zusammen in ein Datenwort kodiert, und eines Zwischenspeichers für die Datenwörter, der zwischen den Vorkodierer auf der einen Seite und einen Entropiekodierer auf der anderen Seite geschaltet ist, eine schnellere Abarbeitung bzw. Kodierung erzielt werden kann. Die Unabhängigkeit des Kodiererbetriebs von dem Entropiekodiererbetrieb ermöglicht zudem, dass der Entropiekodierer beispielsweise Datenwörter anderer Vorkodierer, die für andere vorbestimmte Betragsbits zuständig sind, kodieren kann, während der Vorkodierer bereits eine nächste Betragsbitebene durchläuft.

Gemäß einem Ausführungsbeispiel kodiert der Vorkodierer zusammen mit einem vorbestimmten Betragsbit auch ein zugehöriges Vorzeichenbit in ein Datenwort, so dass das Datenwort beispielsweise ein Teildatenwort für das Betragsbit und ein Teildatenwort das zugehörige Vorzeichenbit aufweist. Die beiden Vorgänge können somit parallel zueinander in einem Taktzyklus vorkodiert werden. Der Entropiekodierer kann aus dem Datenwort in dem Zwischenspeicher das Betragsbit rekonstruieren und entropiekodieren und danach die Entropiekodierung des Vorzeichenbits abhängig von der Signifikanz des soeben enkodierten Betragsbits vornehmen oder nicht.

Gemäß einem weiteren Ausführungsbeispiel nimmt der Vorkodierer beim Durchlaufen der vorbestimmten Betragsbits die Vorkodierung so vor, dass in ein Datenwort wenigstens zwei vorbestimmte Betragsbits innerhalb eines Tupels kodiert werden. Dazu weist der Vorkodierer beispielsweise für jedes Betragsbit in einem Tupel eine Vorkodierereinheit zum Kodieren des betreffenden Betragsbits in ein Teildatenwort auf, die zusammen in einem Datenwort für das Tupel umfasst sind, so dass wiederum alle Verarbeitungen parallel durchgeführt werden. Zudem kann es vorgesehen sein, dass die Teildatenwörter, aus denen das entsprechende Betragsbit und der zugehörige Kontext für die Entropiekodierung entnehmbar sind, einen reservierten Zustand aufweisen, der anzeigt, dass das betreffende Betragsbit des entsprechenden Tupels nicht zu dem vorbestimmten Betragsbit gehört, so dass der Entropiekodierer in den Datenstrom zu kodierende Betragsbits von solchen, die nicht in den Datenstrom zu kodieren sind, unterscheiden kann.

Gemäß einem zweiten Aspekt umfasst eine Vorrichtung zum Kodieren eines Blockes von Transformationskoeffizienten, wobei die Transformationskoeffizienten jeweils mittels mehrerer Betragsbits dargestellt sind, so dass dieselben eine Folge von Betragsbitebenen definieren, eine Kodiereinrichtung zum Durchlaufen der Betragsbits einer vorbestimmten der Betragsbitebenen und Kodieren vorbestimmter der Betragsbits der Tupel in einen kodierten Datentstrom, wobei die Kodiereinrichtung einen Zwischenspeicher 106; einen Bitextraktor 104 zum, beim Durchlaufen der Betragsbits, Ermitteln erster Statusbits, die für die Transformationskoeffizienten, die durch Betragsbits der vorbestimmten Betragsbitebene dargestellt sind, die gemäß einer Reihenfolge des Durchlaufens frühestens als nächstes an der Reihe sind, eine Signifikanz bezogen auf die vorbestimmte Betragsbitebene anzeigen, aus Betragsbits, die die gleichen Transformationskoeffizienten darstellen wie die frühestens als nächstes an der Reihe seienden Betragsbits, aber in signifikanteren Bitebenen liegen als dieselben und Befüllen des Zwischenspeichers mit den ermittelten ersten Statusbits; und einen Kodierer zum Kodieren der vorbestimmten Betragsbits in den kodierten Datenstrom unter Verwendung der ersten Statusbits in dem Zwischenspeicher aufweist.

Eine Erkenntnis des zweiten Aspektes besteht darin, dass eine effektivere bzw. effizientere Implementierung des Transformationskoeffizientenblockkodierers ermöglicht wird, wenn ein Kodierer die Kodierung der vorbestimmten Betragsbits in den kodierten Datenstrom unter Verwendung von Statusbits in einem Zwischenspeicher vornimmt, der durch einen Bitextraktor auf der Basis von Informationen gefüllt wird, die Betragsbits umfassen, die die gleichen Transformationskoeffizienten darstellen wie frühestens als nächstes an der Reihe seiende Betragsbits, aber in signifikanteren Bitebenen liegen als dieselben.

Auf diese Weise ist es möglich, die Signifikanzinformationen, die von der Kodiereinrichtung gegebenenfalls benötigt werden, um zu entscheiden, ob und, falls ja, welcher oder welche der Betragsbits der vorbestimmten Betragsbitebene zu den vorbestimmten Betragsbits gehören, während des Durchlaufens der Betragsbits nur vorübergehend bzw. lokal in der Nähe des aktuell an der Reihe seienden Betragsbits zu speichern, wodurch ein größerer Speicher zur Speicherung der Signifikanzinformationen entfällt. Dadurch kann wiederum der Speicherbedarf klein gehalten werden, so dass umgekehrt wiederum eine aufwendigere aber umgekehrt schnellere Speichertechnologie zur Speicherung dieser Statusbits verwendet werden kann. Trotz einer nur vorübergehenden Speicherung der Statusinformationen in dem Zwischenspeicher kann eine Aktualisierung des Inhalts vorgenommen werden, mit dem der Zwischenspeicher gefüllt wird, um diesen aktualisierten Inhalt während der Kodierung zu verwenden. Der zusätzliche Aufwand für die Logik zur ständigen Extraktion der Statusinformationen anstelle der Speicherung und Wiederherstellung über alle Bitebenen hinweg ist verhältnismäßig gering gegenüber der Einsparung an Speicheraufwand. Zudem bedeutet die Extraktion keine zeitliche Einbuße, da die Extraktion zeitlich parallel zu der eigentlichen Kodierung durchgeführt werden kann.

Gemäß einem dritten Aspekt umfasst eine erfindungsgemäße Vorrichtung zum Kodieren eines Blockes von Transformationskoeffizienten, wobei die Transformationskoeffizienten jeweils mittels mehrerer Betragsbits dargestellt sind, so dass dieselben eine Folge von Betragsbitebenen definieren, eine Kodiereinrichtung zum Durchlaufen der Betragsbits einer vorbestimmten der Betragsbitebenen in Tupeln von jeweils einer Mehrzahl von benachbarten Betragsbits und Kodieren vorbestimmter der Betragsbits der Tupel in einen kodierten Datenstrom und eine Vorhersageeinrichtung zum Vorhersagen, ob und, wenn ja, welcher oder welche der Betragsbits unter den benachbarten Betragsbits der vorbestimmten Betragsbitebene eines gemäß einer Reihenfolge des Durchlaufens frühestens als nächstes an der Reihe seienden Tupels zu den vorbestimmten Betragsbits gehört, wobei die Kodiereinrichtung ausgebildet ist, um die Kodierung abhängig von der Vorhersage vorzunehmen.

Ein Kerngedanke des dritten Aspektes besteht darin, dass eine effektivere bzw. effizientere Implementierung in beispielsweise Hardware einer Transformationskoeffizientenblockkodierung erreicht werden kann, wenn eine Vorhersageeinrichtung vorgesehen wird, die vorhersagt, ob und, wenn ja, welcher oder welche der Betragsbits unter den benachbarten Betragsbits der vorbestimmten Betragsbitebene eines gemäß einer Reihenfolge des Durchlaufens frühestens als nächstes an der Reihe seienden Tupels zu dem vorbestimmten Betragsbit gehört.

Gemäß einem Ausführungsbeispiel basiert die Vorhersage auf Betragsbits der aktuellen Betragsbitebene in Tupeln, die gemäß der Reihenfolge des Durchlaufens dem zuletzt an der Reihe gewesenen Tupel folgen. Beispielsweise können diese Betragsbits dazu verwendet werden, Signifikanzinformationen zu modifizieren bzw. zu aktualisieren, die für die Betragsbits der auf das zuletzt an der Reihe gewesenen Tupel folgenden Tupel die Signifikanz der durch dieselben dargestellten Transformationskoeffizienten bezüglich der aktuellen Betragsbitebene anzeigen. Hierdurch ist es möglich, eine virtuell geforderte sequentielle Durchführung von Durchläufen der Betragsbits der aktuellen Betragsbitebene in Tupeln für unterschiedliche der Betragsbits der aktuellen Betragsbitebene in einem Durchlauf abzuarbeiten und dabei aber zu berücksichtigen, dass gemäß der virtuellen Reihenfolge später an der Reihe seiende Durchläufe andere Signifikanzen sähen, wäre die virtuelle Reihenfolge eingehalten worden. Eine Vorhersage, die von diesen Signifikanzinformationen abhängt, wird somit auch ermöglicht, wenn die Abarbeitung der virtuellen Folge von Durchläufen auf einmal abgearbeitet wird.

Das gilt aber nicht nur für den Fall des parallelen Abarbeitens virtuell sequentiell durchzuführender Durchläufe. Ist auch unter den Betragsbits der Tupel eine virtuelle Durchlaufreihenfolge festgelegt, in der der Durchlauf virtuell stattfinden sollen, und/oder hängt die Zugehörigkeit eines speziellen Betragsbits auch von der Signifikanz seiner Nachbarn ab, so ermöglicht es die Verwendung der Betragsbits der aktuellen Betragsbitebene in Tupeln, die gemäß der Reihenfolge des Durchlaufens dem zuletzt an der Reihe gewesenen Tupel folgen, zu berücksichtigen, dass für gemäß der virtuellen Intertupelreihenfolge und/oder Innertupelreihenfolge später an der Reihe seiende Betragsbits eine andere Zugehörigkeit gelten würde, wäre die jeweilige virtuelle Inter- und/oder Innertupelreihenfolge eingehalten worden.

Allgemein ermöglicht die Vorhersage, dass die Kodiereinrichtung unmittelbar mit der Verarbeitung der vorbestimmten Betragsbits bzw. dem vorbestimmten Betragsbit in dem aktuellen Tupel beginnen kann bzw. die Kodiereinrichtung nur Verarbeitungszyklen für die Verarbeitung von Betragsbits in den Tupeln benötigt, die auch zu den vorbestimmten Betragsbits gehören. So kann die Kodiereinrichtung ausgebildet sein, die Kodierung der vorbestimmten Betragsbits in den jeweiligen Tupeln sequentiell vorzunehmen, und benötigt hierfür lediglich die geringstmögliche Anzahl an Verarbeitungszyklen. Es ist allerdings ebenfalls möglich, dass die Kodiereinrichtung zur parallelen Verarbeitung aller Betragsbits in einem Tupel geeignet ist, durch die Vorhersage allerdings in der Lage ist, in ein und demselben Verarbeitungszyklus nicht nur die Betragsbitwerte an sich zu berücksichtigen, sondern auch ob das jeweilige Betragsbit zu dem vorbestimmten Betragsbit gehört oder nicht, um in dem letztgenannten Fall noch in demselben Verarbeitungszyklus das entsprechende Betragsbit in ein Paar aus Datenwert und zugeordnetem Kodierkontext umzuwandeln, das einen Zustand aufweist, der für nicht zu den vorbestimmten Betragsbits gehörende Betragsbits nicht vorkommt, wie z.B. durch Einstellen eines nicht zulässigen Kodierkontextes.

Folglich wird durch die Vorhersageeinrichtung eine schnellere Implementierung einer Kodierung ermöglicht, die weniger Verarbeitungszyklen benötigt.

Weitere Ausführungsbeispiele der vorliegenden Erfindung werden nachfolgend Bezug nehmend auf die Figuren näher erläutert. Es zeigen:
- Fig. 1: ein Blockschaltbild eines Bildkomprimierers, bei dem die erfindungsgemäße Transformationskoeffizientenblockkodierung angewendet werden kann;
- Fig. 2: eine schematische Darstellung einer Aufteilung der Transformationskoeffizienten in Betragsbits und Vorzeichenbits;
- Fig. 3: ein Blockschaltbild eines Blockkodierers gemäß einem Ausführungsbeispiel der vorliegenden Erfindung;
- Fig. 4: ein Blockschaltbild der Bitmodelliereinheit des Kodierdurchlaufes 1 (Pass 1) aus Fig. 3 gemäß einem Ausführungsbeispiel der vorliegenden Erfindung;
- Fig. 5: ein Blockschaltbild der Bitmodelliereinheit für den Kodierdurchlauf 2 (Pass 2) aus Fig. 3 gemäß einem Ausführungsbeispiel der vorliegenden Erfindung;
- Fig. 6: ein Blockschaltbild der Bitmodelliereinheit für den Kodierdurchlauf 3 (Pass 3) aus Fig. 3 gemäß einem Ausführungsbeispiel der vorliegenden Erfindung;
- Fig. 7: ein Blockschaltbild des Durchlauf- bzw. Pass-Entscheiders von Fig. 3 gemäß einem Ausführungsbeispiel der vorliegenden Erfindung;
- Fig. 8: eine schematische Darstellung zur Veranschaulichung der Größe der Schieberegistereinheit von Fig. 3 und des in derselben zu einem jeweiligen Zeitpunkt gespeicherten Inhalts;
- Fig. 9: ein Blockschaltbild eines Blockkodierers gemäß einem weiteren Ausführungsbeispiel der vorliegenden Erfindung;
- Fig. 10: ein Blockschaltbild eines Blockkodierers gemäß einem weiteren Ausführungsbeispiel der vorliegenden Erfindung; und
- Fig. 11: ein Blockschaltbild eines Blockkodierers gemäß einem weiteren Ausführungsbeispiel der vorliegenden Erfindung.

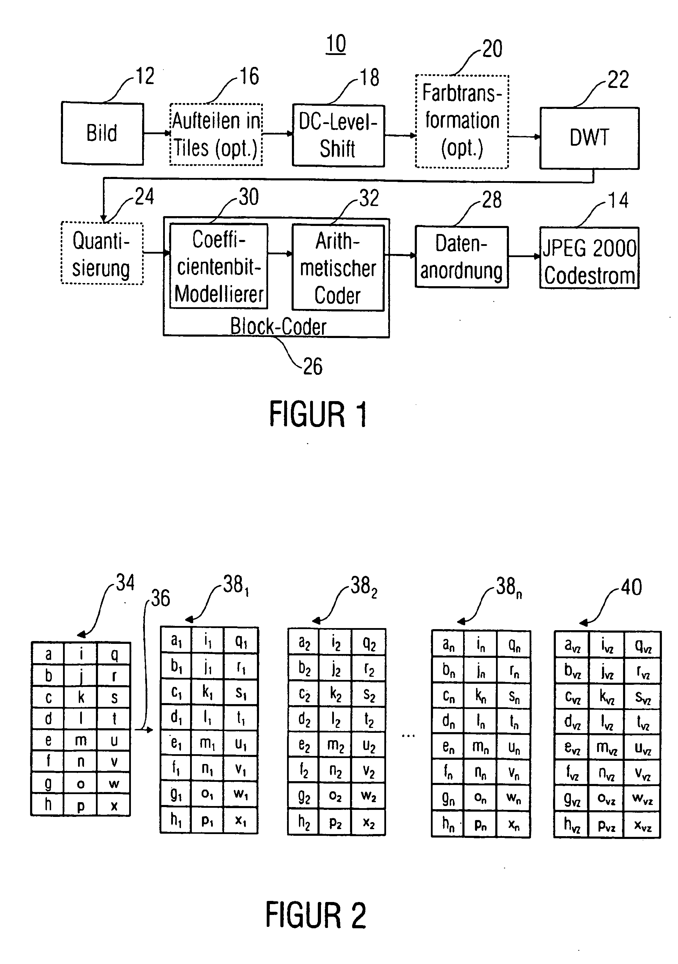

Fig. 1 zeigt einen Bildkomprimierer 10 als Beispiel für einen Anwendungsfall, bei dem die nachfolgend beschriebenen Ausführungsbeispiele vorteilhaft verwendet werden können. Der Bildkomprimierer 10 von Fig. 1 ist dazu ausgelegt, ein Quellbild 12 bestehend aus beispielsweise in Spalten und Zeilen angeordneten Abtastwerten bzw. Pixelwerten in einen kodierten Datenstrom bzw. Codestrom 14 zu komprimieren. Dazu umfasst der Komprimierer 10 von Fig. 1 beispielsweise eine Hintereinanderschaltung von optional einem Kachelaufteiler 16, einem Gleichanteilpegelverschieber 18, optional einem Farbtransformator 20, einem Transformator 22 zur räumlichen spektralen Zerlegung, einem optionalen Quantisierer 24, einem Blockkodierer bzw. Block-Coder 26 und einem Datenanordner 28. Der Kachelaufteiler teilt das Bild 12 in beispielsweise rechteckige Bildbereiche auf, sogenannte Tiles bzw. Kacheln. Die weitere Verarbeitung wird pro Tile bzw. Kachel durchgeführt, so dass die weitere Komprimierung in den einzelnen Kacheln unabhängig voneinander stattfindet. Der Gleichsignalpegelverschieber 18 führt innerhalb jeder Kachel eine über alle Pixel der entsprechenden Kachel gleichmäßige Gleichsignalverschiebung durch, so dass beispielsweise nachher der Mittelwert der Pixelwerte, wie z.B. der Luminanzwerte, Null ergibt. Der Farbtransformator 20 führt optional noch eine Farbtransformation an den Pixelwerten durch, wobei die Farbtransformation optional ist und natürlich nur in dem Fall von Farbbildern 12 stattfindet. Daraufhin führt der Transformator 22 eine räumliche spektrale Zerlegung pro Kachel durch. In dem Fall eines zu erzeugenden JPEG2000-Codestromes 14 ist die Transformation beispielsweise einer Wavelettransformation, genauer eine diskrete Wavelettransformation, die auf jede Kachel einzeln angewendet wird. Auf diese Weise wird jede Kachel in unterschiedliche Auflösungspegel bzw. Zerlegungspegel zerlegt, die aus Subbändern von Transformationskoeffizienten bestehen, die Frequenzcharakteristika von lokalen Bereichen jeder Kachel beschreiben. Die Transformationskoeffizienten können bereits ganzzahlig sein. Der Quantisierer 24 unterzieht die Transformationskoeffizienten optional einer skalaren Quantisierung und fasst dieselben zu Codeblöcken zusammen, d.h. zu beispielsweise rechteckigen Arrays von Transformationskoeffizienten. Der Blockkodierer 26 entropiekodiert bitebenenweise die Transformationskoeffizienten in den Codeblöcken in Datenströme, woraufhin der Datenanordner 28 die arithmetisch kodierten Codeblock-Datenströme noch geeignet anordnet, um den Codestrom 14 zu bilden, wie z.B. einen JPEG2000-konformen Codestrom.

Der Blockkodierer 26 weist insbesondere, wie es in Fig. 1 gezeigt ist, einen Koeffizientenbitmodellierer 30 mit einem nachgeschalteten arithmetischen Kodierer 31 auf. Der Koeffizientenbitmodellierer 30 ordnet den Betragsbits der Koeffizienten Kontexte zu, die von dem arithmetischen Kodierer 32 zur arithmetischen Kodierung verwendet werden. Insbesondere ist der arithmetische Kodierer 32 ein kontextabhängig arbeitender binärer arithmetischer Kodierer, der ausgebildet ist, um ein aktuelles Intervall, das den augenblicklichen Zustand des arithmetischen Kodierers darstellt, abhängig von Schätzwahrscheinlichkeiten für das Auftreten eines jeweiligen Bitwertes für das nächste zu enkodierende Bit in zwei Hälften zu unterteilen, und unter diesen Hälften eine auszuwählen, um das aktuelle Intervall auf dieses Intervall zu beschränken, je nachdem wie der tatsächliche Bitwert des aktuellen zu kodierenden Bits ist, wobei die Schätzwahrscheinlichkeiten für jeden Kontext unterschiedlich sind, und der Kontext durch den Koeffizientenbitmodellierer 30 abhängig von benachbarten Signifikanzen und/oder Betragsbitwerten und einer Mehrzahl von möglichen Kontexten ermittelt wird. Der Kodierer kann dabei zudem adaptiv arbeiten, um die vorinitialisierten Schätzwahrscheinlichkeiten während der Kodierung an die tatsächlichen Wahrscheinlichkeiten pro Kontext anzupassen.

Die nachfolgende Erläuterung von Ausführungsbeispielen der vorliegenden Erfindung konzentriert sich zunächst auf eine JPEG2000-konforme Kompression, weshalb im Folgenden vor diesem Hintergrund die Aufgabe des Blockkodierers 26 näher veranschaulicht werden soll. Insbesondere sind von dem Blockkodierer 26 die einzelnen Betragsbits der Transformationskoeffizienten in einem Block in einer vorbestimmten bzw. festgelegten Reihenfolge in den arithmetisch kodierten Datenstrom des arithmetischen Kodierers 32 zu kodieren, nämlich insbesondere zunächst bitebenenweise von der signifikantesten Bitebene zur wenigst signifikanten Bitebene und innerhalb dieser Bitebenen durch Scannen der Koeffizientenbetragsbits in drei Durchläufen in einer festgelegten Scanreihenfolge, wobei in jedem Durchlauf nur Betragsbit kodiert werden, die bestimmte Kriterien erfüllen, derart, dass mit den drei Durchläufen aus dem arithmetisch kodierten Datenstrom alle Betragsbits rekonstruierbar sind. Um die Aufteilung in Bitebenen und die Scanreihenfolge innerhalb dieser Ebenen zu veranschaulichen, zeigt Fig. 2 exemplarisch einen Codeblock der Größe 3x8.

Insbesondere zeigt Fig. 2 bei 34 exemplarisch einen 3x8-Codeblock mit 3x8 Transformationskoeffizienten a bis x. Wie es durch den Pfeil 36 angedeutet ist, wird jeder Koeffizient a bis x durch n Betragsbits a₁...n, ..., x₁...xₙ sowie ein jeweiliges Vorzeichenbit a_{vz}, ..., x_{vz} dargestellt, wobei die Aufspaltung 36 in Betragsbits und Vorzeichenbits beispielsweise inhärent aus der Art der diskreten Wavelettransformation 22 hervorgeht oder aus der Quantisierung 24 (Fig. 1). Die MSBs bzw. signifikantesten Betragsbits sind beispielsweise die Bits a₁ ... x₁ und bilden eine erste Betragsbitebene 38₁. Ebenso lassen sich die anderen Betragsbits zu entsprechenden Bitebenen 38₂ ... 38ₙ zusammenfassen. Jede Bitebene 38₁ ... 38ₙ sowie die Vorzeichenbits 40 bilden also jeweils ein 3x8 Bitarray.

Die vorerwähnte Scanreihenfolge sieht nun vor, dass die Bits einer Bitebene 38₁...38ₙ in Viererspalten bzw. Tupeln von je vier in Spaltenrichtung benachbarten Betragsbits von einem Zeilenende aus bis zu dem anderen, d.h. streifenweise, gescannt werden, woraufhin der nächste Streifen in den nächsten Zeilen gescannt wird, und innerhalb jedes Viererspaltenvektors bzw. jedes Tupels die Betragsbits von oben nach unten gescannt werden. Für die Bitebenen 38₁...38ₙ lässt sich das Scanmuster folglich darstellen als aᵢ, bᵢ, cᵢ, dᵢ, iᵢ, jᵢ, kᵢ, lᵢ, qᵢ, rᵢ, sᵢ, tᵢ, eᵢ, fᵢ, gᵢ, hᵢ, mᵢ, nᵢ, oᵢ, pᵢ, uᵢ, vᵢ, wᵢ, xᵢ, mit i = 1 ... n,
wobei dieses Scanmuster hier exemplarisch sechs Viererspalten bzw. Tupel und zwei Streifen umfasst.

Ein dreifaches Scannen der Betragsbits der einzelnen Bitebenen wird nun gemäß dem nachfolgend beschriebenen Ausführungsbeispiel für einen Block-Coder 26 dadurch vermieden, dass die den jeweiligen Durchläufen zugeordneten Betragsbits mittels eines Scans erkannt und in Datenworte kodiert werden, aus denen sich die Bitwerte und die zugeordneten Kontexte ergeben, woraufhin dieselben nach Zwischenspeicherung in einem Zwischenspeicher in geeigneter Reiheinfolge in einen arithmetisch kodierten Datenstrom enkodiert werden. Dabei wird auch ein ständiges Nachschlagen in einem Speicher vermieden, indem die Betragsbits und Vorzeichenbits zwischengespeichert sind.

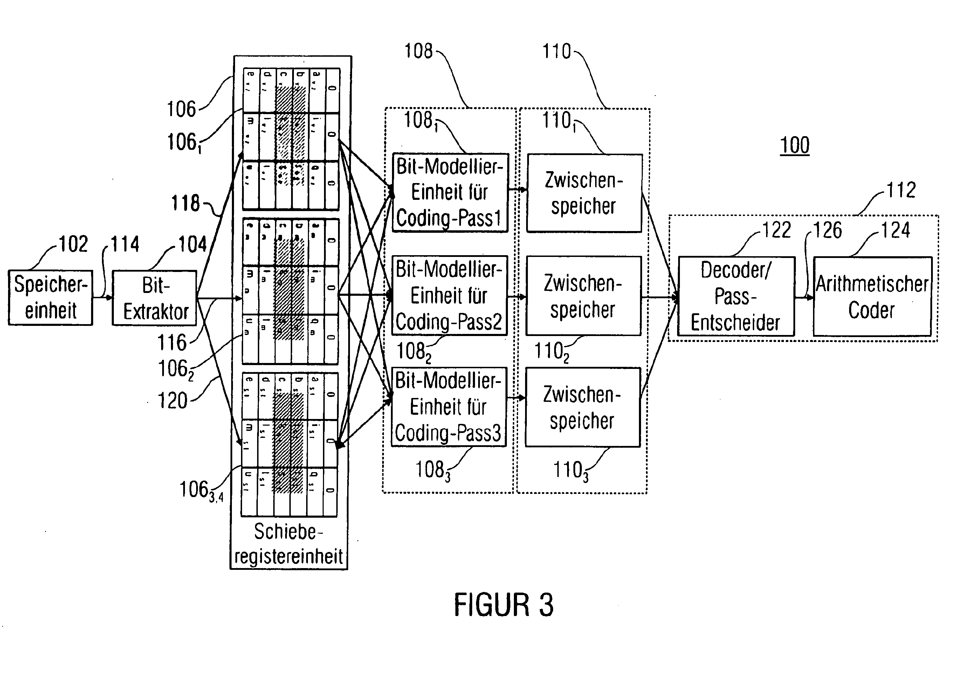

Fig. 3 zeigt einen Blockkodierer 100 gemäß einem Ausführungsbeispiel der vorliegenden Erfindung. Er umfasst eine Speichereinheit 102, einen Bitextraktor 104, eine Schieberegistereinheit 106, eine Koeffizientenbitmodelliererstufe 108, einen Zwischenspeicher 110 und eine arithmetische Kodiereinrichtung 112. Die Speichereinheit 102 ist beispielsweise ein Direktzugriffsspeicher, wie z.B. ein RAM, und fungiert als Schnittstelle zum Erhalt der quantisierten vorzeichenbehafteten Transformationskoeffizienten der zu kodierenden Codeblöcke, wie z.B. des Codeblocks 34 von Fig. 2. Der Bitextraktor 104 ist mit dem Speicher 102 gekoppelt, um auf den Speicherinhalt der Speichereinheit 102 Zugriffe 114 durchführen zu können, um von der Speichereinheit 102 Betragsbits und Vorzeichenbits zu lesen. Wann und auf welche Betragsbits und/oder Vorzeichenbits der Bitextraktor 104 zugreift, wird im Folgenden näher beschrieben. Jedenfalls ist der Bitextraktor 104 zuständig dafür, die Schieberegistereinheit 106 basierend auf den ausgelesenen Informationen von der Speichereinheit 102 mit Bits zu befüllen, die von der Koeffizientenbitmodellierstufe 108 benötigt werden, um die notwendigen Kontexterstellungen bzw. die notwendige Vorkodierung vorzunehmen. Etwas konkreter ausgedrückt, scannt der Bitextraktor 104 auf eine im Folgenden noch etwas detaillierter dargestellte Art und Weise Betragsbitebene für Betragsbitebene die Betragsbits der aktuellen Betragsbitebene entlang der vorgeschriebenen Streifen und befüllt die Schieberegistereinheit 106 während des Scannens fortwährend mit Informationen, so dass die Schieberegistereinheit 106 aufgrund ihrer Schieberegisterlänge, Informationsbits bezüglich eines aktuellen Ausschnitts der aktuellen Betragsbitebene entlang der Streifen umfasst, die die Koeffizientenbitmodellierstufe 108 aktuell für ihre Kontexterstellung bzw. Vorkodierung benötigt. Im Vorgriff auf die spätere detailliertere Beschreibung bildet der Bitextraktor 104 beispielsweise aus den Koeffizientenbetragsbits und den Vorzeichenbits durch bloße Übernahme die neu aufzunehmenden Betragsbits 108 der aktuellen Bitebene, durch bloße Übernahme die neu aufzunehmenden Vorzeichenbits 118 und durch geeignetes Kombinieren zugehörige Statusbits 120 und führt diese der Schieberegistereinheit 106 zu, die so dimensioniert ist, dass sie die einzelnen Bits 108, 110, 112 in einer Tiefe einer jeweiligen geeigneten Anzahl von Schiebestufen bzw. -rängen halten kann, wie es im Folgenden noch näher beschrieben wird. Am Rand des Codeblocks befindliche Nachbarbits werden entsprechend mit Nullen aufgefüllt, wie es in Fig. 3 exemplarisch für die oberen Nachbarbits dargestellt ist.

Vereinfachend ist in Fig. 3 dargestellt, das Schieberegister 106 sähe jeweils vier Register (schattiert dargestellt) zusammen mit je 14 Nachbarregistern vor, und zwar jeweils für die Koeffizientenbits 108, Vorzeichenbits 118 und Statusbits 120. Die Schieberegistereinheit 106 kann somit als mehrere Schieberegister 106_{1,2,3,4} aufweisend angesehen werden, jeweils eine für die Betragsbits, Vorzeichenbits und zwei unterschiedliche Statusbits, die im Folgenden noch näher beschrieben werden, wobei diese einzelnen Schieberegister 106_{1...4} miteinander synchronisiert sind, so dass pro Schiebeimpuls sämtliche Registerinhalte gleichzeitig um eine Position horizontal bzw. um einen Schieberegisterrang, d.h. um einen 6-er-Vektor in Fig. 3, weitergeschoben werden.

Intern zergliedert sich die Koeffizientenbitmodellierstufe 108 in mehrere Bitmodelliereinheiten 108₁, 108₂ und 108₃, von denen die erste für den Pass 1 bzw. Durchlauf 1, die zweite für den Durchlauf 2 bzw. Pass 2 und die dritte für den Pass 3 bzw. Durchlauf 3 zuständig ist, und die im Folgenden noch näher beschrieben werden. Die einzelnen Einheiten 108₁-108₃ sind jeweils mit jeweiligen Bitregistern der Schieberegister 106₁-106₄ gekoppelt, um die entsprechenden Registerinhalte zu analysieren und für jedes zu modellierende Bit aus einem aktuellen Tupel von Betragsbits, das in Fig. 3 den schraffierten Registern entspricht, festzustellen, ob es gemäß dem jeweiligen Durchlauf bzw. Pass zu modellieren ist oder nicht, und, wenn ja, mit welchem Resultat. Die Bitmodelliereinheiten 108₁-108₃ sind insbesondere dazu ausgebildet, pro Tupel oder pro zu dem jeweiligen Pass gehörigen Betragsbit ein entsprechend vorkodiertes Datenwort inklusive im Folgenden noch näher erläuterter Steuerbits zu erzeugen und in jeweiligen Zwischenspeichern 110₁, 110₂ und 110₃ der Zwischenspeicherstufe 110 abzulegen. Datenworte, die zu Tupeln gehören, in denen sich kein zu dem jeweiligen Durchlauf gehöriges Betragsbit befindet, können verworfen werden, wie es im Folgenden beschrieben werden wird, ebenso wie Datenworte für nicht zu dem jeweiligen Durchlauf gehörige Betragsbits.

Die Bitmodelliereinheiten 108₁-108₃ können insbesondere ausgelegt sein, um in den Datenworten Steuerbits einzustellen, die durch die anschließende arithmetische Kodiereinrichtung 112 verwendet werden können, um die in die Zwischenspeicher 110₁-110₃ abgelegten Datenworte bzw. die in dieselben kodierten Betragsbits in der geeigneten Reihenfolge und unter Verwendung des richtigen Kontexts oder unter Aussetzung der arithmetischen Kodierung in einem anderen Modus, wie z.B. einem Klartextmodus, in den Datenstrom einzufügen, wie es im Folgenden noch näher erörtert werden wird. Hierzu weist die arithmetische Kodiereinrichtung 112 insbesondere einen Durchlaufentscheider 122 auf, dem ein arithmetischer Kodierer 124 nachgeschaltet ist. Der Durchlaufentscheider 122 fungiert als Kodierer der vorkodierten Datenworte in den Zwischenspeichern 110₁-110₃ und ist hierzu mit letztgenannten gekoppelt. Aus diesen Datenworten rekonstruiert der Durchlaufentscheider 122 die in den einzelnen Durchläufen 1, 2 und 3 bzw. Pass 1, Pass 2 und Pass 3 kontextmodellierten Bits mit zugehörigem Kontext und leitet diese Paare in der geeigneten Reihenfolge, d.h. Pass 1 gefolgt von Pass 2 gefolgt von Pass 3, an den arithmetischen Kodierer 124 weiter, wobei die weitergeleiteten Informationen neben den Bitwerten und den zugehörigen Kontextindizes auch Informationen über durch den arithmetischen Kodierer 124 zu verwendende Kodiermodi beinhalten können oder dgl., wobei die Steuersignale von dem Entscheider 122 zu dem arithmetischen Kodierer 124 in Fig. 3 allgemein mit 126 angezeigt sind. In anderen Worten ausgedrückt kodiert der Pass-Entscheider 122 die ausgelesenen Datenwörter in den Zwischenspeichern 110 zurück in Bit-Kontext-Paare 126 und führt diese dem nachgeschalteten arithmetischen Kodierer 124 in vorgeschriebener Weise und geeigneter Repräsentierung zu.

Im Vorhergehenden wurde grob der Aufbau des Blockkodierers 100 von Fig. 3 beschrieben sowie die Aufgaben und Funktionalitäten der einzelnen Einheiten grob skizziert. Bevor im Folgenden mit der detaillierten Beschreibung der Bitmodelliereinheiten 108₁-108₃ und des Pass-Entscheiders 122 und basierend darauf einer detaillieren Beschreibung der Funktionsweise des Blockkodierers 100 fortgefahren wird, soll im Folgenden noch einmal kurz grob das allgemeine Ziel des Zusammenspiels der Einheiten von Fig. 3 beschrieben werden, um auf diese Weise einen Überblick zu geben, der für das Verständnis der nachfolgenden detaillierten Beschreibung hilfreich sein kann. Wie bereits erwähnt, sorgt der Bitextraktor 104 für die Befüllung der Schieberegistereinheit 106. Der Bitextraktor 104 scannt dabei streifenweise die aktuelle Betragsbitebene. In erster Näherung kann man sich deshalb die Schieberegistereinheit 106 als ein Fenster vorstellen, das sich über die aktuelle Betragsbitebene entlang der Scanreihenfolge bewegt, mit dazu synchroner Bewegung eines entsprechenden Fensters in der Vorzeichenbitebene 40 (Fig. 2) und unter Zwischenspeicherung dazugehöriger Statusbits für diese Fensterinhalte. Die Bitmodelliereinheiten 108₁-108₃ benötigen für ihre Arbeit keine weiteren Informationen als diejenigen in der Schieberegistereinheit 106, weshalb langwierige Speicherzugriffe 114 auf die Speichereinheit 102 nicht notwendig sind. Zudem ist nur ein Durchlauf durch die aktuelle Betragsbitebene notwendig, obwohl von dem Standard wie im Vorhergehenden erörtert drei Durchläufe zur Festlegung der Reihenfolge festgelegt sind, in der die Betragbits in den Datenstrom kodiert werden sollen. Um Letzteres zu erzielen, kümmert sich jede der Bitmodelliereinheiten 108₁-108₃ nur um diejenigen Betragsbits in den Vierertupeln, die zu dem jeweiligen eigenen Pass gehören. Allgemein kann man sagen, dass sich der Pass 1 um Betragsbits von Transformationskoeffizienten kümmert, die noch nicht signifikant sind, d.h. deren Betragsbits in den signifikanteren Betragsbitebenen Null bzw. nichtsignifikant sind, aber zu Transformationskoeffizienten benachbart sind, die signifikant sind. Um Verwirrungen auszuschließen, wird darauf hingewiesen, dass ein Transformationskoeffizient in einer bestimmten Betragsbitebene als signifikant bezeichnet wird, wenn zumindest einer der Betragsbits in den signifikanteren Betragsbitebenen 1 ist, und derselbe in einer bestimmten Betragsbitebene "signifikant wird", wenn keiner der Betragsbits in den signifikanteren Betragsbitebenen 1 ist aber er während der Kodierung der aktuellen Bitebene noch in dieser Ebene durch ein Betragsbit von 1 signifikant wird. Ein Betragsbit wird als signifikant bezeichnet, wenn er 1 ist. Der Pass 2 kümmert sich um Transformationskoeffizienten, die in der aktuellen Betragsbitebene bereits signifikant sind. Der Pass 3 schließlich adressiert die restlichen Betragsbits, d.h. die Betragsbits von Transformationskoeffizienten, die nichtsignifikant sind und nicht in den Pass 1 fielen.

Die Signifikanzen der Transformationskoeffizienten in der aktuell zu kodierenden Betragsbitebene spielen bei der Modell- bzw. Kontextbildung, die durch die Bitmodelliereinheiten 108₁-108₃ durchgeführt wird, eine große Rolle, da hieraus die Kontexte bestimmt werden und diese Information bei Dekodierung bereits auch dem Dekodierer vorliegt und er somit die Kontextmodellierung nachbilden kann. Bereits jetzt sei darauf hingewiesen, dass die Entscheidung, ob ein bestimmtes Betragbit zu dem Pass 3 gehört mitunter davon abhängt, ob eines der Nachbarbetragsbits zwar in logischer Abfolge vor Pass 1 zu einem nicht-signifikanten Transformationskoeffizienten gehört, aber zu dem Pass 1 gehört und somit gegebenenfalls virtuell bzw. gemäß der im Standard festgelegten Reihenfolge, wonach die Durchläufe nacheinander durchgeführt werden, noch vor dem Ende des Pass 1 signifikant wird, in welchem Fall nämlich das entsprechende Betragsbit gegebenenfalls doch nicht dem Pass 3 angehört, sondern dem Pass 1. Das Problem des Signifikantwerdens von Nachbarbetragsbits betrifft aber natürlich nur diejenigen Nachbarbetragsbits, die gemäß der Betragsbitscanreihenfolge vor dem aktuell betrachteten Betragsbit liegen.

Die Bitmodelliereinheiten 108₁-108₃ füllen ihre jeweiligen Zwischenspeicher 110₁-110₃ mit aufeinander folgenden Datenworten, die der Reihe nach von dem Pass-Entscheider 122 ausgelesen werden, und zwar betragsbitebenenweise, also mit dem Zwischenspeicher 110₁ beginnend so lange bis das letzte Datenwort der aktuellen Betragsbitebene ausgelesen worden ist, daraufhin fortfahrend mit dem Zwischenspeicher 110₂, so lange bis das letzte Datenwort aus der aktuellen Betragsbitebene ausgelesen worden ist, wiederum gefolgt von dem Zwischenspeicher 110₃, so lange bis dort das letzte Datenwort ausgelesen worden ist, wobei ausnahmsweise in der ersten bzw. signifikantesten Betragsbitebene gleich mit dem Zwischenspeicher 110₃ begonnen wird, da dort noch kein Transformationskoeffizient signifikant ist, und somit auch kein Betragsbit dieser Ebene einem anderen Paß angehören kann als Pass 3. Die Datenwörter werden in dem Pass-Entscheider 122 auch dekodiert und in entsprechende Steuersignale für den arithmetischen Kodierer 124 umgewandelt, der daraus einen kodierten Datenstrom für den Codeblock bildet.

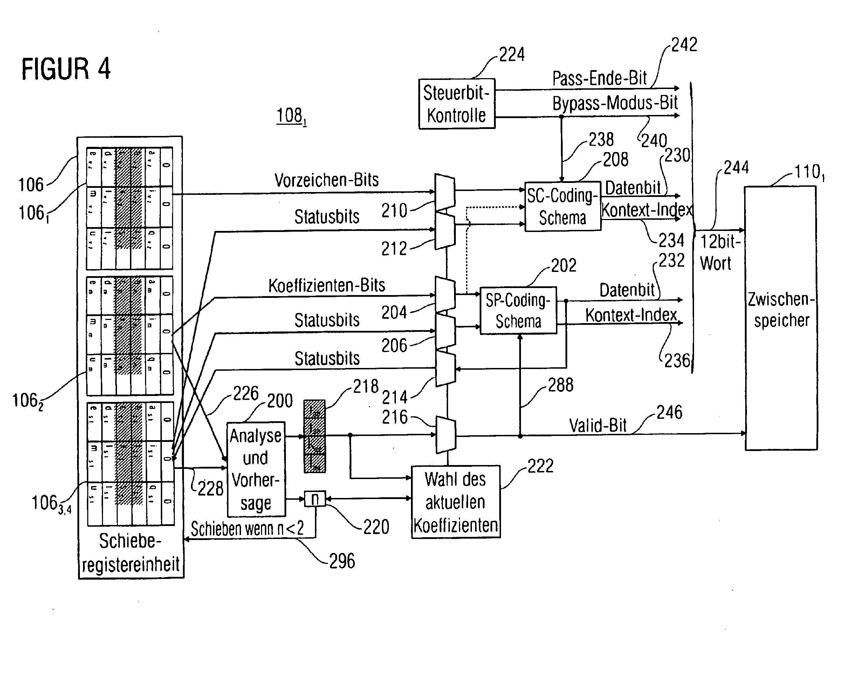

Im Folgenden wird nun vorab der interne Aufbau der Bitmodelliereinheiten sowie des Pass-Entscheiders von Fig. 3 näher beschrieben. Fig. 4 zeigt den Aufbau der Bitmodelliereinheit 108₁. Sie ist für den Pass 1 zuständig, d.h. für den ersten Kodierdurchlauf, der auch als "Signifikanzfortpflanzungsdurchlauf" bzw. "significance propagation pass", bezeichnet wird, weil er Betragsbits von Transformationskoeffizienten betrifft, die sich in der Nähe von bereits signifikanten Transformationskoeffizienten befinden und somit wahrscheinlicher signifikant werden als solche Transformationskoeffizienten, die sich weiter entfernt von bereits signifikanten befinden. Wie im Vorhergehenden erwähnt, basiert die Entscheidung, ob ein entsprechendes Betragsbit in dem Kodierdurchlauf Pass 1 zu modellieren ist, darauf, ob der entsprechende Koeffizient für die aktuelle Bitebene noch insignifikant ist und mindestens einer seiner direkten Nachbarkoeffizienten signifikant ist oder im Verlaufe des ersten Durchlaufs signifikant wird.

Die Bitmodelliereinheit 108₁ weist eine Analysevorhersageeinheit 200, eine Betragsbitvorkodiereinheit 202, letzterer eingangsseitig vorgeschaltete Multiplexer 204, 206, eine Vorzeichenbitvorkodiereinheit 208, letzterer eingangsseitig vorgeschaltete Multiplexer 210, 212, einen Aktualisierungsdemultiplexer 214, einen Gültigkeitsbitmultiplexer 216, ein Vierbitregister 218, einen Taktzähler 220, einen Koeffizientenwähler 222 sowie eine Steuerbitsteuerung 224 auf, wobei in Fig. 4 zum leichteren Verständnis noch der Zwischenspeicher 110₁ sowie die Schieberegistereinheit 106 dargestellt sind.

Die Analysevorhersageeinheit 200 ist dazu vorgesehen, vorab, d.h. im Vorgriff auf das Schieben des nächsten zu bearbeitenden Tupels in den Teil des Schieberegisters 106, an dem die Bitmodelliereinheit 108₁ das zu bearbeitende Tupel erwartet, welche Stelle in Fig. 4 mit Schraffur dargestellt sind, festzustellen, welche dieser Betragsbits dem Pass 1 angehören. Die Analyse/Vorhersageeinheit 200 trifft diese Entscheidung beispielsweise immer dann, wenn die Schieberegistereinheit 106 durch den Bitextraktor 104 (Fig. 3) neu befüllt wird, d.h. bei jedem Schiebeimpuls. In Fig. 4 trifft die Analysevorhersageeinheit 200 beispielsweise die Entscheidung über Zugehörigkeit oder Nicht-Zugehörigkeit der Betragsbits des 4-er-Vektors qₘ, rₘ, sₘ, tₘ, die beim nächsten Schiebevorgang in der Registereinheit 106 zu dem aktuellen Tupel werden bzw. in den schraffierten Registerbereich verschoben werden, wo momentan die Betragsbits im, jₘ, kₘ und lₘ befindlich sind. Um die Vorhersage treffen zu können, ist die Analyse/Vorhersageeinheit 200 mit Registerzellen der Registereinheit 106 gekoppelt, und zwar mit dem Teil 106₂, der die Betragsbits betrifft, wie es mit einem Pfeil 226 angedeutet ist, und dem Teil 106₃, der die ersten Statusbits betrifft, wie es mit einem Pfeil 228 angedeutet ist, wobei die ersten Statusbits die Signifikanz entsprechender Koeffizienten bezüglich der aktuellen Bitebene anzeigen, wie es im Folgenden noch detailliert erörtert wird.

An einen Ausgang der Analyse/Vorhersageeinheit 200 schließt sich das Register 218 an, um von der Analyse/Vorhersageeinheit 200 das Ergebnis der Vorhersage in Form eines 4-Bit-Vektors zu erhalten, der pro Betragsbit des als nächstes aktuellen Tupels durch ein entsprechendes Bit iₐₑ, jₐₑ, kₐₑ und lₐₑ aufweist, das angibt, ob das jeweilige Betragsbit qₘ, rₘ, sₘ bzw. tₘ im Nachfolgenden Schiebezyklus durch die Bitmodelliereinheit 108₁ zu verarbeiten ist oder nicht.

Sowohl ein Eingang des Multiplexers 216 als auch ein Eingang des Koeffizientenwählers 222 sind mit dem Register 218 gekoppelt. Der Koeffizientenwähler 222 ist ausgebildet, um auf Basis des Registerinhaltes des Registers 218 die zu modellierenden bzw. vorzukodierenden Betragsbits des Passes 1 auszuwählen und diese Auswahl in Form eines Multiplexersteuersignals an den Multiplexer 210, 212, 204, 206 und 216 bzw. den Demultiplexer 214 mitzuteilen. Die Analyse/Vorhersageeinheit 200 gibt ferner eine Vorhersage über die Anzahl der zum Pass 1 gehörigen Betragsbits in dem als nächstes an der Reihe seienden Tupels aus, und zwar an den Taktzähler 220, der auf diese Weise an dem Beginn jedes Schiebezyklus bzw. nach einem Schiebevorgang in dem Schieberegister 106 auf einen Wert vorinitialisiert ist, der der Anzahl der zu dem Pass 1 gehörigen Betragsbits in dem aktuellen Betragsbittupel entspricht. Der Taktzähler 220 dekrementiert dann beispielsweise seinen Zählerinhalt basierend auf einen Verarbeitungstakt, den derselbe von dem Koeffizientenwähler 222 erhält, der in dem Verarbeitungstakt das Multiplexersignal nacheinander auf die zu dem Pass 1 gehörigen Betragsbits einstellt, wie sie in dem Register 218 angezeigt sind.

Der Multiplexer 216 ist ausgebildet, um abhängig von dem Multiplexersignal von dem Koeffizientenwähler 222 das durch das Multiplexersignal angezeigte Bit aus dem Register 218 als Gültigkeitsbit bzw. Valid-Bit an seinen Zwischenspeicher 110₁ auszugeben. Der Multiplexer 204 ist eingangsseitig mit speziellen Registerzellen bzw. Registerplätzen der Schieberegistereinheit aus dem Teil 106₂ für die Betragsbits gekoppelt, und ist ausgebildet, um abhängig von dem Multiplexersteuersignal von dem Koeffizientenwähler 222 eine das durch das Multiplexersignal angezeigte Bit speichernde der Betragsbitregisterzellen mit einem Eingang der Betragsbitvorkodiereinheit 202 und optional einem Eingang der Vorzeichenbitvorkodiereinheit 208 zu koppeln, indem ein entsprechender der Eingänge des Multiplexers 204 auf einen entsprechenden Ausgang des Multiplexers 204 geführt wird. Entsprechendes gilt auch für die Multiplexer 210, 212 und 206. Der Multiplexer 210 beispielsweise ist eingangsseitig mit speziellen Vorzeichenbitzellen aus dem Teil 106₁ der Schieberegistereinheit 106 gekoppelt und ausgebildet, um abhängig von dem Multiplexersignal einen entsprechenden Teilsatz dieser Registerinhalte bzw. Vorzeichenbits über den Ausgang des Multiplexers 210 an einen weiteren Eingang der Vorzeichenbitvorkodiereinheit 208 auszugeben. In entsprechender Weise ist der Multiplexer 212 zwischen spezielle Registerzellen aus dem Teil 106₃ für die ersten Statusbits der Schieberegistereinheit 106 und einen weiteren Eingang der Vorzeichenbitvorkodiereinheit 208 und der Multiplexer 206 zwischen spezielle Registerzellen in dem Teil 106₃ der Schieberegistereinheit 106 und einen weiteren Eingang der Betragsbitvorkodiereinheit 202 geschaltet, um abhängig von dem Multiplexersignal einen Teil der ersten Statusbits dieser speziellen Registerzellen an die jeweilige Einheit auszugeben.

Die so eingehenden Signale werden von den Vorkodiereinheiten 208 und 202 verwendet, um jeweils ein Paar aus Datenbit 230 bzw. 232 und Kontext-Index bestehend aus 2 Bits 234 bzw. 236 auszugeben, wobei das Datenbit den Bitwert des Vorzeichenbits bzw. des Betragsbits des durch das Multiplexersignal angezeigten aktuell zu verarbeitenden Transformationskoeffizienten angibt, während der Kontextindex jeweils dazu auf den zugehörigen zu verwendenden Kontext zeigt.

Wie es in Fig. 4 durch einen Pfeil 238 angezeigt ist, kann es vorgesehen sein, dass die Vorzeichenbitvorkodiereinheit 208 zusätzlich bei Ihrer Kodierung bzw. Kontextbildung ein Bypass-Modus-Bit 240 verwendet, das von der Steuerbitsteuerung 224 neben einem Pass-Ende-Bit 242 ausgegeben wird. Die Bedeutung dieser Steuerbits 240 und 242 wird im Folgenden noch näher erörtert. Die Bits 230, 242 bilden zusammen ein 12-Bit-Wort 244, das in den Zwischenspeicher 210₁ eingegeben wird. Der Zwischenspeicher 110₁ kann ausgebildet sein, um lediglich Datenwörter 244 zwischenzuspeichern, bei denen das gleichzeitig eintreffende Gültigkeitsbit 246, das von dem Multiplexer 216 ausgegeben wird, anzeigt, dass das aktuelle Multiplexersignal auf einen zu dem Pass 1 gehöriges Betragsbit zeigte.

Wie es in Fig. 4 ferner zu sehen ist, wird das von der Betragsbitvorkodiereinheit 202 ausgegebene Datenbit 232 auf einen Eingang des Demultiplexers 214 rückgekoppelt. Letztere ist ausgangsseitig mit Registerzellen aus dem Bereich 106₃ gekoppelt, nämlich denjenigen, die die ersten Statusbits für die aktuellen Betragsbits (schraffiert dargestellt) enthält, um abhängig von dem Multiplexersignal das Datenbit 232 zur Aktualisierung des ersten Statusbits zu verwenden, das dem Betragsbit zugeordnet ist, das gerade durch die Betragsbitvorkodiereinheit 202 modelliert worden ist. Auf diese Weise wird nämlich die Signifikanz des entsprechenden Koeffizienten aktualisiert.

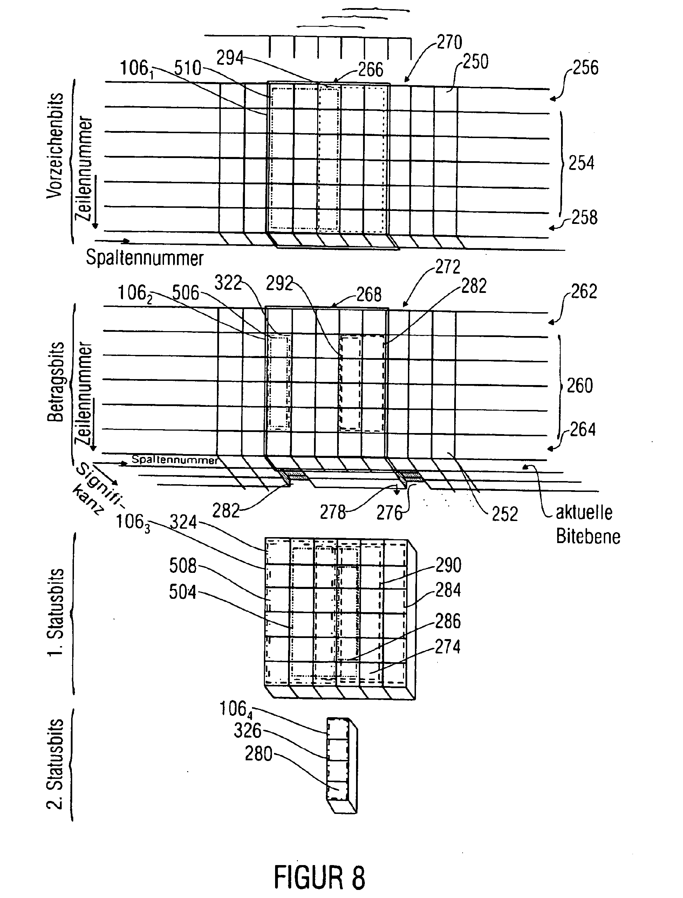

Die vorhergehende Beschreibung ging lediglich grob auf den Aufbau und die Einzelfunktionsweise der Komponenten der Bitmodelliereinheit 108₁ ein. Im Folgenden soll deshalb das Zusammenspiel der einzelnen Komponenten der Bitmodelliereinheit 108₁ im Zusammenspiel mit der Schieberegistereinheit 106, dem Zwischenspeicher 110₁ sowie dem Bitextraktor 104 unter gleichzeitiger Bezugnahme auf Fig. 8 und 3 näher erläutert werden. Fig. 8 versinnbildlicht einen Ausschnitt aus der Speichereinheit 102 (Fig. 3) nämlich einen Ausschnitt aus den Betragsbits und Vorzeichenbits der Transformationskoeffizienten eines aktuell zu kodierenden Codeblocks. Insbesondere sind die einzelnen Vorzeichenbits und Betragsbits durch Würfel 250 bzw. 252 versinnbildlicht. Insbesondere sind die Vorzeichenbits 250 in Zeilen und Spalten nebeneinander liegend angeordnet dargestellt, in Entsprechung der entsprechenden Transformationskoeffizienten in dem zu kodierenden Codeblock. Nur ein Ausschnitt der Vorzeichenbits 250 ist gezeigt, und zwar ein Ausschnitt aus Vorzeichenbits 250 in einem aktuellen Streifen 254 plus der angrenzenden Zeilen 256 bzw. 258 des darüber und darunter befindlichen Streifens. Auch die Betragsbits 252 der aktuellen Bitebene sind als in Zeilen und Spalten nebeneinander liegend dargestellt, wobei ebenfalls lediglich ein Teil bzw. Ausschnitt aus der aktuellen Bitebene dargestellt ist, der dem Teil aus der Vorzeichenbitebene entspricht, d.h. einem Teil eines entsprechenden Streifens 260 mit den Betragsbits 252 der darüber und darunter befindlichen Zeile 262 und 264. Lediglich der Vollständigkeit halber wird darauf hingewiesen, dass in vertikaler Richtung zueinander ausgerichtete Betrags- und Vorzeichenbits in einander entsprechenden Zeilen unter den Zeilen 254-264 in Fig. 8 zu gleichen Transformationskoeffizienten gehören sollen.

Die Betragsbits von weniger signifikanten Bitebenen als der aktuellen Bitebene sind in Fig. 8 nicht dargestellt. Signifikantere und somit bereits kodierte Betragsbits der signifikanteren Bitebenen sind allerdings in Fig. 8 erkennbar und liegen der Reihe nach hinter der aktuellen Bitebene.

Wie nun bereits im Vorhergehenden beschrieben wurde, füllt der Bitextraktor 104 bei jedem Schiebevorgang der Schieberegistereinheit 106 mittels Speicherzugriffen 114 (Fig. 2) letztere wieder mit Vorzeichenbits 250 bzw. Betragsbits 252 aus der Speichereinheit 102, Fig. 3, so dass sich in dem Schieberegister 106 zu jedem Zeitpunkt immer ein Ausschnitt aus der Vorzeichenbitebene bzw. der aktuellen Betragsbitebene befindet. Diese Ausschnitte sind in Fig. 8 bei 266 und 268 hervorgehoben dargestellt. Wie zu erkennen ist, befindet sich zu einem betrachteten Zeitpunkt in dem Teil 106₁ der Schieberegistereinheit ein Ausschnitt aus dem Vorzeichenbitarray von fünf aufeinander folgenden Spalten und sechs übereinander liegenden Zeilen, nämlich den vier Zeilen des aktuellen Streifens 254 und der Nachbarzeilen 256 und 258. Auf entsprechende Weise befindet sich in dem Teil 106₂ der Schieberegister 106 zu jedem Zeitpunkt ein Ausschnitt aus der aktuellen Betragsbitebene von vier Spalten Länge zu je sechs Zeilen 260-264.

Wie es in Fig. 8 zu erkennen ist, sind die Ausschnitte 266 und 268 der in den Zeilen 106₁ und 106₂ der Schieberegistereinheit 106 gespeicherten Vorzeichenbits 250 bzw. Betragsbits 252 derart zueinander ausgerichtet, dass zu einem Transformationskoeffizienten, für die augenblickliche Betragsbits 252 in dem Teil 106₂ zwischengespeichert ist, auch das entsprechende Vorzeichenbit 250 des jeweiligen Transformationskoeffizienten in dem Teil 106₁ zwischengespeichert ist. Insbesondere ist in der Schieberegistereinheit für jedes zu speichernde Bit eine Registerzelle vorgesehen, die in Fig. 8 ebenfalls als durch die Würfel in den entsprechenden Abschnitten 266 und 268 versinnbildlicht angesehen werden können. Die Registerzellen der Teile 106₁ und 106₂ sind dabei derart miteinander verschaltet, dass die Registerinhalte in Fig. 8 von rechts nach links verschoben werden, so dass bei jedem Schiebevorgang eine Spalte von Vorzeichenbits 250 bzw. Betragsbits 252 die Schieberegistereinheit 106 auf der einen Seite, in Fig. 8 nämlich links, verlässt, und an dem anderen Ende des Schieberegisters die entsprechenden Teile 106₁ und 106₂ mit einer nächsten Spalte 270 bzw. 272 von Vorzeichenbits 250 bzw. Betragsbits 252 aufgefüllt werden. In Fig. 8 entspricht dies einer Verschiebung des zwischengespeicherten Abschnittes 266 bzw. 268 in der Vorzeichenbitebene bzw. Betragsbitebene pro Schiebevorgang virtuell um eine Spalte nach rechts. Der Bitextraktor 104 ist nun derart ausgebildet, dass er die Befüllung des Teiles 106₁ und 106₂ mit Vorzeichenbits 250 bzw. Betragsbits 252 durchführt, die eine aneinander zugeordnete Spalte von Transformationskoeffizienten betreffen, so dass sich der Versatz zwischen dem Inhalt des Vorzeichenbitteiles 106₁ und dem augenblicklichen Inhalt des Betragsbitinhaltes 106₂ der Schieberegistereinheit 106 am hinteren Schieberegisterende ergibt, wo Vorzeichenbits in dem Teil 106₁ zwischengespeichert sind, die diesen Teil beim nächsten Schiebevorgang verlassen, und für die keine Betragsbits mehr in dem Teil 106₂ zwischengespeichert sind.

Wie bereits im Vorhergehenden erwähnt, benötigen die Bitmodelliereinheiten 108₁ und 108₂ für ihre Verarbeitung auch Statusbits, nämlich erste und zweite Statusbits. Die ersten Statusbits geben jeweils für einen Transformationskoeffizienten an, ob derselbe bezüglich der aktuellen Betragsbitebene signifikant ist oder nicht. Erneut sei darauf hingewiesen, dass sich der Zustand der Signifikanz der aktuellen Betragsbitebene für einen Transformationskoeffizienten nach dem - bzw. währenddessen - virtuellen ersten Durchlauf bzw. Pass 1 ändern kann. Der Teil 106₃ der Schieberegistereinheit 106 ist nun derart dimensioniert, dass er für sechs aufeinander folgende Spalten von Transformationskoeffizienten in den Zeilen 260-264 entsprechenden Zeilen jeweils ein Statusbit 274 speichert, die in Fig. 8 ebenfalls als Würfel dargestellt sind. Insbesondere speichert die Schieberegistereinheit 106 in dem Teil 106₃ zu jedem Zeitpunkt erste Statusbits 274 für Transformationskoeffizienten von sechs benachbarten Spalten zu je sechs Zeilen, von denen fünf Spalten die ersten Statusbits zu Transformationskoeffizienten enthalten, zu denen die Vorzeichenbits 250 in dem Ausschnitt 266 des Teils 106₁ enthalten sind. Zusätzlich sind erste Statusbits für Transformationskoeffizienten in einer 6-er Spalte von Transformationskoeffizienten enthalten, mit deren Vorzeichenbits 250 bzw. Betragsbits der aktuellen Bitebene die Teile 106₁ und 106₂ der Schieberegistereinheit 106 erst beim nächsten Schiebevorgang befüllt werden.

In der Darstellung von Fig. 8 können ebenfalls die Würfel 274 gleichzeitig auch als die entsprechenden Registerzellen angesehen werden, die derart verschaltet sind, dass sie ihre Inhalte spaltenweise verschieben, und zwar in Fig. 8 ebenfalls von rechts nach links im gleichen Takt wie die anderen Teile 106₁ und 106₂. Die Befüllung übernimmt ebenfalls der Bitextraktor 104 und zwar durch Bitkombination, wie z.B. ein logisches ODER zwischen in Signifikanzrichtung in einer Linie angeordneten Bits, auf der Basis der durch Schraffur hervorgehobenen Betragsbits 276 in den signifikanteren Betragsbitebenen als der aktuellen Betragsbitebene für Transformationskoeffizienten, die an den Positionen der Spalte 272 befindlich sind, mit deren Betragsbits der aktuellen Bitebene die Registerzellen am vorderen Ende des Teils 106₂ der Schieberegistereinheit 106 erst beim nächsten Schiebeimpuls befüllt werden. Der Befüllvorgang, der zu den jüngsten Einträgen in dem ersten-Statusbit-Teil 106₃ geführt hat, ist in Fig. 8 mit dem Pfeil 278 angedeutet.

Schließlich ist auch in dem Schieberegister 106 ein Teil 106₄ vorgesehen, in dem zweite Statusbits gespeichert sind, deren Bedeutung und Relevanz noch aus der folgenden Beschreibung deutlich wird. Jedenfalls speichert der Teil 106₄ die zweiten Statusbits für Transformationskoeffizienten lediglich einer Spalte und zwar in lediglich vier Zeilen, die den Zeilen des Streifens 260 bzw. 254 entsprechen, wobei die zweiten Statusbits ebenfalls als Würfel versinnbildlicht sind, die mit dem Bezugszeichen 280 angezeigt sind. Bei jedem Schiebevorgang in der Schieberegistereinheit 106 werden die zweiten Statusbits 280 aktualisiert, derart, dass sie immer für die Transformationskoeffizienten definiert sind, deren Betragsbit in der ausgangsseitigen Spalte in dem Streifen 260 zwischengespeichert sind, um beim nächsten Schiebevorgang aus dem Teil 106₂ der Schieberegistereinheit 106 verdrängt zu werden. Der Bit-Extraktor 104 aktualisiert die zweiten Statusbits 280 bei jedem Schiebevorgang der Schieberegister 106 aus schraffiert hervorgehobenen Betragsbits 282 in signifikanteren Betragsbitebenen als der aktuellen Betragsbitebene für die soeben erwähnten Transformationskoeffizienten in dem Streifen 260, indem der Bitextraktor 104 für jeden Transformationskoeffizienten die entsprechenden Betragsbits daraufhin überprüft, ob zumindest zwei dieser Betragsbits Eins bzw. signifikant sind.

Zurückkehrend zur Fig. 4 ist nun die Analyse/Vorhersageeinheit 200 derart mit den Teilen 106₂ und 106₃ der Schieberegistereinheit 106 gekoppelt, dass sie zur Vorhersage der Betragsbitzugehörigkeit des nächsten zu modellierenden Betragsbittupels den Inhalt der Registerzellen aus dem Teil 106₂ sowie die ersten Statusbits in denjenigen Registerzellen des Teils 106₃ der Schieberegistereinheit 106 erhält, die mit gestrichelten Linien angezeigt und mit dem Bezugszeichen 282 bzw. 284 versehen sind. Um dies ein weniger näher zu veranschaulichen, werden im Folgenden speziell angesprochene Registerzellen bzw. Bits in den Teilen 106₁ - 103₄ jeweils mit einem Indexpaar #,# versehen, das kodiert in Spaltennummer und Zeilennummer von der linken oberen Ecke ausgehend die Registerzellen- bzw. Bitposition angibt. So spannt der Bereich 282 beispielsweise den Bereich der Bereich der Betragsbits 252_{3,2} bis 252_{4,5} auf und der Bereich 284 den Bereich der Bits 274_{4,1} bis 274_{6,6}. Die Analyse/Vorhersageeinheit 200 verwendet nun die ihr zugeführten Informationen, um die Zugehörigkeit der Betragsbits an den Positionen 252_{4,2} bis 252_{4,5} zu dem ersten Pass vorherzusagen, welche Betragsbits das als nächstes an der Reihe seiende Tupel bilden, das zumindest in dem Fall, dass sich unter den Betragsbits ein zu dem Pass 1 Gehöriges befindet, von den Vorkodiereinheiten 202, 208 verarbeitet wird.

Die Betragsbits in dem Bereich 282 verwendet die Analyse/Vorhersageeinheit 200, um berücksichtigen zu können, dass nicht alle Statusbits in dem zweiten Bereich 284 so aktualisiert sind, wie sie es in dem Fall der Dekodierung in dem Dekodierer an der gleichen Stelle bei der Dekodierung des Pass 1 sein werden. Zusätzlich verwendet die Analyse/Vorhersageeinheit 200 zu ihrer Vorhersage das letzte Vorhersageergebnis, das sie an die Register 218 ausgab, und in dem Schieberegisterspeicherzustand von Fig. 8 die Transformationskoeffizientenpositionen betrifft, die in dem Teil 106₃ mit der Strich-Punkt-Punkt-Linie 286 markiert sind, die auch gleichzeitig die Transformationskoeffizientenpositionen markieren, die dem aktuell zu modellierenden Tupel entsprechen. Zum Beispiel kann die Analyse/Vorhersageeinheit 200 eine Noch-Nicht-Aktualisiertheit des ersten Statusbits 274_{4,2} abhängig von einer UND-Verknüpfung des Bits iₐₑ des letzten Vorhersageergebnisses mit dem Betragsbit 252_{3,2} berücksichtigen, indem sie das Ergebnis dieser UND-Verknüpfung mit dem ersten Statusbit 274_{4,2} ODER-verknüpft.

Für das erste Statusbit 274_{5,2} kann die Analyse/Vorhersageeinheit 200 die Noch-Nicht-Aktualisiertheit dadurch adressieren, dass sie das Ergebnis einer ODER-Verknüpfung der acht direkten Nachbarbits 274 mit vorbeschriebener Aktualisierungskompensation für die Statusbits 274_{4,2} und 274_{4,3} mit dem Betragsbit 252_{4,2} UND-verknüpft. Mit solchermaßen virtuell aktualisierten ersten Steuerbits kann die Analyse/Vorhersageeinheit 200 die Zugehörigkeit von beispielsweise dem Betragsbit 252_{4,3} durch eine ODER-Verknüpfung der acht ersten Steuerbits der acht unmittelbaren Nachbar-Koeffizienten unter anschließender UND-Verknüpfung mit dem Inversen bzw. der Negation des Statusbits 274_{5,3} ermitteln. Auf diese Weise überprüft folglich die Analyse/Vorhersageeinheit 202 für jeden der zu modellierenden Betragsbits 252_{4,2} bis 252_{4,5}, ob die entsprechenden Transformationskoeffizienten, die sie darstellen, noch insignifikant sind, sowie ob die direkten Nachbar-Koeffizienten schon signifikant sind bzw. zumindest einer derselben schon signifikant ist, und zwar bereits eine Spalte vor der aktuell zu modellierenden Spalte 252_{3,2} bis 252_{3,5} und unter Berücksichtigung der Signifikanzen, wie sie sich bei ordentlichem Durchlauf des Pass 1 bis zu dem jeweiligen Betragsbit in 252_{3,2} bis 252_{3,5} ergeben hätten.

Das Analyseergebnis wird dann von der Einheit 200, wie bereits beschrieben, als 4-Bit-Vektor an das Register 218 ausgegeben, um nach dem nächsten Schiebevorgang der Schieberegistereinheit 106 am Eingang des Multiplexers 216 bzw. des Koeffizientenwählers 222 anzuliegen. Mit nur einer zusätzlichen arithmetischen Addieroperation unter den Bitwerten, die dieselbe an die Register 218 ausgibt, kann die Analyse/Vorhersageeinheit 200 auch das Vorhersageergebnis liefern und an den Bitzähler 220 vor Beginn des nächsten Schiebevorganges in das Schieberegistereinheit 106 ausgeben, das angibt, wie viele der Betragsbits in dem nächsten zu modellierenden Tupel dem Pass 1 angehören. Zeigt das Register 218 an, dass keines der Betragsbits des aktuellen Tupels 252_{3,2} bis 252_{3,5} zu dem Pass 1 gehört, so stellt der Koeffizientenwähler 222 das Multiplexersignal beliebig ein, wie z.B. auf einen vorbestimmten Wert, der nicht von dem Registerinhalt des Registers 218 abhängt, wodurch der Multiplexer 216 eines der nicht-gesetzten Bits in dem Register 218 als Gültigkeitsbit 246 an den Zwischenspeicher 210₁ ausgibt. Selbst wenn also die Vorkodiereinheiten 202, 208 und die Steuerbitsteuerung 224 zusammen ein 12-Bit-Wort 244 bilden und an den Zwischenspeicher 110₁ ausgeben, so nimmt der Zwischenspeicher 110₁ beispielsweise die Zwischenspeicherung dieses Datenwortes 244 nicht vor, weil das Gültigkeitsbit nicht gesetzt ist. Zur Stromersparnis kann es jedoch vorgesehen sein, dass beispielsweise der Betrieb der Vorkodiereinheiten 202, 208 in einem solchen Fall unterbunden wird, wie es exemplarisch durch einen Pfeil 288 in Fig. 4 angedeutet ist. Natürlich wäre es ferner möglich, dass der Zwischenspeicher 110₁ die Speicherung der Datenworte 244 unabhängig davon vornimmt, ob das Gültigkeitsbit gesetzt ist oder nicht, in welchem Fall der Zwischenspeicher 110₁ das Gültigkeitsbit einfach zusammen mit dem 12 Bit-Wort zwischenspeichert, wobei diese Vorgehensweise allerdings einen größeren Speicherplatz in dem Zwischenspeicher 110₁ erforderlich macht.

Anderenfalls jedoch, d.h. in dem Fall zumindest eines gesetzten Bits in dem Register 218, das anzeigt, dass das entsprechende Betragsbit unter den aktuell zu modellierenden Betragsbits 252_{3,2} bis 252_{3,5} dem Pass 1 angehört, stellt in aufeinander folgenden Arbeitszyklen der Koeffizientenwähler 222 das Multiplexersignal sequentiell unten entsprechend den gesetzten Bits in dem Register 218 auf die dem Pass 1 angehörigen Koeffizienten ein. In dem Verarbeitungstakt generieren dann die Steuerbitsteuerung 224 und die Vorkodiereinheiten 202 und 208 zu jedem dieser dem Pass 1 angehörigen Betragsbits ein 12 Bit-Datenwort 244, das zusammen mit einem gesetzten Gültigkeitsbit 246 an den Zwischenspeicher 110₁ ausgegeben wird, der aufgrund des gesetzten Gültigkeitsbits diese Datenwörter in der eintreffenden Reihenfolge speichert. Insbesondere geht der Koeffizientenwähler 222 die zu dem Pass 1 gehörigen Betragsbits innerhalb der Spalte 252_{3,2} bis 252_{3,5} von oben nach unten durch, wie es gemäß der Scanreihenfolge der Decoder auch erwartet.

In jedem Verarbeitungszyklus verarbeiten die Vorkodiereinheiten 202 und 208 die ihnen zu Verfügung stehenden Informationen gemäß einem jeweiligen Kodierungsschema, um die Datenbits 230 bzw. 232 und die zugehörigen Kontext-Indizes 234 und 236 zu bestimmen. Die Vorkodiereinheit 202 führt ein sogenanntes Signifikanzfortpflanzungs- bzw. SP-Kodierschema aus. Danach wird der Kontext-Index 236 mittels logischer Verknüpfung der Signifikanzen der Nachbar-Koeffizienten gebildet. Zeigt also beispielsweise das aktuelle Multiplexersignal auf das Betragsbit 252_{3,3}, so leitet der Multiplexer 206 die ersten Statusbits 274_{3,2} bis 274_{5,2}, 274_{3,4} bis 274_{5,9}, 274_{3,3} und 274_{5,3} weiter. Insgesamt ist folglich eingangsseitig der Multiplexer 206 mit den Registerzellen gekoppelt, die von der gestrichelten Linie 290 in Fig. 8 umgeben sind. Der Multiplexer 204 ist eingangsseitig mit den Registerpositionen in dem Bereich 106₂ gekoppelt, der dem aktuell zu modellierenden Tupel entspricht und mit einer gestrichelten Linie 292 gekennzeichnet ist. Der Multiplexer 204 gibt den durch das Multiplexersignal angezeigten Betragsbitwert an die Vorkodiereinheit 202 aus, damit diese das Datenbit 232 entsprechend einstellen kann.

Die Vorzeichenbitvorkodiereinheit 208 kann, wie es in Fig. 4 durch die gestrichelte Verbindungslinie 294 angezeigt ist, ebenfalls den Betragsbitwert des durch das Multiplexersignal angezeigten Betragsbits erhalten, um abhängig davon eine Verarbeitung zu unterbinden oder durchzuführen. Denn decoderseitig erwartet der Dekodierer eine Kodierung des Vorzeichenbits eines Transformationskoeffizienten ohnehin nur dann, wenn er das erste Mal signifikant wird, nämlich unmittelbar nach Erhalt des entsprechenden Datenbits dieses Betragskoeffizienten, so dass in diesem Fall in dem Datenwort 244 die entsprechenden Bits 230 und 234 unbeachtlich sind. Die durch die Einheit 208 ausgegeben Datenbits und Kontext-Indizes 230, 234 sind anders ausgedrückt nur dann relevant, wenn das Datenbit 232, das durch die Betragsvorkodiereinheit 202 ausgegeben wird, signifikant bzw. gesetzt ist. Die Verbindung 294 zwischen dem Ausgang des Multiplexers 204 und der Vorkodiereinheit 208 kann allerdings auch fehlen, in welchem Fall die Werte, die das Datenbit 230 bzw. der Kontext-Index 234 annehmen, für die nachfolgende Überarbeitung allerdings unbeachtlich ist.

Jedenfalls führt die Vorzeichenbitvorkodiereinheit 208 ein sogenanntes Vorzeichenkodier- bzw. SC- (SC = sign coding) Schema durch, wonach das Datenbit 230 den Wert des Vorzeichens zu dem durch das Multiplexersignal angezeigten Transformationskoeffizienten und der zugehörige Kontext-Index 234 auf einen Kontext eingestellt wird, welcher von einer logischen Verknüpfung der Signifikanzen und Vorzeichen der Nachbar-Koeffizienten abhängt, und zwar gemäß dem JPEG2000-Standard, der hier ja exemplarisch adressiert wird, lediglich die Nachbar-Koeffizienten in Spalten- und Zeilenrichtung. Zeigt beispielsweise das Multiplexersignal auf das Betragsbit 252_{3,3}, so ermittelt die Vorkodiereinheit 208 das Datenbit 230 aus dem Vorzeichenbit 250_{4,3} und den hierzu benachbarten Vorzeichenbits 250_{3,3}, 250_{5,3}, 250_{4,2} und 250_{4,4} unter Berücksichtigung, dass für den Dekodierer noch nicht alle Vorzeichenbits bekannt sind, was hier durch Auswertung der ersten Steuerbits der Nachbarbits berücksichtigt wird, nämlich von 274_{3,3} und 274_{4,2}. Dementsprechend ist der Multiplexer 210 eingangsseitig mit Registerzellen innerhalb des mit der gestrichelten Linie 294 markierten Bereichs gekoppelt, während der Multiplexer 212 eingangsseitig mit einem Teil der Registerzellen innerhalb des Bereichs 290 gekoppelt ist, um jeweils einen Teil dieser Registerzellen abhängig von dem Multiplexersignal von dem Koeffizientenwähler 222 mit der Vorzeichenbitvorkodierungseinheit 208 zu koppeln.

Die Steuerbitsteuerung 224 setzt in jedem Verarbeitungszyklus der Vorkodiereinheiten 202 und 208 die Steuerbits 240 und 242, die die nachfolgende arithmetische Kodierungseinrichtung 112 (Fig. 3) beispielsweise darüber informieren sollen, ob der Bypass-Modus für den jeweiligen Transformationskoeffizienten des Datenworts 244 aktiv sein soll, und ob der aktuelle Coding-Pass zu Ende ist. Genauer ausgedrückt, setzt die Steuerbitsteuerung 224 das Pass-Ende-Bit 242 in dem Fall, dass das aktuelle zu modellierende Tupel die letzten Betragsbits in der aktuellen Betragsbitebene beinhaltet, z.B. die Betragsbits uᵢ, vᵢ, wᵢ und xᵢ in der aktuellen Bitebene i in dem Beispiel von Fig. 2. Das Bypass-Modus-Bit 240 stellt die Steuerbitsteuerung 224 beispielsweise in Abhängigkeit von der Tiefe der aktuellen Betragsbitebene ein, so dass beispielsweise nach der vierten kodierten Bitebene das Bit 240 den Bypass-Modus anzeigt, was anzeigt, dass ab diesem Zeitpunkt die Pass-1-Daten in Rohform bzw. unkomprimiert in den Datenstrom am Ausgang der arithmetischen Kodiereinrichtung 112 eingebracht werden sollen.

Schließlich sei noch bemerkt, dass der Zwischenspeicher 110₁ in dem Fall, dass er ausgebildet ist, um Datenwörter 244 abhängig von dem Gültigkeitsbit 246 zwischenzuspeichern oder zu verwerfen, insbesondere so ausgebildet ist, dass der Zwischenspeicher 210₁ das Datenwort 244 in dem Fall eines gesetzten Pass-Ende-Bits 242 aber auch dann zwischenspeichert, wenn das entsprechende Gültigkeitsbit 246 nicht gesetzt ist. Verschiedene Maßnahmen können in diesem Fall dafür vorgesehen sein, dass das Datenwort das eigentliche ungesetzte Gültigkeitsbit 246 widerspiegelt, wie z.B. das kodieren des Restes der Datenwortes 244 außer dem Pass-Ende-Bit zu einem ansonsten nicht gültigen, da mit Pass 1 zugehörigen Betragsbit nicht vorkommenden Zustand.

Wie bereits erwähnt, wird der Taktzähler 220 nach jedem Schiebevorgang auf die Vorhersage vorinitialisiert, wie viele Koeffizienten in einer Spalte moduliert werden bzw. zu modellieren sind. Da diese Vorhersage bereits eine Spalte vor der aktuell zu modellierenden Spalte ausgeführt wird, liegt das Ergebnis für den Taktzähler 22 bereits beim Schiebevorgang selbst vor. Ist das Ergebnis bzw. die Vorinitialisierung 0 oder 1, kann mit dem nächsten Takt sofort der nächste Schiebevorgang der Schieberegistereinheit 106 ausgelöst werden, was der Taktzähler 220 entsprechend veranlasst. Bei größeren vorinitialisierten Werten verzögert der Taktzähler 220 entsprechend die Ausgabe des Schiebeimpulses 296 an die Schieberegistereinheit 106. Wie es im Folgenden ferner erwähnt werden wird, berücksichtigt der Taktzähler 220 dabei ferner, ob die parallele Verarbeitung durch die Bitmodelliereinheiten 108₂ bzw. 108₃ weit genug fortgeschritten ist. Das Vorhersageergebnis bezüglich der Anzahl zugehöriger Betragsbits wird, wie im Vorhergehenden erwähnt, mittels logischer Verknüpfung aus dem 4-Bit-Vektor für das Register 218 und der Signifikanzstatusvariablen gebildet.

Obwohl im Vorhergehenden bereits angedeutet wird noch einmal hervorgehoben, wie die Aktualisierung der ersten Statusbits über den Demultiplexer 214 verläuft. Wie bereits erwähnt zeigen die ersten Statusbits 274 an, ob ein betreffender Transformationskoeffizient bereits signifikant ist oder nicht, bezogen auf die aktuelle Bitebene. Eine Aktualisierung kann also lediglich einen Übergang von nichtsignifikant auf signifikant bedeuten. Die Kopplung des Datenbits 232 über den Demultiplexer 214 mit der entsprechenden Registerzelle innerhalb des Bereiches 286 des Teils 106₃ der Schieberegistereinheit 106 ist deshalb vorzugsweise derart ausgebildet, dass die Rückkopplung zu einer Aktualisierung des augenblicklichen Registerzellenzustands des dem Datenbit 232 entsprechenden ersten Statusbits mit einem Wert führt, der einer logischen ODER-Verknüpfung des augenblicklichen Zustands mit dem Datenbit 232 entspricht. Zudem sollten entsprechende Vorkehrungen getroffen werden, so dass das Datenbit 232 0 ist, wenn das Gültigkeitsbits 246 nicht gesetzt ist. Anders ausgedrückt ist der Demultiplexer 214 ausgangsseitig mit den Registerzellen innerhalb des Bereiches 286 gekoppelt und ausgebildet, um abhängig von dem Multiplexersignal von dem Koeffizientenwähler 222 den Datenbitausgang der Vorkodiereinheit 102 auf die vorbeschriebene ODER-Verknüpfungsweise mit der entsprechenden erstes-Statusbit-Registerzelle des durch das Multiplexersignal angezeigten Transformationskoeffizienten zu koppeln.

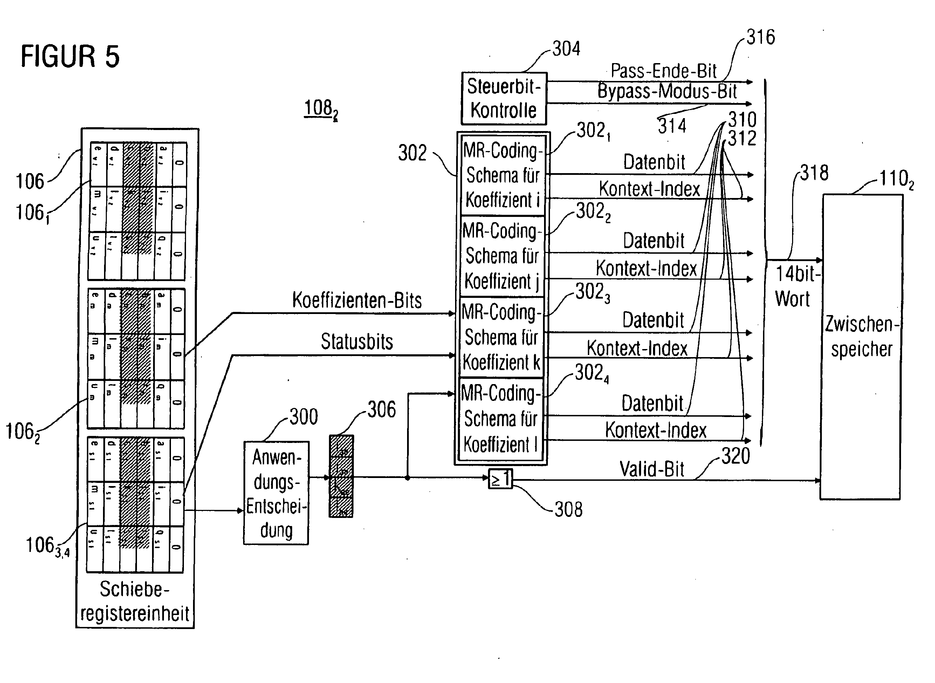

Nachdem im Vorhergehenden die Funktionsweise der für den ersten Kodierpass zugständigen Bitmodelliereinheit 108₁ beschrieben worden ist, wird im Folgenden die Funktionsweise der für den zweiten Kodierpass zuständigen Bitmodelliereinheit 108₂ beschrieben, wozu auf Fig. 5 Bezug genommen wird. Im Unterschied zu dem ersten Kodierdurchlauf bzw. Pass 1 ist der zweite Kodierdurchlauf bzw. Pass 2 für Betragsbits zuständig, die zu bereits signifikanten Transformationskoeffizienten gehören. Der zweite Kodierdurchlauf wird gemäß dem JPEG2000-Kodierschema auch Betragsverfeinerungsdurchlauf bzw. Magnitude Refinement Pass genannt, wobei derselbe für Betragsbits relevant ist, die zu Koeffizienten gehören, die bereits vor jeglichem Kodierdurchlauf der aktuellen Betragsbitebene bereits signifikant sind aber eben nicht erst durch den ersten Pass signifikant werden. Das bedeutet, dass die Entscheidung über die Zugehörigkeit eines Betragsbits zu dem zweiten Kodierdurchlauf auf der Grundlage der Statusbits in dem Teil 106₃ der Schieberegistereinheit 106 getroffen werden sollte, der noch nicht durch die Rückkopplung über den Demultiplexer 214 innerhalb des Speichers 286 aktualisiert worden ist, d.h. den ersten Statusbits in Registerzellen rechts hiervon aus der Perspektive von Fig. 8. Umgekehrt werden aber Kontexte der zu dem zweiten Pass gehörigen Betragsbits, wie im Folgenden noch detaillierter beschrieben, auf der Grundlage der aktualisierten ersten Statusbits ermittelt, weshalb die Bitmodelliereinheit 108₂ ebenso wie die im Anschluss daran beschriebene Bitmodelliereinheit 108₃ die Modellierung bezüglich Betragsbits vornehmen, die von den aktuell modellierten Betragsbits der Bitmodelliereinheit 108₁ in Einheiten der Schieberegisterränge ausreichend zeitlich zurückliegen. In dem vorliegend beschrieben exemplarischen Fall wird exemplarisch von einem festen Versatz von zwei Schiebeimpulsen ausgegangen, obwohl, wie es im Anschluss noch näher ausgeführt wird, auch eine variable Gestaltung dieses Versatzes unter Einhaltung eines Mindestabstandes, wie z.B. den zwei Schieberegisterrängen, vorgesehen sein kann.

Fig. 5 zeigt den Aufbau der Bitmodelliereinheit 108₂ gemäß einem Ausführungsbeispiel der vorliegenden Erfindung. Analog zur Fig. 4 ist sie wieder zusammen mit der Schieberegistereinheit 106 und dem zugehörigen Zwischenspeicher 110₂ gezeigt. Die Bitmodelliereinheit 108₂ umfasst einen Anwendungsentscheider 300, einen Vorkodierer 302, eine Steuerbitsteuerung 304, ein 4-Bit-Register 306 und einen Summenschwellwertentscheider 308. Der Anwendungsentscheider 300 ist mit dem Teil 106₃ der Schieberegistereinheit 106 eingangsseitig gekoppelt und ausgangsseitig mit dem 4-Bit-Register 306. Sowohl ein Eingang des Vorkodierers 302 als auch ein Eingang des Summenschwellwertentscheiders 308 sind mit dem Register 306 gekoppelt. Eingangsseitig ist der Vorkodierer 302 zudem mit Teilen 106₂, 106₃ und 106₄ der Schieberegistereinheit 106 gekoppelt. Intern umfasst der Vorkodierer 302 vier zueinander entsprechend ausgeführte Betragsbitvorkodiereinheiten 302₁ bis 302₄, eine für jedes Betragsbit des aktuellen Tupels, die auch in Fig. 5 schraffiert versinnbildlicht sind. Jede der Vorkodiereinheiten 302₁ bis 302₄ umfasst einen Ausgang 310 für ein Datenbit und einen 2-Bit-Ausgang 312 für einen Kontext-Index. Die Steuerbitsteuerung 304 umfasst einen Ausgang 314 für ein Pass-Ende-Bit und einen Ausgang 316 für ein Bypass-Modus-Bit, wobei die Ausgänge 310 bis 316 zusammen einen 14-Bit-Ausgang für ein 14-Bit-Wort 318 definieren, der mit einem Eingang des Zwischenspeichers 110₂ gekoppelt ist. Auch ein Ausgang des Summenschwellwertentscheiders 308 ist mit einem weiteren Eingang des Zwischenspeichers 110₂ gekoppelt, um ein Gültigkeitsbit 320 an den Zwischenspeicher 110₂ auszugeben.

Nachdem im Vorhergehenden der Aufbau der Bitmodelliereinheit 108₂ beschrieben worden ist, wird im Folgenden ihre Funktionsweise beschrieben. Der Anwendungsentscheider 300 ist ausgebildet, um auf Basis seiner Eingangsinformationen in dem Register 306 pro aktuell zu modellierendem Betragsbit ein Informationsbit iₐₑ, jₐₑ, kₐₑ und lₐₑ zu bilden, die anzeigen, ob das jeweilige Betragsbit zu dem Pass 2 gehört oder nicht, um dasselbe um eine geeignete Anzahl von Schiebeimpulsen der Schieberegistereinheit verzögert in das Register 306 zu schreiben. Die Verzögerung rührt daher, dass eingangsseitig der Vorkodierer 102 mit Registerzellen des Betragsbitteils 106₂ der Schieberegistereinheit 106 gekoppelt ist, die gegenüber den Registerpositionen der Betragsbits, zu denen der Anwendungsentscheider 300 aktuell die ersten Steuerbits auswertet, hier exemplarisch um drei Schieberänge nachgeordnet ist, wobei erstere Registerpositionen innerhalb des Teils 106₂ mit einer Strich-Punkt-Linie 322 markiert sind. Insbesondere ist nun eingangsseitig die Vorkodiereinheit 302₁ mit der Registerzelle 252_{1,2} und innerhalb des Registers 306 mit dem Eintrag iₐₑ gekoppelt, die Vorkodiereinheit 302₂ mit der Registerzelle 252_{1,3} und dem Bit jₐₑ des Registers 306 usw. Jede der Vorkodiereinheiten 302₁ bis 302₄ ist somit für einen unterschiedlichen der Betragsbits in der aktuell zu modellierenden 4-er-Spalte 322 zuständig.

Jede Vorkodiereinheit 302₁ bis 302₄ stellt ihr Datenbit gemäß Ihrem Betragsbit aus den Zellen 322 ein. Den Kontextindex bestimmen sie abhängig von den aktualisierten Signifikanzen der Nachbarkoeffizienten, wozu der Vorkodierer 302 mit den Registerzellen des Teils 106₃ der Schieberegistereinheit 106 gekoppelt ist, der in Fig. 8 mit einer Strich-Punkt-Linie 324 gekennzeichnet ist. Insbesondere ist beispielsweise die Vorkodiereinheit 302₁ mit den Registerzellen 274_{1,1} bis 274_{3,1}, 274_{1,3} bis 274_{3,3}, 274_{1,2} und 274_{3,2} gekoppelt, die somit Koeffizienten betreffen, die dasjenige des Betragsbits 252_{1,2} umgeben. Insbesondere legt jede Kodiereinheit 302₁ bis 302₄ ihren Kontextindex 312 durch Bildung aus einer logischen Verknüpfung der ersten Steuerbits 274 dieser Nachbarkoeffizienten fest. Sollte dabei allerdings der zugehörige Eintrag in dem Register 306 der jeweiligen Vorkodiereinheit 302₁ bis 302₄ anzeigen, dass ihr jeweiliges Betragsbit gar nicht dem Pass 2 angehört, so setzt sie die Kontextindexbits 312 auf eine Bitkombination, die keinem sinnvollen Kontextindex entspricht und somit aus sich allein heraus erkennen lässt, dass das entsprechend zugehörige Datenbit 310 ungültig ist.

Zusätzlich ist der Vorkodierer 302 mit den Registerzellen 280 aus dem Teil 106₄ der Schieberegistereinheit gekoppelt, insbesondere jede Vorkodiereinheit 302₁ bis 302₄ mit der entsprechenden Registerzelle für das dem jeweiligen Betragsbit zugeordnete zweite Statusbit. Dabei sind die Vorkodiereinheiten 302₁ bis 302₄ so ausgelegt, dass die Kontextindizes 312, die sie ausgeben, nicht nur von der soeben beschriebenen logischen Verknüpfung, sondern ferner auch von dem jeweiligen zweiten Statusbit abhängen, d.h. also davon, ob der betreffende Transformationskoeffizient bereits ein Betragsbit in den vorhergehenden signifikanteren Betragsbitebenen besaß, dass den zweiten Kodierdurchlauf bzw. Pass 2 durchlief oder nicht. Die Kopplung des Vorkodierers 302 mit den Registerzellen des Teils 106₄ ist in Fig. 8 mit der Strich-Punkt-Linie 326 angedeutet.

Die Steuerbitsteuerung 304 stellt das Bypass-Modus-Bit 316 beispielsweise gleichartig ein wie im Vorhergehenden Bezug nehmend auf die Steuerung 224 beschrieben. Gleiches gilt für das Pass-Ende-Bit 314. Auch die Steuerbitsteuerung 304 setzt folglich die Steuerbits 314 und 316, um der nachfolgenden arithmetischen Kodiereinrichtung Informationen zu liefern, die anzeigen, ob der sogenannte Bypass-Modus aktiv sein soll, oder ob der aktuelle Coding-Pass zu Ende ist.

Wie bereits erwähnt, bilden die Bits 310-316 das Datenwort 318. Der Zwischenspeicher 310₂ ist nun beispielsweise ausgebildet, um das 14-Bit-Wort 318 nur dann in den Zwischenspeicher aufzunehmen, wenn das Gültigkeitsbit 320 gesetzt ist, es sei denn, das Pass-Ende-Bit 314 ist gesetzt, in welchem Fall das Datenwort 318 auf jeden Fall in den Zwischenspeicher 310₂ eingespeichert wird. Die Zusammenfassung von Gültigkeitsbit und 14-Bit-Wort 318 zu einem größeren Datenwort mit Einspeicherung auf jeden Fall ist natürlich alternativ ebenfalls möglich, wie es bereits Bezug nehmend auf Fig. 4 beschrieben worden war.

Der Summenschwellwertentscheider 308 summiert die Bits in dem Register 306 und überprüft, ob die Summe größer oder gleich 1 ist, um das Gültigkeitsbit 320 entsprechend dem Überprüfungsergebnis einzustellen, und um auf diese Weise das Gültigkeitsbit zu setzen, wenn zumindest einer der aktuell zu modifizierenden Betragsbits in dem aktuellen Tupel dem Pass 2 angehört.

Die Bitmodelliereinheit 108₂ ist folglich in der Lage, die dem Pass 2 zugehörigen Betragsbits innerhalb eines aktuellen Tupels 322 in einem Verarbeitungszyklus in ein Datenwort 318 vorzukodieren. Wie viele der Paare von Datenbit und Kontextindex in dem 14-Bit-Datenwort 318 tatsächlich gültig sind bzw. in den zu kodierenden Datenstrom am Ausgang des arithmetischen Kodierers 124 (Fig. 3) einzubringen sind, geht aus diesen Paaren selbst hervor, indem dieselben in dem negativen Fall eine spezielle Bitkombination aufweisen, die keine gültige Kombination aus Datenbit und Kontextindex bzw. kein gültiger Kontext ist. Insofern benötigt die Bitmodelliereinheit 108₂ auch keine Schiebeimpulsausgabefähigkeit, da sie mindestens so schnell ist wie die beschriebene Bitmodelliereinheit 108₁, die ja zumindest einen Verarbeitungszyklus pro zum Pass 1 gehörigem Betragsbit benötigt.

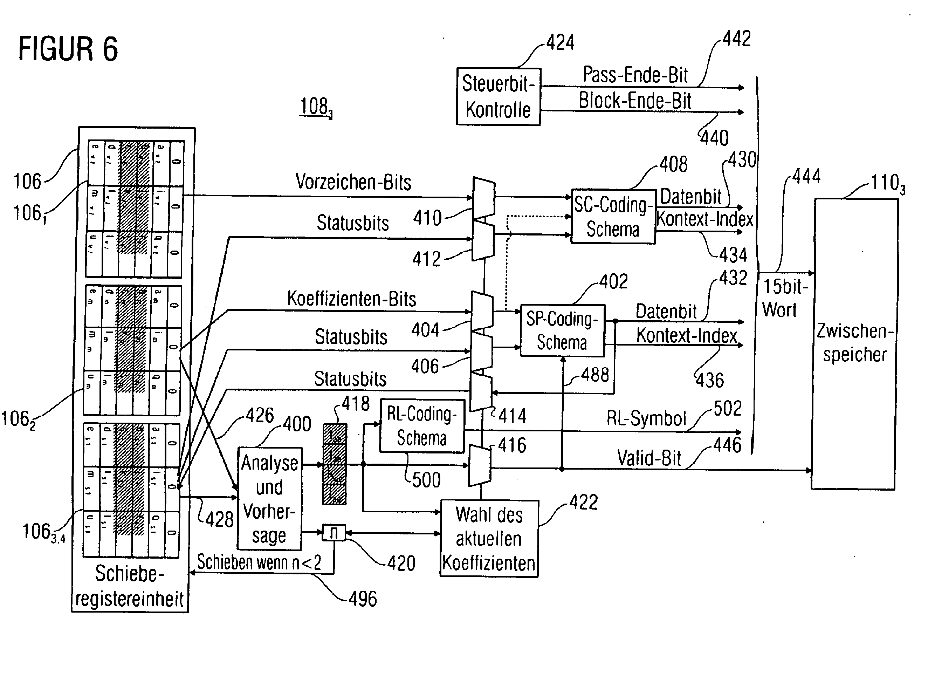

Im Folgenden wird Aufbau und Funktionsweise der Bitmodelliereinheit 108₃ für den dritten Kodierpass beschrieben. Dabei wird Bezug auf Fig. 6 genommen. Der Aufbau ist im Hinblick auf die Blöcke und deren Kopplung untereinander ähnlich zu dem Fall der Bitmodelliereinheit 108₁ von Fig. 4. Zur Vermeidung unnötiger Wiederholungen sind deshalb in Fig. 6 Elemente, die grundsätzlich gleiche Aufgaben übernehmen wie Elemente aus Fig. 4 mit Bezugszeichen versehen, die sich von denjenigen aus Fig. 4 lediglich um die erste Ziffer bzw. die Hunderterstelle unterscheiden, und zwar so, dass sie eine Vier anstelle einer Zwei aufweisen. Insbesondere sind alle Elemente aus Fig. 4 auch in Fig. 6 dargestellt, mit dem Unterschied, dass es sich bei dem in Fig. 6 gezeigten Zwischenspeicher natürlich um den Zwischenspeicher 110₃ handelt, mit dem Unterschied, dass die Steuerbitkontrolle neben dem Pass-Ende-Bit 442 ein Block-Ende-Bit 440 ausgibt und kein Bypass-Ende-Bit, und mit dem Unterschied, dass die Vorzeichenbitvorkodiereinheit 408 keine Kopplung mit der Steuerbitkontrolle 424 aufweist. Unterschiede in Funktionalität und genauer Verschaltung mit der Schieberegistereinheit 106 der einander entsprechenden Elemente in Fig. 4 und 6 gehen aus der nachfolgenden Beschreibung hervor, so dass Funktionalitätsbeschreibungen, die im Folgenden erläutert werden, entsprechende Funktionalitätsbeschreibungen bezüglich der entsprechenden Elemente Bezug nehmend auf Fig. 4 insofern ersetzen sollen. Im Übrigen wird bezüglich Funktionalität und Verschaltung auf die Beschreibung von Fig. 4 verwiesen.

Zusätzlich zu den vorerwähnten Elementen umfasst die Bitmodelliereinheit 103₃ eine Lauflängenkodiereinheit 500, die einen Eingang aufweist, der mit dem Register 418 gekoppelt ist, sowie einen Eingang, der mit einem weiteren Ausgang der Analyse/Vorhersageeinheit 400 gekoppelt ist. Ein Ausgang der Lauflängenkodiereinheit 500 ist dazu vorgesehen, ein Lauflängensymbol 502 mit drei Bits auszugeben, um zusammen mit den anderen Ausgabebits 430-436 und 440, 442 das in den Zwischenspeicher 110₃ eingehende Datenwort 444 zu bilden, das somit ein 15-Bit-Datenwort 444 ist.

Der dritte Kodierdurchlauf, für den die Bitmodelliereinheit 108₃ zuständig ist, kommt zum Tragen, wenn der zu modellierende Koeffizient für die aktuelle Bitebene noch insignifikant ist, und nicht von dem ersten Durchlauf erfasst wurde. Er wird somit auch als "clean-up pass" bezeichnet. Die Funktionsweise des dritten Kodierdurchlaufes ähnelt hinsichtlich der Kontextbildung und Vorkodierung dem ersten Durchlauf, ist aber um eine sogenannte Lauflängen- bzw. RL-(RL = run length = Lauflänge) Primitive erweitert. Anders ausgedrückt ist der dritte Kodierdurchlauf für die restlichen Betragsbits zuständig, die weder dem ersten noch dem zweiten Kodierdurchlauf angehören, wobei die Kodierung der Pass-3-Betragsbits in der aktuellen 4-er-Spalte wie in dem Fall von Pass 1 erfolgt, mit der Ausnahme, dass in dem Fall, dass alle Betragsbits in der aktuellen 4-er-Spalte einem noch nicht signifikanten Transformationskoeffizienten zugeordnet sind und lediglich insignifikante Nachbarkoeffizienten aufweisen, in welchem Fall der Lauflängenmodus einsetzt, der von oben bis unten den Lauf von insignifikant bleibenden Betragsbits in dem aktuellen Tupel angibt und somit lediglich unterbrochen wird, falls einer der Betragsbits der aktuellen 4-er-Spalte in der aktuellen Bitebene signifikant wird bzw. einen Betragsbitwert von 1 aufweist, von wo an die darauf folgenden Betragsbits in dieser 4-er-Spalte wie in dem Fall von Pass 1 weiterkodiert werden und das Vorzeichen des die RL-Primitive unterbrechenden Koeffizienten kodiert wird.

Nach diesem kurzen Überblick über den Pass 3 wird wieder in Zusammenschau der Figuren 6 und 8 die Funktionsweise der Einheit 108₃ erläutert. Da der Pass 3 definitionsgemäß der letzte unter den sequentiellen Passes bzw. Durchläufen ist, beziehen sich die Signifikanzüberprüfungen jeweils auf die bereits durch die Bitmodelliereinheit 108₁ aktualisierten ersten Statusbits, d.h. die ersten Statusbits links des Bereiches 286 in Fig. 8. Die Überprüfung der Nachbarkoeffizientensignifikanzen in Betracht ziehend, sollte der Bereich der aktuellen 4-er-Spalte zumindest zwei Schieberegisterränge hinter dem aktuellen Bereich 282 der Bitmodelliereinheit 108₁ liegen. Gemäß dem Ausführungsbeispiel von Fig. 6 liegt der aktuelle Bereich genau zwei Schieberegisterringe hinter diesem Bereich. Allerdings kann es, wie im Vorhergehenden Bezug nehmend auf den Pass 2 erläutert, auch vorgesehen sein, dass der Aufbau der Schieberegistereinheit gegenüber Fig. 8 modifiziert wird, um auch einen variablen Versatz zu ermöglichen, so dass die Verarbeitungsgeschwindigkeit der beiden Einheiten 108₁ und 108₃ entkoppelt ist.

Im Folgenden soll Bezug auf die Figuren 6 und 8 in Zusammenschau genommen werden, um die Funktionsweise der Bitmodelliereinheit 108₃ zu veranschaulichen. Die Analyse/Vorhersageeinheit 400 überprüft wieder vorab das 4-er-Tuple von Betragsbits 252_{2,2} bis 252_{2,5}, das als nächstes zur Modellierung in der Einheit 108₃ vorgesehen ist, welche derselben dem Pass 3 angehören, d.h. welche nicht dem Pass 1 oder dem Pass 2 angehören, und ist dazu über die Kopplung 428 mit Registerzellen des Teils 106₃ der Schieberegistereinheit 106 gekoppelt, wobei diese Schieberegisterzellen in Fig. 8 mit der Strich-3-Punkt-Linie 504 umrahmt sind. Unter diesen ersten Statusbits in dem Bereich 504 bedürfen die Statusbits innerhalb des Bereiches 286 einer Aktualisierung bzw. einer Berücksichtigung, dass dieselben gegebenenfalls während des ersten Durchlaufs signifikant werden, wozu die Analyse/Vorhersageeinheit auch das vorherige, bezüglich des vorherigen Schiebezyklus erhaltene Vorhersageergebnis der Analyse/Vorhersageeinheit 200 der Bitmodelliereinheit 108₁ verwendet sowie die Betragsbits in dem zugehörigen Bereich 292, wozu die Analyse/Vorhersageeinheit 400 über die Kopplung 446 ebenfalls mit den Registerzellen in dem Bereich 292 gekoppelt ist. Zudem verwendet die Analyse/Vorhersageeinheit 400 analog zu dem Fall von Fig. 4 ihr letztes Vorhersageergebnis für die Vorhersage, welches sich für die aktuelle Vorhersage natürlich auf die Betragsbits in dem aktuell zu modellierenden Bereich bezieht, um nämlich die Aktualisierungen der Signifikanzen in den Positionen 274_{2,2} bis 274_{2,5} aufgrund des eigenen Kodierdurchlaufes, d.h. des Kodierdurchlaufes 3, zu berücksichtigen, der erst im laufenden Schiebezyklus erfolgt, wozu die Analyse/Vorhersageeinheit 400 ebenfalls mit weiteren Betragsbitregisterzellen innerhalb des Bereiches 106₂ der Schieberegister 106 gekoppelt ist, nämlich denen der aktuellen 4-er-Spalte innerhalb des mit der Strich-3-Punkt-Linie 506 gekennzeichneten Bereiches. Das Vorhersageergebnis gibt die Analyse/Vorhersageeinheit 400 wie in dem Fall von Fig. 4 in das Register 418 für den nächsten Schiebezyklus aus.

Die Lauflängenkodiereinheit 500 wertet bei Beginn des Schiebezyklus, bei dem also die bezüglich ihrer Pass3-Zugehörigkeit vorhergesagten Betragsbits in dem Teil 106₂ der Schieberegistereinheit 106 vorgeschoben worden sind, um das aktuelle Betragsbittupel darzustellen, zusammen mit den aktuellen Betragsbits, auf die sich die Vorhersage in dem Register 418 bezieht und die sie gemäß dem Beispiel von Fig. 6 von der Analyse/Vorhersageeinheit 400 weitergeleitet bekommt, den 4-Bit-Vektor in dem Register 418 aus, um erstens festzustellen, ob die Lauflängenprimitive Anwendung finden soll, d.h. alle Betragsbits des aktuellen 4-er-Tupels dem dritten Kodierdurchlauf zugeordnet sind, und, falls dies der Fall ist, ob sie aufgrund eines signifikant werdenden Betragsbits unter denselben an irgendeiner Stelle unterbrochen wird, um abhängig von dieser Auswertung das Lauflängensymbol 502 einzustellen. Ab dem signifikant werdenden Betragsbit, d.h. alle Betragsbits nach dem signifikant werdenden bis unten, inklusive des signifikant werdenden, da für diesen ja noch das Vorzeichen in den kodierten Datenstrom zu kodieren ist, werden von dem Koeffizientenwähler 422 in ein entsprechendes Multiplexersignal umgewandelt, so dass die Kodiereinheiten 402 und 408 auf die oben beschriebene Weise für diese Betragsbits entsprechende Paare von Datenbit und Kontextbit 430-436 erzeugen. Wie bereits im Vorhergehenden erwähnt, benötigen die Vorkodiereinheiten 402 und 408 hierzu einen Verarbeitungszyklus pro Betragsbit. Es wird deshalb lediglich nur ein Datenwort 444 für eine 4-er-Spalte durch die Bitmodelliereinheit 108₃ in dem Lauflängenkodierfall nur dann erzeugt, solange sich nicht mehr als ein signifikant werdender Betragsbit unter den vier aktuellen Betragsbits befindet. Anderenfalls werden mehrere 15-Bit-Datenworte 444 erzeugt, wobei nur in dem ersten Datenwort 444 das Lauflängensymbol 502 anzeigt, dass die Lauflängenprimitive zur Anwendung kam, und ansonsten anzeigt, dass es unbeachtlich ist.

Obwohl der Pass 3 der letzte Durchlauf ist, wird das Betragsdatenbit 432 am Ausgang der Vorkodiereinheit 402 über den Demultiplexer 414 in den Teil 106₃ der Schieberegistereinheit 106 rückgekoppelt, und zwar abhängig von dem Multiplexersignal von dem Koeffizientenwähler 422 in die entsprechende Registerzelle innerhalb der 4-er-Spalte von Registerzellen 274_{2,2} bis 274_{2,5}. der Grund dafür besteht darin, dass beim nächsten Schiebevorgang, bei dem diese 4-er-Spalte in Fig. 8 um eine Position nach links verschoben wird, bezüglich der Signifikanzen aktualisiert sein soll. Ausgangsseitig ist der Demultiplexer 414 mit den Registerzellen 274_{2,2} bis 274_{2,5} gekoppelt. Eingangsseitig ist der Multiplexer 404 mit den Registerzellen innerhalb des Bereiches 506 gekoppelt. Der Multiplexer 406 ist eingangsseitig mit den Registerzellen innerhalb des Bereiches 508 gekoppelt, der die ersten Statusbits für einen Bereich beinhaltet, den die aktuelle 4-er-Spalte von Betragsbits 506 inklusive Nachbarkoeffizienten umgibt. Der Multiplexer 410 ist mit dem entsprechenden Bereich von Registerzellen innerhalb des Bereiches 106₁ der Schieberegistereinheit 106 gekoppelt, der in Fig. 8 mit 510 hervorgehoben ist. Der Multiplexer 412 ist eingangsseitig mit Registerzellen innerhalb des Bereiches 508 gekoppelt, und zwar beispielsweise den Registerzellen 274_{1,2} bis 274_{1,5} und 274_{2,1} bis 274_{2,4}. Auf die vorgeschriebene Weise sorgt folglich die Bitmodelliereinheit 108₃ dafür, dass eine Analyse der zu modellierenden Koeffizienten stattfindet, ob sie noch insignifikant sind, sowie eine Analyse der direkten Nachbar-Koeffizienten, ob sie schon signifikant sind, und zwar derart, dass die Analyse bereits eine Spalte vor der aktuell zu modellierenden Spalte stattfindet. Das Analyseergebnis wird wieder als 4-Bit-Vektor ausgegeben, und zwar in das Register 418, auf der Basis welchen Vektors die Entscheidung getroffen wird, ob die RL-Primitive auf die vier aktuellen Koeffizienten angewendet wird. Wenn die Bedingung erfüllt ist, was von der Lauflängenkodiereinheit 500 geprüft wird, wird natürlich über den Multiplexer 516 auch das Gültigkeitsbit gesetzt, da jedes Bit in dem Register 418 gesetzt ist, und die Kodiereinheit 500 führt das Lauflängenkodierschema aus, was die Festlegung des Symbols 502 beinhaltet, das repräsentiert, ob die RL-Primitive zur Anwendung kam und gegebenenfalls an welcher Position ein Koeffizient signifikant wird. Wenn mindestens ein Koeffizient in dem aktuellen Tupel signifikant wird, wird zudem durch die Vorkodiereinheit 408 für das den Lauf unterbrechende Betragsbit das zugehörige Vorzeichen kodiert (die Bits 432 und 436 sind in diesem Verarbeitungszyklus unbeachtlich). Für die auf das die RL-Primitive-unterbrechende Betragsbit folgenden Bitpositionen wird durch die Vorkodiereinheit 402 das bereits im Vorhergehenden beschriebene SP-Kodierschema für jeden folgenden Koeffizienten in der aktuellen Spalte ausgeführt, was die Festlegung eines Datenbits und eines passenden Kontextindex beinhaltet, welches mittels logischer Verknüpfungen der Signifikanzen der Nachbar-Koeffizienten gebildet wird. Zusätzlich wird für diese nachfolgenden Bitpositionen, wenn das Datenbit des SP-Kodierschemas bzw. das entsprechende Betragsbit an der jeweiligen Bitposition gesetzt ist, was über die Verbindung 494 überprüfbar ist, durch die Vorkodiereinheit 408 die Ausführung des SC-Schemas ausgeführt, was die Festlegung eines Datenbits und eines passenden Kontext-Index, welches mittels logischer Verknüpfungen der Signifikanzen und Vorzeichen der Nachbar-Koeffizienten gebildet wird, beinhaltet. Die Steuerbits 440 und 442 werden von der Steuerbitsteuerung 424 gesetzt, die der nachfolgenden arithmetischen Kodiereinrichtung mitteilen, ob der aktuelle Kodierdurchlauf bzw. der aktuelle Codeblock zu Ende sind. Letzteres trifft bei dem Beispiel von Fig. 2 beispielsweise bei dem Tupel uₙ, vₙ, wₙ, xₙ zu. Datenbits und Kontext-Indizes der SP- und SC-Schemata sowie dem Symbol 502 und der Steuerbits 440 und 424 werden zu dem 15-Bit-Datenwort 444 zusammengefasst, das in dem Zwischenspeicher 110₃ bei gesetztem Gültigkeitsbit und auf jeden Fall dann, wenn das Pass-Ende-Bit 442 gesetzt ist, eingespeichert wird.

Natürlich wird von der Analyse-Vorhersageeinheit 400 auch die Vorhersage getroffen, wie viele Koeffizienten in einer Spalte modelliert werden, wobei diese Vorhersage bereits eine Spalte vor der aktuell zu modellierenden Spalte ausgeführt wird, so dass das Ergebnis bereits beim Schiebevorgang vorliegt, wobei, falls das Ergebnis "0" oder "1" ist, mit dem nächsten Takt sofort der nächste Schiebevorgang folgen könnte, was der Taktzähler 426 der Schieberegistereinheit 106 mitteilt. Das Vorhersageergebnis wird mittels logischer Verknüpfung aus dem Vier-Bit-Vektor sowie der Signifikanzstatusvariablen gebildet, wie es im Vorhergehenden beschrieben worden ist, wobei in der Schieberegistereinheit 106 entsprechende Vorkehrungen getroffen sind, dass der Schiebevorgang tatsächlich nur dann durchgeführt wird, wenn beide Einheiten 108₁ und 108₃ ihren Schiebeimpuls an die Schieberegistereinheit 106 weitergeleitet haben, um sicherzustellen, dass nicht zu früh mit einem Schiebevorgang begonnen wird.

Nach der Beschreibung der drei Bitmodelliereinheiten 108₁ bis 108₃ wird kurz wieder auf Fig. 3 Bezug genommen, bevor mit der detaillierten Beschreibung des internen Aufbaus des Durchlaufentscheiders 122 gemäß einem Ausführungsbeispiel der vorliegenden Erfindung fortgefahren wird. Wie im Vorhergehenden beschrieben, arbeiten die drei Bitmodelliereinheiten 108₁ bis 108₃ weitestgehend unabhängig voneinander und vor allem parallel zueinander in einem gemeinsamen Scan mit einem leichten Versatz zueinander die Betragsbits der aktuellen Betragsbitebene ab. Die Datenworte werden jeweils in einem eigenen der Zwischenspeicher 110₁ bis 110₃ der Reihe nach abgelegt. Die Zwischenspeicher 110₁ bis 110₃ sind dabei so ausgeführt, dass die Reihenfolge der jeweiligen abgelegten Datenworte beim Auslesen erhalten bleibt. Dazu könnten die Zwischenspeicher 110₁ bis 110₃ beispielsweise als FIFO-Speicher (First-In-Fist-Out) ausgelegt sein. Andere Ausführungen sind natürlich ebenfalls möglich, wie z.B. Implementierungen als Ringspeicher, aber auch direkt adressierbare oder inhaltsadressierbare Speicher in dem Fall entsprechender Vorkehrungen zur geeigneten Auslesereihenfolge, wobei dementsprechend die Speicher nicht getrennt für jede Modelliereinheit vorhanden sein müssen.

Der Durchlaufentscheider 122 dekodiert nun die Datenworte in einer geeigneten Reihenfolge und wandelt sie um in entsprechende Steuersignale für den arithmetischen Kodierer 124. Insbesondere liest der Durchlaufentscheider 122 die Datenworte zunächst des ersten Durchlaufs aus, bis dieser beendet ist, was durch das Pass-Ende-Bit angezeigt wird, daraufhin die Datenworte des zweiten kodierten Durchlaufs aus dem Zwischenspeicher 110₂, bis dort das Pass-Ende-Bit gesetzt ist, und dann die Datenworte aus dem Zwischenspeicher 110₃... Dadurch wird die Kodierreihenfolge eingehalten, wie sie eigentlich der Dekodierer erwartet.

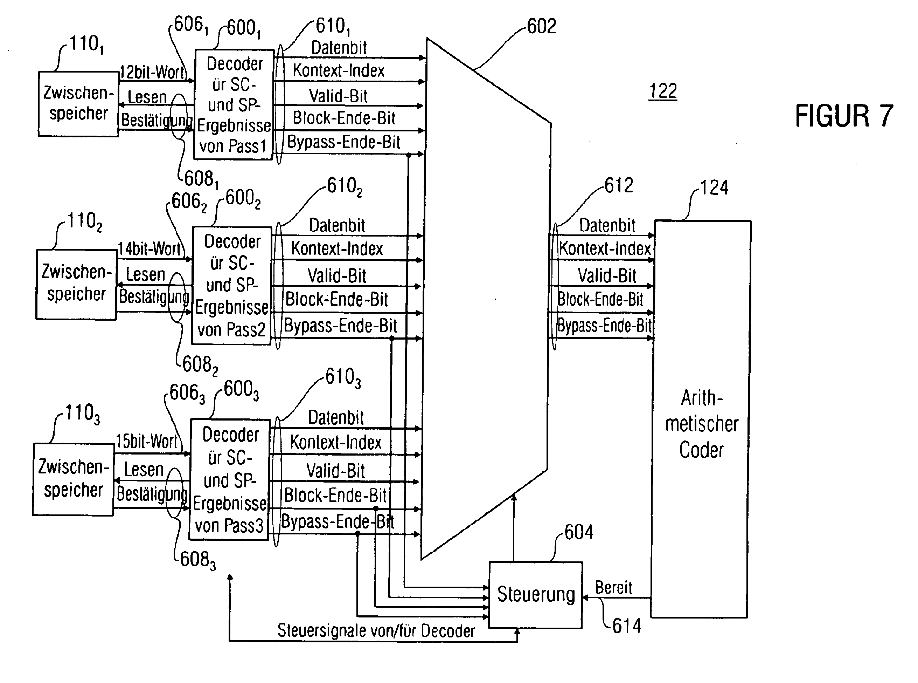

Fig. 7 zeigt den internen Aufbau des Durchlaufentscheiders 122 gemäß einem Ausführungsbeispiel der vorliegenden Erfindung in einem mit dem arithmetischen Kodierer 124 auf der einen und den Zwischenspeichern 110₁, 110₂ und 110₃ auf der anderen Seite gekoppelten Zustand. Insbesondere umfasst der Durchlaufentscheider 122 von Fig. 7 drei Datenwortdekodierer 600₁, 600₂ und 600₃, die zwischen einem jeweiligen der Zwischenspeicher 110₁ bis 110₃ auf der einen Seite und entsprechend der Eingänge eines Multiplexers 602 auf der anderen Seite geschaltet sind. Ferner umfasst der Durchlaufentscheider 122 eine Steuerung 604.

Zwischen jedem Paar von Zwischenspeichern 110₁ bis 110₃ und Datenwortdekodierer 600₁ bis 600₃ ist eine jeweilige Datenwortleitung 606₁, 606₂ bzw. 606₃ vorgesehen, um das nächste Datenwort aus dem jeweiligen Zwischenspeicher zu lesen. Anforderungs- und Bestätigungssignalleitungen 608₁ bis 608₂ und 608₃ sind ebenfalls zwischen diesen Paaren vorgesehen, um in einem Handshake-Verfahren die Datenworte auszulesen. Ausgangsseitig weist jeder Datenwortdekodierer 600₁ bis 600₃ fünf Signalverbindungen 610₁, 610₂ und 610₃ zu entsprechenden Eingängen des Multiplexers 602 auf. Die Signalverbindungen 610₁ bis 610₃ umfassen jeweils eine Datenbit-, Kontextindex-, Gültigkeitsbit-, Bypass-Modus-Bit- und Durchlauf-Ende-Bit-Verbindung. Lediglich die Bypass-Modus-Bit-Verbindung ist in dem Fall des Datenwortdekodierers 600₃ durch eine Block-Ende-Bit-Verbindung ersetzt. Eingangsseitig ist die Steuerung 604 mit jeweils dem Pass-Ende-Bit-Ausgängen der Datenwortdekodierer 600₁ bis 600₃ sowie mit dem Block-Ende-Bit-Ausgang des Datenwortdekodierers 600₃ gekoppelt. Die Steuerung umfasst ferner einen Ausgang, der mit einem Steuereingang des Multiplexers 602 gekoppelt ist. Zudem tauschen die Datenwortdekodierer 600₁ bis 600₃ Steuersignale mit der Steuerung 604 aus, die beispielsweise ebenfalls der Realisierung eines Handshaking-Verfahrens dienen können. Ausgangsseitig umfasst der Multiplexer 602 sechs Signalverbindungen 612 zu dem arithmetischen Kodierer 124, nämlich die vorerwähnten Signalverbindungen für Datenbit, Kontextindex, Gültigkeitsbit, Bypass-Modus-Bit, Pass-Ende-Bit und Block-Ende-Bit. Zudem ist der arithmetische Kodierer 124 über einen Rückkopplungspfad 614 mit der Steuerung 604 gekoppelt, um letzterer mitteilen zu können, ob er wieder aufnahmefähig ist, um weitere Daten auf den Signalverbindungen 612 zu verarbeiten.

Während des Betriebes lesen nun die Datenwortdekodierer 600₁ bis 600₃ nacheinander die Datenworte aus dem jeweiligen der drei Zwischenspeicher 110₁ bis 110₃ aus und dekodieren die Datenworte. Der Datenwortdekodierer 600₁ kodiert die 12-Bit-Datenworte jeweils zurück in einen oder zwei Datenbündel, um sie in einem oder zwei aufeinander folgenden Takten an den Multiplexer 602 über die Signalverbindungen 610₁ weiterzuleiten, nämlich ein Signalbündel mit dem Betragsdatenbit und dem zugehörigen Kontext-Index für die Koeffizientenbitmodellierung sowie einem weiteren Signalbühdel, wenn das Betragsdatenbit gesetzt ist, mit einem Datenbit, das dann das Vorzeichen anzeigt, und dem zugehörigen Kontext-Index. Ist das Datenbit gültig, setzt der Dekodierer 600₁ auch das Gültigkeitsbit. Das Bypass-Modus-Bit und das Pass-Ende-Bit auf den Signalleitungen 610₁ leitet der Dekodierer 600₁ unmittelbar aus dem 12-Bit-Datenwort her.

Der Dekodierer 600₂ verhält sich ähnlich. Auch er nimmt eine Dekodierung der Datenworte von dem Zwischenspeicher 110₂ zurück in Datenbits und Kontext-Indizes für die Koeffizienten-Modellierung von bis zu vier Koeffizienten vor, um so jedes 14-Bit-Datenwort in Form von einem bis zu vier aufeinanderfolgenden Signalbündeln auf den Signalleitungen 610₂ an den Multiplexer 602 weiterzuleiten. Der Datenwortdekodierer 600₃ verhält sich auf ähnliche Weise, indem derselbe die ankommenden 15-Bit-Datenworte aus dem Zwischenspeicher 110₃ zurück in Lauflängensymbole, Datenbits und Kontext-Indizes für die Koeffizienten-Modellierung sowie, wenn das Datenbit gesetzt ist, die Vorzeichenbit-Modellierung umwandelt und in einem bzw. zwei aufeinanderfolgenden Signalbündeln auf den Signalleitungen 610₃ an dem Multiplexer 602 weiterleitet. Kommt allerdings die RL-Primitve zum Tragen, was aus dem RL-Symbol hervorgeht, so erfolgt die Umwandlung durch den Datenwortdekodierer 600₃ in ein - in dem Fall der vollständigen Lauflänge bzw. keinem signifikant werdenden Betragsbit unter lauter Pass 3 Bits - bis vier - in dem Fall eines signifikant werdenden Betragsbits unter lauter Pass 3 Bits an der zweiten Position von Oben innerhalb des Tupels - Signalbündel. Die Steuerung 604 wertet die Pass-Ende-Bits aus, um nacheinander erstmal die Signalleitungen 610₁ mit den entsprechenden Signalleitungen der Signalleitungen 612 zu verbinden, daraufhin die Signalleitungen 610₂ und daraufhin wiederum die Signalleitungen 610₃. Auf diese Weise erhält der arithmetische Kodierer 124 mit jedem Datenbit und Kontext-Index auch eine Information darüber, ob der Bypass-Modus für den jeweiligen Koeffizienten zu verwenden ist, und ob der aktuelle Kodierdurchlauf bzw. Codeblock zu Ende ist. In dem erstgenannten Fall unterbricht der arithmetische Kodierer 124 nämlich seine arithmetische Intervallteilung und fügt das entsprechende Datenbit bei gesetztem Bypass-Modus-Bit im Klartext in den arithmetischen Datenstrom ein, und in dem zweiten Fall setzt der arithmetische Kodierer sein aktuelles Intervall wieder auf den vorbestimmten Wert zurück, ebenso wie Wahrscheinlichkeitsschätzwerte der einzelnen Kontexte in dem Fall, dass der arithmetische Kodierer adaptiv ausgeführt ist. Durch die oben beschriebenen Handshake-Verbindungen wird der Informationsfluss innerhalb des Durchlaufentscheiders 122 in Abhängigkeit davon gesteuert, ob die Zwischenspeicher 110₁ bis 110₃ Daten enthalten bzw. ob der arithmetische Kodierer bereit ist, Daten anzunehmen.

Der oben beschriebene Blockkodierer nach den Figuren 3-8 lässt sich in Hardware realisieren und stellt in diesem Fall einen Hardware-basierten JPEG2000-Blockkodierer dar, bei dem durch die oben veranschaulichte Parallelverarbeitung und die Durchlaufzugehörigkeitsvorhersage die Anzahl der benötigten Prozessschritte bei der Kontext-Modellierung reduziert ist. Je nach Kodierdurchlauf wurde entweder in einem Schritt ein Koeffizientenbit gleichzeitig mit seinem Vorzeichenbit modelliert oder in einem Schritt eine Spalte von bis zu vier Koeffizientenbits gleichzeitig modelliert oder in einem Schritt eine Spalte von bis zu vier Koeffizientenbits in einer sogenannten Lauflängenprimitive modelliert, wobei im selben Schritt der signifikant werdende Koeffizient zusammen mit seinem Vorzeichenbit modelliert wird.

Des Weiteren war eine Vorhersage vorgesehen, wie viele Koeffizienten in einer Spalte in einem Schritt modelliert werden können. Diese Maßnahmen bewirken bei einem getakteten Prozess bei gleicher Taktfrequenz die Kodierung eines Kodierdurchlaufes in weniger Zeit, da Wartezeiten auf Registersetzvorgänge entfallen, bis zu vier Koeffizienten gleichzeitig modelliert werden können, bis zu vier Modelliervorgänge in einem Schritt erfolgen können, bereits am Beginn des Modelliervorgangs einer Spalte bekannt ist, wie viele Koeffizienten in einem Schritt modelliert werden können, wodurch zeitaufwendige Prüffunktionen während der Modellierung entfallen.

Zudem ermöglichte die Bitextraktion eine Reduktion der mitzuprotokollierenden und zu aktualisierenden gesonderten Statusvariablen für jeden Koeffizienten eines Codeblocks, womit einerseits die benötigte Speichergröße reduziert werden kann und andererseits die Kodierung eines Kodierdurchlaufes beschleunigt werden kann, da zusätzliche Lese- und Schreibvorgänge entfallen.

Ein Vorteil des Blockkodierers von Figuren 3-8 besteht insbesondere darin, dass je nach Kodierdurchlauf bis zu vier in einem Streifen untereinander liegende Koeffizientenbits gleichzeitig modelliert wurden, um Informationsworte zu generieren, die gegebenenfalls sogar komprimierte Informationen für bis zu vier Bit-Kontext-Paare beinhalten können. Diese Informationsworte werden zwischengespeichert und durch geeignete Evaluierung in einem Decoder dem nachgeschalteten arithmetischen Kodierer in einer geeigneten Darstellung und in der korrekten Reihenfolge zugeführt auf die Art und Weise, wie es im Vorhergehenden beschrieben wurde. Durch obige Maßnahmen wurde die Koeffizientenbitmodellierung so verbessert, dass sie eine leichtere Hardwareimplementierung ermöglicht.

Wie im Vorhergehenden beschrieben enthält der Bitextraktor von einer Speichereinheit einen Vektor von Koeffizienten, um aus jedem Koeffizienten k des Vektors für die zu kodierende Bitebene m Informationen zu extrahieren, die das Betragsbit kₘ, das Vorzeichenbit k_{vz} und Statusbits kₛₜ aufweisen, wobei die Statusbits wiederum aus dem Bit bestehen, das anzeigt, ob der Koeffizient in der Bitebene m schon signifikant ist, wozu für alle Betragsbits oberhalb der aktuellen Ebene überprüft wird, ob ein Bit gesetzt ist. wobei, wenn mindestens ein Bit gesetzt ist, der Koeffizient in dieser Bitebene signifikant ist, und dem Bit, das anzeigt, ob das MR-Kodierschema zum ersten Mal oder bereits vorher schon Mal auf diesen Koeffizienten angewendet worden ist, wozu für alle Betragsbits oberhalb der aktuellen Bitebene überprüft wird, ob eines dieser Bits gesetzt ist, wobei, wenn mindestens zwei Bits gesetzt sind, dann das MR-Kodierschema für den Koeffizienten schon einmal angewendet worden ist. Durch diese Extraktion kann wie im Vorhergehen erwähnt auf gesonderte Statusvariablen für jeden Koeffizienten eines Kodierblocks verzichtet werden, da diese Informationen für jeden Streifen aufs Neue bestimmt werden und nur für die Dauer der Kodierung gehalten werden müssen, wodurch einerseits die benötigte Speichergröße reduziert und andererseits die Kodierung des Kodierdurchlaufes beschleunigt werden kann, da zusätzliche Lese- und Schreibvorgänge entfallen.

Eine Hardwareimplentierung gemäß den Figuren 3-8 lässt also erwarten, dass in einem getakteten Prozess bei gleicher Taktfrequenz die Kodierung eines Kodierdurchlaufes wesentlich schneller erfolgen kann, da wie oben erwähnt Wartezeiten auf Register-Setzvorgänge entfallen, bis zu vier Koeffizienten gleichzeitig modelliert werden können, bis zu fünf Modelliervorgänge in einem Schritt erfolgen können, bereits am Beginn des Modelliervorganges einer Spalte bekannt ist, wie viel Koeffizienten in einem Schritt modelliert werden können, wodurch zeitaufwendige Prüffunktionen während der Modellierung entfallen, und zusätzliche Lese- und Schreibvorgänge für die Statusvariablen entfallen. Diese Vorteile sind für einen Komprimierer, wie er in Fig. 1 gezeigt ist, und bei dem der Kodierer von Fig. 3 eingesetzt werden kann, von hohem Wert. Denn in mehreren Untersuchungen wurde bereits festgestellt, dass der Blockkodierer und vor allem die Koeffizientenbitmodellierung die aufwendigste Operation innerhalb des JPEG2000-Kodierprozesses darstellt. In dem bereits in der Beschreibungseinleitung der vorliegenden Anmeldung genannten Artikel von Lian et al. wird beispielsweise ein Untersuchungsergebnis vorgestellt, wonach fast 52% der Rechenleistung eines Computers für die Summe aller drei Kodierdurchläufe benötigt wird. Eine Beschleunigung des Koeffizientenbitmodelliervorganges wirkt sich somit signifikant für den gesamten Kodierprozess aus. Bei Implementierungen, bei denen eine höhere Kodiergeschwindigkeit durch Mehrfachinstantiierung des Blockkodierers erreicht wird, können somit Resourcen eingespart werden, damit dem Ausführungsbeispiel nach Fig. 3-8 weniger Kodiereinheiten zur Erlangung der gleichen Kodiergeschwindigkeit notwendig sind.

Soeben erwähnte Implementierungen lassen sich beispielsweise auf FPGAs (Field Programmable Logic Array = Vorortprogrammierbare Logik Arrays) aber auch als integrierte Schaltung bzw. ASIC (ASIC = Application Specific Integrated Circuit = anwendungsspezifische integrierte Schaltung) realisieren. Für ein FPGA wurde bereits eine Hardwareimplementierung umgesetzt, wozu die entsprechende Funktionseinheiten durch VHDL beschrieben und mit geeigneten Werkzeugen übersetzt und für die Zielplattform synthetisiert wurden.

Verschiedene Modifikationen können an den Ausführungsbeispielen nach Fig. 3-8 vorgenommen werden. Beispielsweise kann das Schieberegister 106 anders ausgeführt sein. Insbesondere kann es beispielsweise mehr Schieberegisterränge aufweisen, d.h. in Fig. 8 also nach links hin ausgeweitet sein. Ferner kann der Versatz zwischen den aktuellen 4-er-Vektoren 292, 322 und 506 auch größer sein als die zwei Schieberegisterränge, wie es in Fig. 8 gezeigt ist. Zudem ist es möglich, dass der Versatz variabel ist. Hierzu ist beispielsweise die Schieberegistereinheit nicht einheitlich ausgeführt, wie es in Fig. 8 gezeigt ist, sondern als Zwei Schieberegister, eines für die Bitmodelliereinheit 108₁ und eine weitere für die Bitmodelliereinheiten 108₂ und 108₃, wobei zwischen denselben ein FIFO-Speicher angeordnet ist, um als variabler Puffer zwischen den Schieberegistern zu dienen.

Im Vorhergehenden wurde erwähnt, dass die Vorzeichenbitvorkodiereinheiten auf Basis der ersten Steuerbits feststellen, ob die jeweiligen Vorzeichenbits der Nachbarkoeffizienten dekodiererseitig bekannt sind oder nicht. Im Normalfall ist dann das erste Steuerbit des Transformationskoeffizienten, das oben an dem betreffenden aktuellen Koeffizienten angrenzt, als über den Demultiplexer 214 bzw. 414 aktualisiert anzusehen. Sollte das jedoch aufgrund von Signallaufzeitüberlegungen dazu führen, dass die Verarbeitungszyklen sich verzögern, so wäre es ebenfalls möglich, dass die Vorzeichenbitvorkodiereinheiten ein noch nicht aktualisiertes erstes Steuerbit des oberen nächsten Nachbar- koeffizienten mittels des entsprechenden Betragsbits dieses Nachbarkoeffizienten virtuell aktualisieren.

Im Vorhergehenden wurden auch zur Vereinfachung der Darstellung Randproblematiken beispielsweise am Rand der Bitebenen, am Ende und am Anfang eines Streifens usw. nicht weiter vertieft, um die vorhergehende Beschreibung nicht unnötig zu verkomplizieren. Nicht vorhandene oder dem Dekodierer nicht zur Verfügung stehenden Daten können vereinbarungsgemäß auf eine vorzugsweise decoderseitig bekannte Weise auf vorbestimmte Werte eingestellt werden. Es können zudem bei dem Blockkodierer nach Fig. 3 bei der Kodierung der Betragsbits der Streifen die jeweils angrenzenden Zeilen der angrenzenden Streifen unberücksichtigt bleiben. In diesem Fall wäre dann beispielsweise auch das Schieberegister kleiner, um in jedem der Teile 106₁ bis 106₃ lediglich die vier Zeilen der Streifen zu umfassen.

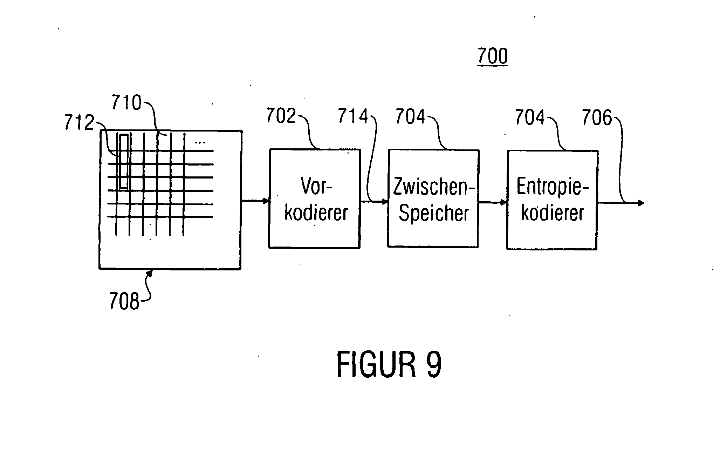

Fig. 9 zeigt ein etwas allgemeineres Beispiel eines Blockkodierers. Der Blockkodierer von Fig. 9, der allgemein mit 700 angezeigt ist, umfasst einen Vorkodierer 702, einen Zwischenspeicher 704 und einen Entropiekodierer 706. Der zu kodierende Transformationskoeffizientenblock ist in Fig. 9 bei 708 dargestellt. Der Vorkodierer 702 ist wie die im Vorhergehenden erläuterten Bitmodelliereinheiten dazu ausgelegt, die Transformationskoeffizienten 710, die in Zeilen und Spalten angeordnet sind, in Tupeln 712 zu hier exemplarisch ebenfalls vier in Spaltenrichtung benachbarten Transformationskoeffizienten 710 zu durchlaufen. Insbesondere ist der Vorkodierer 702 dazu ausgelegt, die mehreren Betragsbits, durch die die Transformationskoeffizienten 710 dargestellt sind, um mehrere Bitebenen zu definieren, bitebenenweise zu durchlaufen, um insbesondere in jeder Bitebene die Betragsbits in Tupeln 712 zu durchlaufen. Dabei nimmt der Vorkodierer 702 eine Vorkodierung vorbestimmter der Betragsbits vor, wie z.B. lediglich der Betragsbits von signifikanten Transformationskoeffizienten, wie es bei der Bitmodelliereinheit 108₂ der Fall war, oder lediglich der Betragsbits von insignifikanten Transformationskoeffizienten, wie es bei den Bitmodelliereinheiten 108₁ und 108₃ der Fall war. Dabei nimmt der Vorkodierer 702 die Vorkodierung der vorbestimmten Betragsbits derart vor, dass es dieselben tupelweise in ein Datenwort 714 kodiert, also maximal vier in dem exemplarischen Fall von Fig. 9 oder betragsbitweise, aber dann derart, dass in das Datenwort 714 zusammen mit dem Betragsbit auch ein zugehöriges Vorzeichen kodiert wird.

In dem Zwischenspeicher 714 befindet sich somit in sehr komprimierter Form eine Kodierung der vorbestimmten Betragsbits gegebenenfalls mit zugehörigen Vorzeichen. Der Vorkodierer umgekehrt benötigt lediglich einen Verarbeitungstakt bzw. einen Verarbeitungszyklus pro Datenwort, so dass der Durchlaufvorgang schnell ist.

Der Entropiekodierer ist ausgebildet ist, um die Datenwörter aus dem Zwischenspeicher 704 in der Reihenfolge ihrer Einspeicherung zu erhalten und einer Entropiekodierung zu unterziehen, wobei seine Verarbeitungsgeschwindigkeit aufgrund der Zwischenspeicherung in dem Zwischenspeicher 704 unabhängig von derjenigen des Vorkodierers 702 sein kann, solange die Puffergröße des Zwischenspeichers 704 ausreichend ist.

Natürlich ist die Größe des Tupels nicht auf vier Betragsbits beschränkt und auch nicht auf eine Spaltenanordnung der in dem Tupel 712 benachbarten Betragsbits. Obwohl bei dem Ausführungsbeispiel von Fig. 9 lediglich vorbestimmte der Betragsbits von dem Vorkodierer 702 erfasst werden und somit eine verlustbehaftete Kompression der Transformationskoeffizientendaten vorgenommenen wird, kann analog zu dem vorhergehenden Ausführungsbeispiel dem Paar aus Vorkodierer 702 und Zwischenspeicher 704 ein weiteres Paar von Vorkodierer und Zwischenspeicher parallel geschaltet sein, um weitere andere vorbestimmte Betragsbits zu kodieren, wobei dann in dem Entropiekodierer 706 ähnlich der Entropiekodiereinrichtung 112 ein Entscheider vorgesehen sein kann, um die in den Datenworten vorkodierten Betragsbits durch gegebenenfalls Vorzeichenbits in einer geeigneten Reihenfolge in den Datenstrom an dem Ausgang des Entropiekodierers zu kodieren. Gemäß einer weiteren Modifikation kann zusätzlich oder alternativ dem Vorkodierer 702 ähnlich dem Ausführungsbeispiel von Fig. 3 ein Bitextraktor und eine Schieberegistereinheit vorgeschaltet sein, so dass der Vorkodierer auf der Basis der in dieser Schieberegistereinheit enthaltenen Informationen arbeiten kann, wie z.B. zusammen mit einem parallel geschalteten Vorkodierer.

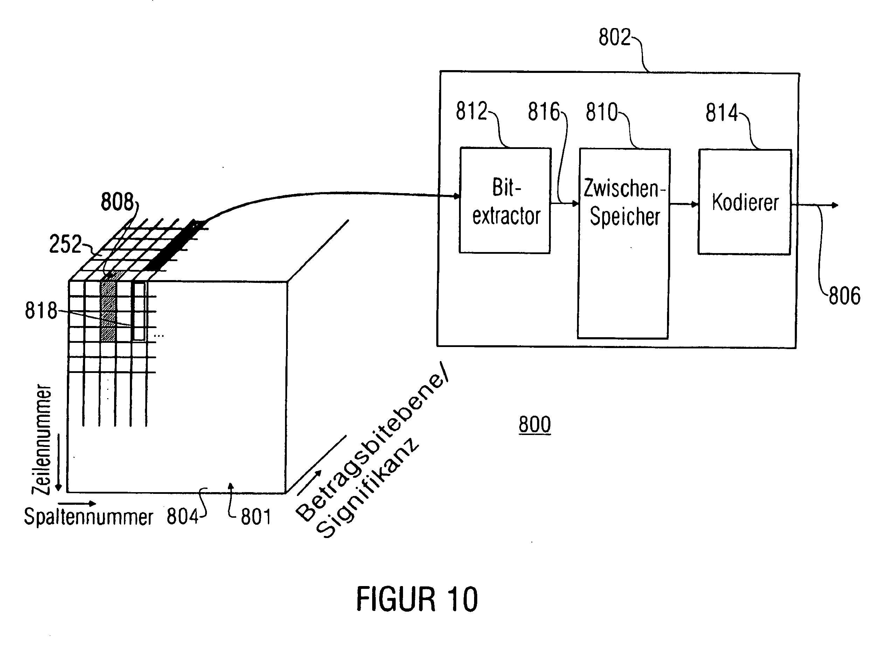

Fig. 10 zeigt ein weiteres etwas allgemeineres Beispiel eines Blockkodierers. Der Blockkodierer von Fig. 10, der allgemein mit 800 angezeigt ist, ist ebenso wie das vorhergehende Ausführungsbeispiel dazu vorgesehen, einen Bock von Transformationskoeffizienten zu kodieren, die jeweils mittels mehrerer Betragsbits dargestellt sind, die eine Folge von Betragsbitebenen definieren. In Fig. 10 sind diese Betragsbits 252 mit gleichen Bezugszeichen und gleicher Form und Anordnung veranschaulicht, d.h. als Würfel angeordnet in Zeilen und Spalten sowie in der Tiefe in Betragsbitebenen, wobei der so entstehende dreidimensionale Block 801 von Betragsbits 252 im Schnitt gezeigt ist, so dass seine aktuelle Betragsbitebene 804 sichtbar ist, während die bereits kodierten weniger signifikanten Betragsbitebenen weiter hinten liegen und die signifikanteren Bitebenen nicht zu sehen sind. Der Blockkodierer 800 weist eine Kodiereinrichtung 802 auf, die dazu vorgesehen ist, die Betragsbits 252 betragsbitebenenweise zu durchlaufen, und zwar durch Durchlaufen der jeweiligen aktuellen Betragsbitebene 802 in einer vorbestimmten Reihenfolge einzeln oder, wie in Fig. 10 in Anlehnung an das vorhergehende Ausführungsbeispiel exemplarisch dargestellt, in Tupeln von benachbarten Betragsbits 252. Die Kodiereinrichtung kodiert in der aktuellen Betragsbitebene 802 in der Reihenfolge des Durchlaufens vorbestimmte Betragsbits in einen kodierten Datenstrom 806. Das Durchlaufen der Betragsbits 252 der aktuellen Betragsbitebene 804 findet somit entweder individuell statt oder tupelweise, wie es im vorhergehenden Ausführungsbeispiel der Fall war. Insbesondere ist in Fig. 10 ein aktuell zu kodierendes Tupel durch Schraffur bei 808 hervorgehoben.

Die Kodiereinrichtung 802 weist nun einen Zwischenspeicher 810, einen Bitextraktor 812 und einen Kodierer 814 auf, wobei der Bitextraktor bei Durchlaufen der Betragsbits 252 erste Statusbits 816 ermittelt, die für die Transformationskoeffizienten, die durch Betragsbits der aktuellen Betragsbitebene 802 dargestellt sind, die gemäß der Reihenfolge des Durchlaufens frühestens als nächstes an der Reihe sind, und für die Stellvertretend mögliche Betragsbits in Fig. 10 mit einem Rechteck 818 hervorgehoben sind, eine Signifikanz bezogen auf die aktuelle Betragsbitebene 804 anzeigen. Insbesondere ermittelt der Bitextraktor 812 diese Statusbits aus Betragsbits, die die gleichen Transformationskoeffizienten darstellen wie die Betragsbits 818, aber in signifikanteren Bitebenen liegen als dieselben. Mit diesen ersten Statusbits 816 befüllt beständig der Bitextraktor 812 den Speicherspeicher 810, der diese ersten Statusbits vorübergehend, nämlich so lange die ersten Statusbits durch den Kodierer 814 benötigt, d.h. zugreifbar und aktualisierbar, sein müssen, zwischenspeichert. Der Zwischenspeicher 810 kann beispielsweise als ein FIFO-Speicher ausgeführt sein. Der Kodierer 814 führt die Kodierung der vorbestimmten unter den Betragsbits 252 in den kodierten Datenstrom 806 unter Verwendung der ersten Statusbits in dem Zwischenspeicher 810 durch.

Trotz des betragsbitebenenweisen Durchlaufens der Betragsbitebenen ist es folglich nicht nötig, dass die ersten Statusbits für alle Transformationskoeffizienten und damit über die gesamte Kodierung der einzelnen Betragsbitebenen hinweg gespeichert werden müssen.

Bei dem Ausführungsbeispiel von Fig. 10 ist das Durchlaufen der Betragsbits der aktuellen Betragsbitebene 104 nicht auf eine tupelweise Durchlaufvorgehensweise beschränkt. Vielmehr können die Betragsbits 252 auch einzeln durchlaufen werden oder zu zweit usw. Der Zwischenspeicher 810 kann wie bei den vorhergehenden Ausführungsbeispielen vorgesehen sein, um neben den ersten Statusbits auch weitere Informationen zu speichern. Beispiele sind das vorübergehende Speichern von Betragsbits 252 und/oder zugeordneten Vorzeichenbits sowie gegebenenfalls zweiten Statusbits. Obwohl bei dem Ausführungsbeispiel von Fig. 10 lediglich vorbestimmte der Betragsbits von dem Kodierer 814 erfasst werden und somit eine verlustbehaftete Kompression der Transformationskoeffizienten vorgenommen wird, kann analog zu dem vorhergehenden Ausführungsbeispiel dem Kodierer 814 auch ein weiterer Kodierer parallel geschaltet sein, um weitere andere vorbestimmte Betragsbits zu kodieren, wobei dann nachgeschaltet zu diesen beiden Kodierern eine geeignete Entropiekodiereinrichtung mit einem Multiplexer oder nur einem Multiplexer/Entscheider angeordnet sein kann, um die Reihenfolge festzulegen, in der die verschiedenen unterschiedlichen vorbestimmten Betragsbits in den kodierten Datenstrom 806 eingebunden werden. Ferner kann zusätzlich oder alternativ zwischen dem Zwischenspeicher und dem Kodierer 814 eine Vorhersageeinrichtung geschaltet werden, die ähnlich den Vorhersageeinheiten in den vorhergehenden Ausführungsbeispielen für noch nicht an der Reihe seiende Betragsbits vorhersagt, ob dieselben zu den vorbestimmten gehören oder nicht.

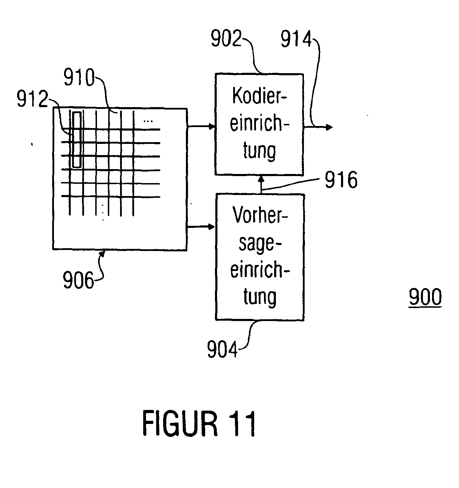

Fig. 11 zeigt ein weiteres etwas allgemeineres Beispiel eines Blockkodierers. Der Blockkodierer von Fig. 11, der allgemein mit 900 angezeigt ist, umfasst eine Kodiereinrichtung 902 und eine Vorhersageeinrichtung 904. Beide Einrichtungen 902 und 904 weisen Zugriff auf den zu kodierenden Transformationskoeffizientenblock 906 auf. Dabei ist die Kodiereinrichtung 902 wie die im Vorhergehenden erläuterten Bitmodelliereinheiten in deren Zusammenspiel mit der Schieberegistereinheit 106, dem Bitextraktor 104 sowie den sich anschließenden arithmetischen Kodiereinrichtungen 112 dazu ausgelegt, die Transformationskoeffizienten 910, die in Spalten und Zeilen angeordnet sind, in Tupeln 912 zu je vier hier exemplarisch ebenfalls in Spaltenrichtung benachbarten Transformationskoeffizienten 910 zu durchlaufen. Insbesondere ist die Kodiereinrichtung 902 dazu ausgelegt, die mehreren Betragsbits, durch die die Transformationskoeffizienten 910 dargestellt sind, um mehrere Bitebenen zu definieren, bitebenenweise zu durchlaufen, um insbesondere in jeder Bitebene die Betragsbits in Tupeln 902 zu durchlaufen. Dabei nimmt die Kodiereinrichtung 902 eine Vorkodierung vorbestimmter der Betragsbits vor, wie z.B. lediglich der Betragsbits von signifikanten Transformationskoeffizienten, wie es im Zusammenhang mit der Bitmodelliereinheit 108₂ der Fall war, oder lediglich der Betragsbits von insignifikanten Transformationskoeffizienten, wie es in dem Zusammenhang mit den Bitmodelliereinheiten 108₁ und 108₃ der Fall war. Die vorbestimmten Betragsbits kodiert die Kodiereinrichtung 902 in einen kodierten Datenstrom 914, beispielsweise derart, dass die Reihenfolge, in der die vorbestimmten Betragsbits in den kodierten Datenstrom 914 kodiert sind, der Reihenfolge des Durchlaufs der Betragskoeffizienten in den Tupeln 912 entspricht, mit der internen Betragsbitreihenfolge innerhalb jedes Tupels 912 von beispielsweise oben nach unten, wie es auch bei den vorhergehenden Ausführungsbeispielen exemplarisch der Fall war. Die Kodierung kann, muss aber nicht, eine arithmetische Kodierung sein, wie es im Vorhergehenden der Fall war. Eine andere Entropiekodierung ist allerdings ebenfalls möglich, wie z.B. eine Huffman-Kodierung, oder aber eine Lauflängenkodierung usw.

Die Vorhersageeinrichtung 904 ist nun dazu ausgelegt, vorherzusagen, ob und, wenn ja, welcher oder welche der Betragsbits unter den benachbarten Betragsbits der vorbestimmten Betragsbitebene eines gemäß einer Reihenfolge des Durchlaufens frühestens als nächstes an der Reihe seienden Tupels zu den vorbestimmten Betragsbits gehört. Diese Vorhersageergebnis 916 verwendet nun die Kodiereinrichtung 902, um die Kodierung der vorbestimmten Betragsbits in den kodierten Datenstrom in Abhängigkeit von der Vorhersage vorzunehmen.

Dabei kann insbesondere die Kodiereinrichtung 902 beispielsweise ähnlich der Betragsbitvorkodiereinheit 202 aus Fig. 4 eine Einheit aufweisen, z.B. eine hartverdrahtete, mittels der die Kodiereinrichtung 902 in der Lage ist, sequentiell in der vorerwähnten festgelegten Reihenfolge ausgewählte der Betragsbits innerhalb des aktuellen Tupels 912 zu kodieren. Da die Vorhersageeinrichtung 904 ihr Vorhersageergebnis 916 bereits vorab für ein Tupel liefert, bevor dieses Tupel in einem Verarbeitungszyklus durch die Kodiereinrichtung 902 aktuell zu verarbeiten ist, kann die Kodiereinrichtung 902 ihre sequentiell arbeitende Kodierschaltung nacheinander ohne Taktverzögerung den bzw. die vorbestimmten Betragsbits innerhalb des aktuellen Tupels 912 verarbeiten lassen. So war das auch bei den Bitmodelliereinheiten 108₁ und 108₃ der Fall.

Andererseits kann die Kodiereinrichtung 902 ähnlich dem Betragsbitvorkodiereinheiten 302₁₋₄ aus Fig. 5 mehrere parallel arbeitende Kodiereinheiten aufweisen, so dass die Kodiereinrichtung 902 in der Lage ist, in einem Verarbeitungszyklus parallel die mehreren Betragsbits in dem aktuellen Tupel 912 zu verarbeiten. In diesem Fall ist die Kodiereinrichtung 902 aber aufgrund des Vorhersageergebnisses 916 in der Lage, noch in diesem Verarbeitungstakt bzw. - Zyklus zu verhindern, dass alle Betragsbits des aktuellen Tupels in der geforderten Reihenfolge in den kodierten Datenstrom 914 gelangen, sondern vielmehr ist die Kodiereinrichtung 902 bei der parallelen Verarbeitung dann in der Lage, die Zugehörigkeit der einzelnen Betragsbits des aktuellen Tupels derart zu berücksichtigen, dass nur die vorbestimmten Betragsbits in den kodierten Datenstrom kodiert werden, wozu die Kodiereinrichtung 902 gemäß dem vorhergehenden Ausführungsbeispiel der Bitmodelliereinheit 108₂ als Vorkodierer einem Zwischenspeicher vorgeschaltet sein kann, in dem die einzelnen Kodiereinheiten bzw. Betragsbitvorkodiereinheiten ihre Teildatenworte schreiben, die zusammen das Datenwort des entsprechenden Vorkodierers bilden, und aus welchen Teildatenworten die sich anschließende Entropiekodiereinrichtung anhand der einzelnen Teildatenworte einzeln für sich erkennt, ob das jeweilige Teildatenwort zu einem vorbestimmten Betragsbit gehört.

Natürlich ist die Größe des Tupels nicht auf vier Betragsbits beschränkt und auch nicht auf eine Spaltenanordnung der in dem Tupel 912 benachbarten Betragsbits. Obwohl bei dem Ausführungsbeispiel von Fig. 11 lediglich vorbestimmte der Betragsbits von der Kodiereinrichtung 902 erfasst werden und somit eine verlustbehaftete Kompression der Transformationskoeffizientendaten vorgenommen wird, kann analog zu dem vorhergehenden Ausführungsbeispiel der Kodiereinrichtung 902 eine weitere Kodiereinrichtung parallel geschaltet sein, um weitere andere vorbestimmte Betragsbits zu kodieren. Sollte dann beispielsweise durch einen Standard oder dergleichen festgelegt sein, dass in den kodierten Datenstrom 914 zunächst die vorbestimmten Betragsbits der anderen Kodiereinrichtung in den Datenstrom 414 zu kodieren sind und dann erst die vorbestimmten Betragsbits der Kodiereinrichtung 902, kann sich im Anschluss an die beiden Kodiereinrichtungen ein Entscheider befinden, der die entsprechende Einbindung in den Datenstrom 914 vornimmt. Zudem kann der Kodiereinrichtung 902 ähnlich dem vorhergehenden Ausführungsbeispiel zusätzlich oder alternativ ein Bitextraktor und eine Schieberegistereinheit vorgeschaltet sein, so dass die Kodiereinrichtung 902 auf der Basis der in dieser Schieberegistereinheit enthaltenen Informationen arbeiten kann, wie z.B. zusammen mit der vorgeschriebenen parallel geschalteten Kodiereinrichtung.

Die Vorhersageeinrichtung 904 nimmt ihre Vorhersage beispielsweise auf der Basis von Betragsbits vor, die in Richtung des Durchlaufens der Betragsbits in Tupeln frühestens aktuell an der Reihe sind. Auf diese Weise ist die Vorhersageeinrichtung 904 in der Lage, zu berücksichtigen, dass Signifikanzen, die für die Vorhersage der Vorhersageeinrichtung 904 mit entscheidend sind, sich beispielsweise aufgrund der Kodierung durch die Kodiereinrichtung 902 noch ändern kann. In dem Fall also, dass wie im Vorhergehenden die Bitmodelliereinheiten die Kodiereinrichtung 902 ausgebildet ist, um in dem Fall, dass sie ein vorbestimmtes Betragsbit in dem aktuellen Tupel kodiert, das vorher einen nicht signifikanten Transformationskoeffizienten darstellte, in der aktuellen Betragsbitebene allerdings 1 ist, wodurch dieser Transformationskoeffizient nunmehr in der aktuellen Betragsbitebene aber signifikant wird, die Signifikanz zu aktualisieren, kann die Vorhersageeinrichtung 904 durch Auswerten entsprechender Betragsbits noch nicht stattgefundene Fälle des Signifikanzwerdens von Transformationskoeffizienten, die für die Vorhersage aber relevant sind, durch Modifizieren der aktuellen Signifikanzen berücksichtigen. Auf ähnliche Weise kann die Vorhersageeinrichtung 904 durch Auswertung der entsprechenden Betragsbits gegebenenfalls berücksichtigen, dass parallel geschaltete Kodiereinrichtungen noch Signifikanz-Werde-Ereignisse auslösen, die das Vorhersageergebnis der Kodiereinrichtung 902 beeinflussen könnte.

In anderen Worten ausgedrückt liefern obige Ausführungsbeispiele gemäß einem ersten Aspekt beispielsweise eine Vorrichtung zum Kodieren eines Blockes von Transformationskoeffizienten, wobei die Transformationskoeffizienten jeweils mittels mehrerer Betragsbits dargestellt sind, so dass dieselben eine Folge von Betragsbitebenen definieren, wobei die Vorrichtung einen Vorkodierer zum Durchlaufen der Betragsbits einer vorbestimmten der Betragsbitebenen in Tupeln von jeweils einer Mehrzahl von benachbarten Betragsbits und Kodieren vorbestimmter der Betragsbits der Tupel in Datenwörter derart, dass ein vorbestimmtes Betragsbit zusammen mit einem zugeordneten Vorzeichenbit in eines der Datenwörter kodiert wird, oder dass ein vorbestimmtes Betragsbit zusammen mit einem anderen vorbestimmten Betragsbit des gleichen Tupels in eines der Datenwörter kodiert wird, einen Datenwortzwischenspeicher zum Zwischenspeichern der Datenwörter; und einen Entropiekodierer zum Kodieren der Datenwörter aus dem Datenwortzwischenspeicher in einen kodierten Datenstrom aufweist; gemäß einem zweiten Aspekt liefern die Ausführungsbeispiele beispielsweise eine Vorrichtung zum Kodieren eines Blockes von Transformationskoeffizienten, wobei die Transformationskoeffizienten jeweils mittels mehrerer Betragsbits dargestellt sind, so dass dieselben eine Folge von Betragsbitebenen definieren, wobei die Vorrichtung eine Kodiereinrichtung zum Durchlaufen der Betragsbits einer vorbestimmten der Betragsbitebenen und Kodieren vorbestimmter der Betragsbits der Tupel in einen kodierten Datenstrom, wobei der Kodierer folgende Merkmale aufweist: einen Zwischenspeicher; einen Bitextraktor zum, bei Durchlaufen der Betragsbits, Ermitteln erster Statusbits, die für die Transformationskoeffizienten, die durch Betragsbits der vorbestimmten Betragsbitebene dargestellt sind, die gemäß einer Reihenfolge des Durchlaufens frühestens als nächstes an der Reihe sind, eine Signifikanz bezogen auf die vorbestimmte Betragsbitebene anzeigen, aus Betragsbits, die die gleichen Transformationskoeffizienten darstellen wie die frühestens als nächstes an der Reihe seienden Betragsbits aber in signifikanteren Bitebenen liegen als dieselben und Befüllen des Zwischenspeichers mit den ermittelten ersten Statusbits und einen Kodierer zum Kodieren der vorbestimmten Betragsbits in den kodierten Datenstrom unter Verwendung der ersten Statusbits in dem Zwischenspeicher. Gemäß einem dritten Aspekt liefern die Ausführungsbeispiele beispielsweise eine Vorrichtung zum Kodieren eines Blockes von Transformationskoeffizienten, wobei die Transformationskoeffizienten jeweils mittels mehrerer Betragsbits dargestellt sind, so dass dieselben eine Folge von Betragsbitebenen definieren, wobei die Vorrichtung eine Kodiereinrichtung zum Durchlaufen der Betragsbits einer vorbestimmten der Betragsbitebenen in Tupeln von jeweils einer Mehrzahl von benachbarten Betragsbits und Kodieren vorbestimmter der Betragsbits der Tupel in einen kodierten Datenstrom; und eine Vorhersageeinrichtung zum Vorhersagen, ob und, wenn ja, welcher oder welche der Betragsbits unter den benachbarten Betragsbits der vorbestimmten Betragsbitebene eines gemäß einer Reichenfolge des Durchlaufens frühestens als nächstes an der Reihe seienden Tupels zu den vorbestimmten Betragsbits gehört, wobei die Kodiereinrichtung ausgebildet ist, um die Kodierung abhängig von der Vorhersage vorzunehmen.

Bei dem zweiten Aspekt können der Bitextraktor und der Kodierer derart ausgebildet sind, dass die ersten Statusbits, mit denen der Bitextraktor den Zwischenspeicher befüllt, die Signifikanz für Transformationskoeffizienten anzeigen, die durch Betragsbits der aktuellen Betragsbitebene dargestellt sind, die mit einem konstanten Versatz gemäß der Reihenfolge des Durchlaufens durch den Kodierer verarbeitet werden, um die vorbestimmten Betragsbits unter den Betragsbits der aktuellen Betragsbitebene zu kodieren. Der Zwischenspeicher kann als Schieberegister ausgebildet sein, wobei der Bitextraktor ausgebildet sein kann, um das Schieberegister an einem vorderen Ende desselben zu befüllen und der Kodierer ausgebildet sein kann, um die Kodierung der vorbestimmten Betragsbits in den kodierten Datenstrom zumindest auch unter Verwendung von Registerinhalten des Schieberegisters durchzuführen, die zumindest ein Schieberang hinter dem vorderen Ende des Schieberegisters angeordnet sind, und in einem Vorlauf der Kodierung auch eine Aktualisierung von Registerinhalten des Schieberegisters durchzuführen, die zumindest ein Schieberang vor den Registerinhalten ausgeordnet sind, die zur Kodierung verwendet werden. Die Kodiereinrichtung kann ausgebildet sein, um die Betragsbits der vorbestimmten Betragsbitebene in Tupeln von jeweils einer Mehrzahl von benachbarten Betragsbits zu durchlaufen, und der Kodierer folgende Merkmale aufweist: einen Vorkodierer zum, bei Durchlaufen der Betragsbits, Kodieren vorbestimmter der Betragsbits der Tupel in Datenwörter derart, dass ein vorbestimmtes Betragsbit zusammen mit einem zugeordneten Vorzeichenbit in eines der Datenwörter kodiert wird, oder dass ein vorbestimmtes Betragsbit zusammen mit einem anderen vorbestimmten Betragsbit des gleichen Tupels in eines der Datenwörter kodiert wird; einen Datenwortzwischenspeicher zum Zwischenspeichern der Datenwörter; und einen Entropiekodierer zum Kodieren der Datenwörter aus dem Datenwortzwischenspeicher in den kodierten Datenstrom. Die Transformationskoeffizienten können jeweils mittels der mehreren Betragsbits sowie einem zugehörigen Vorzeichenbit dargestellt sein, und der Vorkodierer kann dabei derart ausgebildet sein, dass die Kodierung der vorbestimmten Betragsbits auch von dem diesem vorbestimmten Betragsbit zugehörigen Vorzeichenbit abhängt. Der Vorkodierer kann derart ausgebildet sein, dass die Kodierung der vorbestimmten Betragsbits auch von Vorzeichenbits abhängt, die den Betragsbits zugehörig sind, die zu den vorbestimmten Betragsbits benachbart sind. Der Vorkodierer kann zudem derart ausgebildet sein, dass die Kodierung der vorbestimmten Betragsbits auch von ersten Statusbits abhängt, die für die Transformationskoeffizienten, die durch die vorbestimmten Betragsbits und Betragsbits, die zu den vorbestimmten Betragsbits benachbart sind, dargestellt sind, eine Signifikanz bezogen auf die vorbestimmte Betragsbitebene anzeigen.

Bei dem dritten Aspekt kann die Vorhersageeinrichtung ausgebildet sein, um die Vorhersage auf Basis von Betragsbits der vorbestimmten Betragsbitebene in Tupeln durchzuführen, die gemäß der Reihenfolge des Durchlaufens später als ein zuletzt an der Reihe gewesenes Tupel an der Reihe sind. Die Vorhersageeinrichtung kann ausgebildet sein, um auf Basis von Betragsbits der vorbestimmten Betragsbitebene in Tupeln, die gemäß der Reihenfolge später als ein zuletzt an der Reihe gewesenes Tupel an der Reihe sind, Statusinformationen zu modifizieren, die für die Transformationskoeffizienten, die durch die Betragsbits der vorbestimmten Betragsbitebene der später an der Reihe seienden Tupel dargestellt sind, eine Signifikanz bezogen auf die vorbestimmte Betragsbitebene anzeigen, um die Vorhersage auf der Basis der modifizierten Signifikanzinformationen durchzuführen. Die Kodiereinrichtung kann ausgebildet sein, um seriell eine Auswahl der Betragsbits eines aktuell an der Reihe seienden Tupels in den kodierten Datenstrom zu kodieren und die Auswahl basierend auf der Vorhersage einzustellen. Die Kodiereinrichtung kann ausgebildet sein, um die Betragsbits eines aktuell an der Reihe seienden Tupels parallel verarbeitend in Teildatenworte zu kodieren, die abhängig von der Vorhersage einen zulässigen Zustand oder einen unzulässigen Zustand aufweisen, und abhängig von der Zulässigkeit die Teildatenworte in den kodierten Datenstrom zu kodieren oder nicht. Die Kodiereinrichtung kann einen Vorkodierer zum Durchlaufen der Betragsbits der vorbestimmten der Betragsbitebenen in Tupeln von jeweils einer Mehrzahl von benachbarten Betragsbits und Kodieren der vorbestimmten Betragsbits der Tupel in Datenwörter derart, dass ein vorbestimmtes Betragsbit zusammen mit einem zugeordneten Vorzeichenbit in eines der Datenwörter kodiert wird, oder dass ein vorbestimmtes Betragsbit zusammen mit einem anderen vorbestimmten Betragsbit des gleichen Tupels in eines der Datenwörter kodiert wird, einen Datenwortzwischenspeicher zum Zwischenspeichern der Datenwörter und einen Entropiekodierer zum Kodieren der Datenwörter aus dem Datenwortzwischenspeicher in den kodierten Datenstrom aufweisen. Die Transformationskoeffizienten können jeweils mittels der mehreren Betragsbits sowie einem zugehörigen Vorzeichenbit dargestellt sein, und der Vorkodierer kann derart ausgebildet sein, dass die Kodierung der vorbestimmten Betragsbits auch von dem diesem vorbestimmten Betragsbit zugehörigen Vorzeichenbit abhängt. Der Vorkodierer kann derart ausgebildet sein, dass die Kodierung der vorbestimmten Betragsbits auch von Vorzeichenbits abhängt, die den Betragsbits zugehörig sind, die zu den vorbestimmten Betragsbits benachbart sind. Der Vorkodierer kann derart ausgebildet sein, dass die Kodierung der vorbestimmten Betragsbits auch von ersten Statusbits abhängt, die für die Transformationskoeffizienten, die durch die vorbestimmten Betragsbits und Betragsbits, die zu den vorbestimmten Betragsbits benachbart sind, dargestellt sind, eine Signifikanz bezogen auf die vorbestimmte Betragsbitebene anzeigen.

Eine Vorhersageeinrichtung zum Vorhersagen, ob und, wenn ja, welcher der Betragsbits unter den benachbarten Betragsbits der vorbestimmten Betragsbitebene eines gemäß der Reihenfolge des Durchlaufens als nächstes an der Reihe seienden Tupels zu den vorbestimmten Betragsbits gehört, wobei die Vorhersageeinrichtung ausgebildet ist, die Vorhersage auf Basis der Betragsbits der vorbestimmten Betragsbitebene des als nächstes an der Reihe seienden Tupels und des aktuell an der Reihe seienden Tupels und der ersten Statusbits für die Transformationskoeffizienten, die durch die Betragsbits der vorbestimmten Betragsbitebene des als nächstes an der Reihe seienden Tupels, des aktuell an der Reihe seienden Tupels und des als übernächstes an der Reihe seienden Tupels dargestellt sind, zu treffen, kann vorgesehen sein. Diese kann ausgebildet sein, um ein Ergebnis der Vorhersage in Form eines Bitvektors auszugeben, der pro Betragsbit des als nächstes an der Reihe seienden Tupels ein Vektorbit aufweist, das die Zugehörigkeit oder Nicht-Zugehörigkeit des jeweiligen Betragsbits des als nächstes an der Reihe seienden Tupels anzeigt. Der Vorkodierer kann ferner einen Schiebeimpulsgenerator aufweisen, der ausgebildet ist, um auf Basis der Betragsbits der vorbestimmten Betragsbitebenen des als nächstes an der Reihe seienden Tupels und des aktuell an der Reihe seienden Tupels und der ersten Steuerbits für Transformationskoeffizienten, die durch Betragsbits der vorbestimmten Betragsbitebene des als nächstes an der Reihe seienden Tupels, des aktuell an der Reihe seienden Tupels und des als übernächstes an der Reihe seienden Tupels dargestellt sind, vorherzusagen, wie viele der Betragsbits unter den benachbarten Betragsbit der vorbestimmten Betragsbitebene des als nächstes an der Reihe seienden Tupels zu den vorbestimmten Betragsbits gehören, und basierend auf der vorhergesagten Anzahl und einem Verarbeitungstakt, in Einheiten wessen die Kodierung der vorbestimmten Betragsbits in Datenworte durchgeführt wird, um keinen, einen oder mehrere Taktzyklen des Verarbeitungstaktes verzögert, ein Schiebeimpuls an ein Schieberegister auszugeben.

Der Vorkodierer kann eine Multiplexeransteuerung aufweisen, die ausgebildet ist, um an eine Multiplexerschaltung ein Steuersignal auszugeben, das in einer vorbestimmten Reihenfolge unter den benachbarten Betragsbits eines aktuell an der Reihe seienden Tupels sequentiell diejenigen Betragsbits anzeigt, die zu den vorbestimmten Betragsbits gehören. Der Vorkodierer kann ferner ausgebildet sein, um beim Durchlaufen auch jeweils ein Datenwort für Tupel zu erzeugen, unter dessen benachbarten Betragsbits keines zu den vorbestimmten Betragsbits gehört, und ein Gültigkeitsbit abhängig davon zu setzen, ob sich unter den Betragsbits in einem gemäß der Reihenfolge des Durchlaufens aktuell an der Reihe seienden Tupels ein vorbestimmtes Betragsbit befindet, und der Datenwortzwischenspeicher ausgebildet ist, um nur in dem Fall eines gesetzten Gültigkeitsbits das jeweilige Datenwort zwischenzuspeichern oder dann, wenn das jeweilige Datenwort für das letzte Tupel in der vorbestimmten Betragsbitebene erzeugt worden ist. Der Vorkodierer kann ferner derart ausgebildet sein, dass das Durchlaufen der Betragsbits der vorbestimmten Betragsbitebene streifenweise erfolgt, derart, dass die benachbarten Bits jedes Tupels in einer Spalte des Blocks liegen, und unmittelbar aufeinander folgende Tupel Spalte an Spalte nebeneinander liegen oder in unmittelbar benachbarten Streifen von Zeilen des Blocks mit einem der beiden Tupel an einem Ende eines der unmittelbar benachbarten Streifen und dem anderen der beiden Tupel an einem gegenüberliegenden Ende des anderen der unmittelbar benachbarten Streifen. Der Vorkodierer kann fner derart ausgebildet sein, dass derselbe auf das Durchlaufen der vorbestimmten Betragsbitebene hin eine weniger signifikante Betragsbitebene durchläuft und die vorbestimmten Betragsbits der weniger signifikanten Betragsbitebene in Datenworte kodiert. Der Vorkodierer kann auch derart ausgebildet sein, dass derselbe für jedes vorbestimmte Betragsbit ein Bypass-Modus-Bit des jeweiligen Datenworts abhängig von einer Bittiefe einstellt, die der vorbestimmten Betragsbitebene zugeordnet ist. Der Vorkodierer kann ferner derart ausgebildet sein, dass die Kodierung jedes Tupels einer Mehrzahl von benachbarten Betragsbits auch von ersten Statusbits abhängt, die für die Transformationskoeffizienten, die durch die vorbestimmten Betragsbits und Betragsbits, die zu den vorbestimmten Betragsbits benachbart sind, dargestellt sind, eine Signifikanz bezogen auf die vorbestimmte Betragsbitebene anzeigen, sowie von zweiten Statusbits, die für die Transformationskoeffizienten, die durch vorbestimmte Betragsbits dargestellt sind, anzeigen, ob für den jeweiligen Transformationskoeffizienten zwei oder mehr als zwei Betragsbits unter den Betragsbits, die die jeweiligen Transformationskoeffizienten darstellen und sich in signifikanteren Betragsbitebenen befinden als die vorbestimmte Betragsbitebene, existieren, die signifikant sind. Der Vorkodierer kann pro Betragsbit der Mehrzahl von benachbarten Betragsbits der Tupel einen Betragsbitvorkodiereinheit, die ausgebildet ist, um auf Basis des jeweiligen Betragsbits unter den benachbarten Betragsbits eines gemäß einer Reihenfolge des Durchlaufens aktuell an der Reihe seienden Tupels, der ersten Statusbits für die Transformationskoeffizienten, die durch eine siebte Mehrzahl von Betragsbits der vorbestimmten Betragsbitebene dargestellt sind, die zu dem jeweiligen Betragsbit benachbart sind, und des zweiten Statusbits für den Transformationskoeffizienten, der durch das jeweilige Betragsbit dargestellt ist, ein jeweiliges Teildatenwort zu erzeugen, aus dem das jeweilige Betragsbit sowie ein zugehöriger Betragsbitkontext ermittelbar ist, aufweisen und derart ausgebildet sein, dass die Teildatenworte gemeinsam das Datenwort des oder der vorbestimmten Betragsbits des aktuell an der Reihe seienden Tupels ergeben, und dass ausschließlich anhand des Datenworts ermittelbar ist, welche der Teildatenworte für Betragsbits erzeugt worden sind, die zu den vorbestimmten Betragsbits gehören, wobei der Entropiekodierer ausgebildet sein kann, um aus den Teildatenworten zu ermitteln, welche derselben für Betragsbits, die zu den vorbestimmten Betragsbits gehören, erzeugt wurden, und aus diesen das jeweilige Betragsbit sowie den dazugehörigen Betragsbitkontext zu ermitteln, und das jeweilige Betragsbit unter Verwendung des zugehörigen Betragsbitkontexts kontext-abhängig arithmetisch in den Datenstrom zu kodieren. Der Vorkodierer kann eine Vorhersageeinrichtung zum Vorhersagen aufweisen, ob, und, wenn ja, welcher oder welche der Betragsbits unter den benachbarten Betragsbits der vorbestimmten Betragsbitebene eines gemäß der Reihenfolge des Durchlaufens als frühestens übernächstes an der Reihe seienden Tupels zu den vorbestimmten Betragsbits gehört, wobei die Vorhersageeinrichtung ausgebildet ist, um die Vorhersage auf Basis der ersten Statusbits für die Transformationskoeffizienten, die durch die Betragsbits der vorbestimmten Betragsbitebene eines frühestens übernächstes an der Reihe seienden Tupels dargestellt sind, zu treffen. Der Vorkodierer kann eine Lauflängenkodiereinheit, die basierend auf einem Vorhersageergebnis der Vorhersageinrichtung in dem Zustand, bei dem das als nächstes an der Reihe seiende Tupel aktuell an die Reihe kommt, ein Lauflängenteildatenwort erzeugt, aus dem ermittelbar ist, wie viele der Betragsbits des an die Reihe kommenden Tupels in einer vorbestimmten Betragsbitreihenfolge unter denselben durchgehend insignifikant sind, sowie, falls einer der Betragsbits des an die Reihe kommenden Tupels existiert, der signifikant ist und nicht das erste Betragsbit in diesem Tupel in der Betragsbitreihenfolge ist, an welcher Position sich das in der Betragsbitreihenfolge erste signifikante Betragsbit befindet, eine Koeffizientenwählereinheit, die ausgebildet ist, um basierend auf einem Vorhersageergebnis der Vorhersageinrichtung in dem Zustand, bei dem das als nächstes an der Reihe seiende Tupel aktuell an die Reihe kommt, ein Steuersignal auszugeben, das in der Betragsbitreihenfolge sequentiell das in der Betragsbitreihenfolge erste signifikante Betragsbit und die auf das in der Betragsbitreihenfolge erste signifikante Betragsbit folgenden Betragsbits des an die Reihe kommenden Tupels vorgibt, und eine Betragsbitvorkodiereinheit, die ausgebildet ist, um abhängig von dem Steuersignal jeweils auf Basis eines jeweils vorgegebenen Betragsbits unter den benachbarten Betragsbits des an die Reihe kommenden Tupels, und ersten Statusbits für die Transformationskoeffizienten, die durch eine erste Mehrzahl von Betragsbits der vorbestimmten Betragsbitebene dargestellt sind, die zu dem jeweils vorgegebenen Betragsbit benachbart sind, ein erstes Teildatenwort zu erzeugen, aus dem das jeweils vorgegebene Betragsbit sowie ein zugehöriger Betragsbitkontext ermittelbar ist, und eine Vorzeichenbitvorkodiereinheit, die ausgebildet ist, um abhängig von dem Steuersignal auf Basis des dem jeweils vorgegebenen Betragsbit zugehörigen Vorzeichenbit; von einer zweiten Mehrzahl von Betragsbits der vorbestimmten Betragsbitebene, die zu dem jeweils vorgegebenen Betragsbit benachbart sind, zugehörigen Vorzeichenbits; und der ersten Statusbits für die Transformationskoeffizienten, die durch die zweite Mehrzahl von Betragsbits der vorbestimmten Betragsbitebene dargestellt sind, ein zweites Teildatenwort zu erzeugen, aus dem das dem jeweils vorgegebenen Betragsbit zugehörige Vorzeichenbit sowie ein zugehöriger Vorzeichenbitkontext ermittelbar sind, aufweisen, und derart ausgebildet sein, dass eines der Datenwörter das erste Teildatenwort, das zweite Teildatenwort und das Lauflängendatenwort umfasst, und wobei der Entropiekodierer ausgebildet ist, um aus dem Lauflängendatenwort eine Information über die in der vorbestimmten Betragsbitreihenfolge durchgehend insignifikanten Betragsbits zu ermitteln und arithmetisch in den Datenstrom zu kodieren, aus dem ersten Teildatenwort - außer in dem Fall des in der Betragsbitreihenfolge ersten signifikanten Betragsbits - das jeweils vorgegebene Betragsbit sowie den zugehörigen Betragsbitkontext zu ermitteln und das jeweils Betragsbit unter Verwendung des zugeführten Betragsbitkontexts kontext-abhängig arithmetisch in den Datenstrom zu kodieren, und, falls das jeweils vorgegebene Betragsbit signifikant ist, - auch in dem Fall des in der Betragsbitreihenfolge ersten signifikanten Betragsbits - aus dem zweiten Teildatenwort, das dem jeweils vorgegebenen Betragsbit zugehörige Vorzeichenbit sowie den demselben zugehörigen Vorzeichenbitkontext zu ermitteln und das dem jeweils vorgegebenen Betragsbit zugehörige Vorzeichenbit unter Verwendung des zugehörigen Vorzeichenbitkontexts kontext-abhängig arithmetisch in den Datenstrom zu kodieren. Der Vorkodierer kann ferner ausgebildet sein, um beim Durchlaufen andere, zu den vorbestimmten Betragsbits unterschiedliche Betragsbits der Tupel in weitere Datenwörter derart zu kodieren, dass eines der anderen Betragsbits zusammen mit einem zugeordneten Vorzeichenbit in eines der Datenwörter kodiert wird, oder dass eines der anderen Betragsbits zusammen mit einem anderen der anderen Betragsbits des gleichen Tupels in eines der Datenwörter kodiert wird, wobei die Vorrichtung ferner einen weiteren Zwischenspeicher zum Zwischenspeichern der weiteren Datenworte aufweist, und der Entropiekodierer ausgebildet ist, um zunächst die Datenworte in dem Zwischenspeicher und dann die weiteren Datenworte in dem weiteren Zwischenspeicher in den kodierten Datenstrom zu kodieren.

Abhängig von den Gegebenheiten können beschriebene Abläufe zur Transformationskoeffizientenblockkodierung nicht nur in Hardware, sondern natürlich auch in Software implementiert werden. Die Implementation kann auf einem digitalen Speichermedium, insbesondere einer Diskette, einer CD oder einer DVD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computer-Programm-Produkt mit einem auf einem maschinenlesbaren Träger gespeicherten Programmcode zur Durchführung eines obiger Verfahren, wenn das Computer-Programm-Produkt auf einem Rechner abläuft. Mit anderen Worten ausgedrückt kann die Erfindung somit als ein Computer-Programm mit einem Programmcode zur Durchführung eines obiger Verfahren realisiert werden, wenn das Computer-Programm auf einem Computer abläuft. Hierbei ist unter einem Computer jegliche Form eines Prozessors zu verstehen, der ausgelegt ist, um ein Programm oder einen Programmcode auszuführen, also insbesondere auch Mikrocontroller oder dergleichen.

## Patentansprüche

1. Vorrichtung zum Kodieren eines Blockes (34; 708) von Transformationskoeffizienten (710), wobei die Transformationskoeffizienten jeweils mittels mehrerer Betragsbits (252) dargestellt sind, so dass dieselben eine Folge von Betragsbitebenen (38₁ ... 38ₙ) definieren, mit
einem Vorkodierer (108₁; 108₂; 108₃; 702) zum Durchlaufen der Betragsbits einer vorbestimmten der Betragsbitebenen (38₁ .... 38ₙ) in Tupeln (292; 322; 506; 712) von jeweils einer Mehrzahl von benachbarten Betragsbits und Kodieren vorbestimmter der Betragsbits der Tupel in Datenwörter derart, dass ein vorbestimmtes Betragsbit zusammen mit einem zugeordneten Vorzeichenbit in eines der Datenwörter (244; 444; 714) kodiert wird, oder dass ein vorbestimmtes Betragsbit zusammen mit einem anderen vorbestimmten Betragsbit des gleichen Tupels in eines der Datenwörter (318; 444; 714) kodiert wird, und Kodieren anderer, zu den vorbestimmten Betragsbits unterschiedlicher Betragsbits der Tupel in weitere Datenwörter derart, dass eines der anderen Betragsbits zusammen mit einem zugeordneten Vorzeichenbit in eines der weiteren Datenwörter (244; 444; 714) kodiert wird, oder dass eines der anderen Betragsbits zusammen mit einem anderen der anderen Betragsbits des gleichen Tupels in eines der weiteren Datenwörter (318; 444; 714) kodiert wird;
einem Datenwortzwischenspeicher (110₁) zum Zwischenspeichern der Datenwörter (244; 318; 444; 714);
einen weiteren Datenwortzwischenspeicher (110₂) zum Zwischenspeichern der weiteren Datenwörter; und
einem Entropiekodierer (112; 706) zum Kodieren der Datenwörter und der weiteren Datenwörter (244; 318; 444; 714) aus dem Datenwortzwischenspeicher und dem weiteren Datenwortspeicher in einen kodierten Datenstrom, und zwar durch Kodieren von zunächst den Datenwörtern in dem Zwischenspeicher und dann den weiteren Datenwörtern in dem weiteren Zwischenspeicher.

2. Vorrichtung gemäß Anspruch 1, bei der die Transformationskoeffizienten jeweils mittels der mehreren Betragsbits (252) sowie einem zugehörigen Vorzeichenbit (250) dargestellt sind, und der Vorkodierer (108₁; 108₃; 702) derart ausgebildet ist, dass die Kodierung der vorbestimmten Betragsbits auch von dem diesem vorbestimmten Betragsbit zugehörigen Vorzeichenbit abhängt.

3. Vorkodierer gemäß Anspruch 2, bei der der Vorkodierer (108₁; 108₃; 702) derart ausgebildet ist, dass die Kodierung der vorbestimmten Betragsbits auch von Vorzeichenbits abhängt, die den Betragsbits zugehörig sind, die zu den vorbestimmten Betragsbits benachbart sind.

4. Vorrichtung gemäß Anspruch 3, bei der der Vorkodierer (108₁; 108₃; 702) derart ausgebildet ist, dass die Kodierung der vorbestimmten Betragsbits auch von ersten Statusbits (274) abhängt, die für die Transformationskoeffizienten, die durch die vorbestimmten Betragsbits und Betragsbits, die zu den vorbestimmten Betragsbits benachbart sind, dargestellt sind, eine Signifikanz bezogen auf die vorbestimmte Betragsbitebene anzeigen.

5. Vorrichtung gemäß einem der Ansprüche 1 bis 4, bei denen dem Vorkodierer (108₁; 108₃; 702) ein Zwischenspeicher (106) sowie ein Bitextraktor (104) zum, beim Durchlaufen der Betragsbits in Tupeln, Befüllen des Zwischenspeichers (106) mit
einem Tupel einer Mehrzahl von benachbarten Betragsbits der vorbestimmten Betragsbitebene, das gemäß einer Reihenfolge des Durchlaufens frühestens als nächstes Tupel an der Reihe ist,
zugehörigen Vorzeichenbits zu den Betragsbits des frühestens als nächstes an der Reihe seienden Tupels, und
ersten Statusbits, die für die Transformationskoeffizienten, die durch eine Mehrzahl von benachbarten Betragsbits der vorbestimmten Betragsbitebene eines gemäß der Reihenfolge des Durchlaufens frühestens als übernächstes an der Reihe seiendes Tupels dargestellt sind, eine Signifikanz bezogen auf die vorbestimmte Betragsbitebene anzeigen,
vorgeschaltet ist, und der Vorkodierer ausgebildet ist, um die Kodierung auf Basis eines Inhalts des Zwischenspeichers durchzuführen.

6. Vorrichtung gemäß Anspruch 5, bei der der Bitextraktor (104) ausgebildet ist, um zur Befüllung des Zwischenspeichers (106) die ersten Statusbits (274) aus Betragsbits (276) zu ermitteln, die die gleichen Transformationskoeffizienten darstellen wie die Betragsbits des frühestens als übernächstes an der Reihe seienden Tupels, aber in signifikanteren Betragsbitebenen liegen als dieselben.

7. Vorrichtung gemäß Anspruch 5 oder 6, bei der der Bitextraktor (104) ausgebildet ist, um zur Befüllung des Zwischenspeichers (106) die Mehrzahl von benachbarten Betragsbits des frühestens als nächstes zu kodierenden Tupels und die dazugehörigen Vorzeichenbits durch einen Speicherzugriff (114) auf einen Speicher (102) zu erhalten, der die Betragsbits und Vorzeichenbits speichert.

8. Vorrichtung gemäß einem der Ansprüche 6 bis 7, bei der der Zwischenspeicher ein Schieberegister (106) aufweist, das erste Statusbits (274), mit denen der Zwischenspeicher (106) gefüllt wird, erst nach mehr als fünf Schiebeoperationen verliert, Betragsbits (252), mit denen der Zwischenspeicher (106) gefüllt wird, erst nach mehr als drei Schiebeoperationen oder Vorzeichenbits (250), mit denen der Zwischenspeicher (106) befüllt wird, erst nach mehr als vier Schiebeoperationen verliert.

9. Vorrichtung gemäß einem der Ansprüche 1 bis 8, bei der der Vorkodierer (108₁),
eine Betragsbitvorkodiereinheit (202), die ausgebildet ist, um auf Basis
eines zugeführten Betragsbits unter den benachbarten Betragsbits eines gemäß einer Reihenfolge des Durchlaufens aktuell an der Reihe seienden Tupels (282), und
ersten Statusbits (290) für die Transformationskoeffizienten, die durch eine erste Mehrzahl von Betragsbits der vorbestimmten Betragsbitebene dargestellt sind, die zu dem zugeführten Betragsbit benachbart sind,
ein erstes Teildatenwort zu erzeugen, aus dem das zugeführte Betragsbit (232) sowie ein zugehöriger Betragsbitkontext (236) ermittelbar ist, und
eine Vorzeichenbitvorkodiereinheit (208), die ausgebildet ist, um auf Basis
des dem zugeführten Betragsbit zugehörigen Vorzeichenbits (250);
von einer zweiten Mehrzahl von Betragsbits der vorbestimmten Betragsbitebene, die zu dem zugeführten Betragsbit benachbart sind, zugehörigen Vorzeichenbits (294); und
der ersten Statusbits (290) für die Transformationskoeffizienten, die durch die zweite Mehrzahl von Betragsbits der vorbestimmten Betragsbitebene dargestellt sind,
ein zweites Teildatenwort zu erzeugen, aus dem das dem zugeführten Betragsbit zugehörige Vorzeichenbit (234) sowie ein zugehöriger Vorzeichenbitkontext (236) ermittelbar sind,
aufweist, und derart ausgebildet ist, dass das Datenwort (244) des zugeführten Betragsbits das erste Teildatenwort und das zweite Teildatenwort umfasst, und wobei der Entropiekodierer (112) ausgebildet ist, um aus dem ersten Teildatenwort das zugeführte Betragsbit
sowie den zugehörigen Betragsbitkontext zu ermitteln und das zugeführte Betragsbit unter Verwendung des zugeführten Betragsbitkontexts kontext-abhängig arithmetisch in den Datenstrom zu kodieren, und, falls der zugeführte Betragsbit signifikant ist, aus dem zweiten Teildatenwort, das dem zugeführten Betragsbit zugehörige Vorzeichenbit sowie den demselben zugehörigen Vorzeichenbitkontext zu ermitteln und das dem zugeführten Betragsbit zugehörige Vorzeichenbit unter Verwendung des zugehörigen Vorzeichenbitkontexts kontextabhängig arithmetisch in den Datenstrom zu kodieren.

10. Vorrichtung gemäß Anspruch 9, bei der der Vorkodierer (108) eine
Multiplexschaltung aufweist, die
eine erste Multiplexerschaltung (204), der durch ein Steuersignal ein beliebiges der Betragsbits des gerade an der Reihe seienden Tupels (282) anzeigbar ist, und die ausgebildet ist, um das angezeigte Betragsbit als das zugeführte Betragsbit der Betragsbitvorkodiereinheit (202) zuzuführen;
eine zweite Multiplexerschaltung (206, 212), die durch das Steuersignal steuerbar ist, um die ersten Statusbits (290) für Transformationskoeffizienten, die durch eine dritte Mehrzahl von Betragsbits der vorbestimmten Betragsbitebene dargestellt sind, die zu dem angezeigten Betragsbit benachbart sind, als die ersten Steuerbits für die Transformationskoeffizienten, die durch die erste Mehrzahl von Betragsbits dargestellt sind, der Betragsbitvorkodiereinheit (202) zuzuführen, und die ersten Statusbits (290) für Transformationskoeffizienten, die durch eine vierte Mehrzahl von Betragsbits der vorbestimmten Betragsbitebene dargestellt sind, die zu dem angezeigten Betragsbit benachbart sind, als die ersten Steuerbits für die Transformationskoeffizienten, die durch die zweite Mehrzahl von Betragsbits dargestellt sind, der Vorzeichenbitvorkodiereinheit (208) zuzuführen;
eine dritte Multiplexereinheit (210), die durch das Steuersignal steuerbar ist, um die dem angezeigten Betragsbit und der vierten Mehrzahl von Betragsbits der vorbestimmten Betragsbitebene zugehörigen Vorzeichenbits (294) als das dem vorgegebenen Betragsbit zugehörige Vorzeichenbit und die der zweiten Mehrzahl von Betragsbits zugehörigen Vorzeichenbits der Vorzeichenbitvorkodiereinheit (208) zuzuführen,
aufweist.

11. Vorrichtung gemäß einem der Ansprüche 1 bis 10, bei der der Vorkodierer (108₁; 108₃) eine
Vorhersageeinrichtung (200; 400) zum Vorhersagen aufweist, ob eines der Betragsbits unter den benachbarten Betragsbits der vorbestimmten Betragsbitebene eines gemäß der Reihenfolge des Durchlaufens als nächstes an der Reihe seienden Tupels (274_{5,2} bis 274_{5,5}; 274_{3,2} bis 274_{3,5}) zu den vorbestimmten Betragsbits gehört, und, wenn dies der Fall ist, welches der Betragsbits unter den benachbarten Betragsbits der vorbestimmten Betragsbitebene des gemäß der Reihenfolge des Durchlaufens als nächstes an der Reihe seienden Tupels zu dem vorbestimmten Betragsbit gehört, wobei die Vorhersageeinrichtung ausgebildet ist, die Vorhersage auf Basis der Betragsbits (282) der vorbestimmten Betragsbitebene des als nächstes an der Reihe seienden Tupels und des aktuell an der Reihe seienden Tupels und der ersten Statusbits (284; 504) für die Transformationskoeffizienten, die durch die Betragsbits der vorbestimmten Betragsbitebene des als nächstes an der Reihe seienden Tupels, des aktuell an der Reihe seienden Tupels und des als übernächstes an der Reihe seienden Tupels dargestellt sind, zu treffen.

12. Vorrichtung gemäß Anspruch 11, bei der die Vorhersageeinrichtung (200) derart ausgebildet ist, dass die Vorhersage, ob eines der Betragsbits unter den benachbarten Betragsbits der vorbestimmten Betragsbitebene eines gemäß der Reihenfolge des Durchlaufens als nächstes an der Reihe seienden Tupels zu den vorbestimmten Betragsbits gehört, und, wenn dies der Fall ist, welches der Betragsbits unter den benachbarten Betragsbits der vorbestimmten Betragsbitebene des gemäß der Reihenfolge des Durchlaufens als nächstes an der Reihe seienden Tupels zu dem vorbestimmten Betragsbit gehört, auch von einer vorherigen Vorhersage (218) der Vorhersageeinrichtung abhängt, ob eines der Betragsbits unter den benachbarten Betragsbits der vorbestimmten Betragsbitebene eines gemäß der Reihenfolge des Durchlaufens aktuell an der Reihe seienden Tupels zu dem vorbestimmten Betragsbit gehört, und, wenn dies der Fall ist, welches der Betragsbits unter den benachbarten Betragsbits der vorbestimmten Betragsbitebene des gemäß der Reihenfolge des Durchlaufens als nächstes an der Reihe seienden Tupels zu dem vorbestimmten Betragsbit gehört.

13. Vorrichtung gemäß Anspruch 11, bei der die Vorhersageeinrichtung (200) derart ausgebildet ist, dass die Vorhersage, ob eines der Betragsbits unter den benachbarten Betragsbits der vorbestimmten Betragsbitebene eines gemäß der Reihenfolge des Durchlaufens als nächstes an der Reihe seienden Tupels zu dem vorbestimmten Betragsbit gehört, und, wenn dies der Fall ist, welches der Betragsbits unter den benachbarten Betragsbits der vorbestimmten Betragsbitebene des gemäß der Reihenfolge des Durchlaufens als nächstes an der Reihe seienden Tupels zu dem vorbestimmten Betragsbit gehört, auch von ersten Statusbits (274_{3,2} bis 274_{3,5}) für die Transformationskoeffizienten abhängt, die durch die Betragsbits der vorbestimmten Betragsbitebene des gemäß der Reihenfolge des Durchlaufens zuletzt an der Reihe gewesenen Tupels dargestellt sind.

14. Verfahren zum Kodieren eines Blockes (34; 708) von Transformationskoeffizienten (710), wobei die Transformationskoeffizienten jeweils mittels mehrerer Betragsbits (252) dargestellt sind, so dass dieselben eine Folge von Betragsbitebenen (38₁ ... 38ₙ) definieren, mit folgenden Schritten:
Durchlaufen der Betragsbits einer vorbestimmten der Betragsbitebenen (38₁ .... 38ₙ) in Tupeln (292; 322; 506; 712) von jeweils einer Mehrzahl von benachbarten Betragsbits unter Kodieren vorbestimmter der Betragsbits der Tupel in Datenwörter derart, dass ein vorbestimmtes Betragsbit zusammen mit einem zugeordneten Vorzeichenbit in eines der Datenwörter (244; 444; 714) kodiert wird, oder dass ein vorbestimmtes Betragsbit zusammen mit einem anderen vorbestimmten Betragsbit des gleichen Tupels in eines der Datenwörter (318; 444; 714) kodiert wird, und Kodieren anderer, zu den vorbestimmten Betragsbits unterschiedlicher Betragsbits der Tupel in weitere Datenwörter derart, dass eines der anderen Betragsbits zusammen mit einem zugeordneten Vorzeichenbit in eines der weiteren Datenwörter (244; 444; 714) kodiert wird, oder dass eines der anderen Betragsbits zusammen mit einem anderen der anderen Betragsbits des gleichen Tupels in eines der weiteren Datenwörter (318; 444; 714) kodiert wird;
Zwischenspeichern der Datenwörter (244; 318; 444; 714) in einem Datenwortzwischenspeicher;
Zwischenspeichern der weiteren Datenwörter (244; 318; 444; 714) in einem weiteren Datenwortzwischenspeicher; und
Kodieren der zwischengespeicherten Datenwörter und der weiteren Datenwörter (244; 318; 444; 714) aus dem Datenwortzwischenspeicher und dem weiteren Datenwortspeicher in einen kodierten Datenstrom, und zwar durch Kodieren von zunächst den Datenwörtern in dem Zwischenspeicher und dann den weiteren Datenwörtern in dem weiteren Zwischenspeicher.

15. Programm mit einem Programmcode zum Durchführen des Verfahrens nach Anspruch 14, wenn das Programm auf einem Prozessor abläuft.

## Claims

1. A device for coding a block (34; 708) of transformation coefficients (710), the transformation coefficients each being represented by means of several magnitude bits (252), so that same define a sequence of magnitude bit planes (38₁ ...38ₙ), comprising
a precoder (108₁; 108₂; 108₃; 702) for traversing the magnitude bits of a predetermined one of the magnitude bit planes (38₁ ...38ₙ) in tuples (292; 322; 506; 712) of a plurality of adjacent magnitude bits in each case, and for coding predetermined ones of the magnitude bits of the tuples into data words such that a predetermined magnitude bit is coded, along with an associated sign bit, into one of the data words (244; 444; 714), or that a predetermined magnitude bit is coded, along with any other predetermined magnitude bit of the same tuple, into one of the data words (318; 444; 714), and coding other magnitude bits of the tuples, which are different from the predetermined magnitude bits, into further data words such that one of the other magnitude bits is coded into one of the further data words (244; 444; 714) along with an associated sign bit, or that one of the other magnitude bits is coded into one of the further data words (318; 444; 714) along with another one of the other magnitude bits of the same tuple;
a data word buffer (110₁) for temporarily storing the data words (244; 318; 444; 714); and
a further data word buffer (110₂) for temporarily storing the further data words; and
an entropy coder (112; 706) for coding the data words and the further data words (244; 318; 444; 714) from the data word buffer and the further data word buffer into a coded data stream, specifically by coding at first the data words in the buffer and then the further data words in the further buffer.

2. The device as claimed in claim 1, wherein the transformation coefficients are each represented by means of the several magnitude bits (252) and a sign bit (250) belonging to it, and wherein the precoder (108₁; 108₃; 702) is configured such that coding of the predetermined magnitude bits also depends on the sign bit which belongs to this predetermined magnitude bit.

3. The precoder as claimed in claim 2, wherein the precoder (108₁; 108₃; 702) is configured such that coding of the predetermined magnitude bits also depends on sign bits which belong to the magnitude bits which are adjacent to the predetermined magnitude bits.

4. The device as claimed in claim 3, wherein the precoder (108₁; 108₃; 702) is configured such that coding of the predetermined magnitude bits also depends on first status bits (274), which indicate a significance, in relation to the predetermined magnitude bit plane, for the transformation coefficients which are represented by the predetermined magnitude bits and by magnitude bits which are adjacent to the predetermined magnitude bits.

5. The device as claimed in one of claims 1 to 4, wherein the precoder (108₁; 108₃; 702) has a buffer (106) and a bit extractor (104) for filling the buffer (106), while the magnitude bits in tuples are traversed, comprising
a tuple of a plurality of adjacent magnitude bits of the predetermined magnitude bit plane, which tuple is, at the earliest, to be processed next according to a pass sequence,
sign bits which belong to the magnitude bits of the tuple which is, at the earliest, to be processed next, and
first status bits which indicate a significance, in relation to the predetermined magnitude bit plane, for the transformation coefficients which are represented by a plurality of adjacent magnitude bits of the predetermined magnitude bit plane of a tuple which, at the earliest, is to be processed after the next one according to the pass sequence,
connected upstream from it, and wherein the precoder is configured to perform the coding on the basis of a content of the buffer.

6. The device as claimed in claim 5, wherein the bit extractor (104) is configured to determine, for filling the buffer (106), the first status bits (274) from magnitude bits (276) which represent the same transformation coefficients as the magnitude bits of the tuple to be processed, at the earliest, after the next one, but which are located within more significant magnitude bit planes than the former.

7. The device as claimed in claims 5 or 6, wherein the bit extractor (104) is configured to obtain, for filling the buffer (106), the plurality of adjacent magnitude bits of the tuple which is, at the earliest, to be coded next, and the sign bits belonging to them by means of a memory access (114) to a memory (102) which stores the magnitude bits and sign bits.

8. The device as claimed in one of claims 6 to 7, wherein the buffer comprises a shift register (106) which loses first status bits (274), with which the buffer (106) is filled, not until after more than five shifting operations, and/or which loses magnitude bits (252), with which the buffer (106) is filled, not until after more than three shifting operations, and/or which loses sign bits (250), with which the buffer (106) is filled, not until after more than four shifting operations.

9. The device as claimed in one of claims 1 to 8, wherein the precoder (108₁) comprises
a magnitude bit precoding unit (202) configured to generate, on the basis of
a supplied magnitude bit among the adjacent magnitude bits of a tuple (282) currently being processed according to a pass sequence, and
first status bits (290) for the transformation coefficients which are represented by a first plurality of magnitude bits of the predetermined magnitude bit plane which are adjacent to the supplied magnitude bit,
a first partial data word from which the supplied magnitude bit (232) and an associated magnitude bit context (236) may be determined, and
a sign bit precoding unit (208) configured to generate, on the basis of
the sign bit (250) which belongs to the supplied magnitude bit;
sign bits (294) which belong to a second plurality of magnitude bits of the predetermined magnitude bit plane which are adjacent to the magnitude bit supplied; and
the first status bits (290) for the transformation coefficients which are represented by the second plurality of magnitude bits of the predetermined magnitude bit plane,
a second partial data word from which the sign bit (234) which belongs to the supplied magnitude bit, and an associated sign bit context (236) may be determined,
the precoder (108₁) being configured such that the data word (244) of the supplied magnitude bit comprises the first partial data word and the second partial data word, and
wherein the entropy coder (112) is configured to determine, from the first partial data word, the supplied magnitude bit and the associated magnitude bit context, and to arithmetically code the supplied magnitude bit into the data stream in a context-dependent manner while using the supplied magnitude bit context, and, if the magnitude bit supplied is significant, to determine, from the second partial data word, the sign bit belonging to the supplied magnitude bit and the sign bit context belonging to same, and to arithmetically code the sign bit belonging to the supplied magnitude bit into the data stream in a context-dependent manner while using the associated sign bit context.

10. The apparatus as claimed in claim 9, wherein the precoder (108) comprises
a multiplex circuit, comprising
a first multiplexer circuit (204) to which any of the magnitude bits of the tuple (282) currently being processed may be indicated by means of a control signal, and which is configured to supply the magnitude bit indicated to the magnitude bit precoding unit (202) as the supplied magnitude bit;
a second multiplexer circuit (206, 212), which may be controlled by the control signal to supply the first status bits (290) for transformation coefficients which are represented by a third plurality of magnitude bits of the predetermined magnitude bit plane, which are adjacent to the indicated magnitude bit, to the magnitude bit precoding unit (202) as the first control bits for the transformation coefficients which are represented by the first plurality of magnitude bits, and to supply the first status bits (290) for transformation coefficients which are represented by a fourth plurality of magnitude bits of the predetermined magnitude bit plane, which are adjacent to the magnitude bit indicated, to the sign bit precoding unit (208) as the first control bits for the transformation coefficients which are represented by the second plurality of magnitude bits;
a third multiplexer unit (210) which may be controlled by the control signal to supply the sign bits (294), which belong to the indicated magnitude bit and to the fourth plurality of magnitude bits of the predetermined magnitude bit plane, to the sign bit precoding unit (208) as the sign bit which belongs to the predefined magnitude bit, and the sign bits belonging to the second plurality of magnitude bits.

11. The device as claimed in one of claims 1 to 10, wherein the precoder (108₁; 108₃) comprises a
prediction means (200; 400) for predicting whether, and, if so, which of the magnitude bits among the adjacent magnitude bits of the predetermined magnitude bit plane of a tuple (274_{5,2} to 274_{5,5}; 274_{3,2} to 274_{3,5}) which is to be processed next according to the pass sequence belongs to the predetermined magnitude bits, the prediction means being configured to make the prediction on the basis of the magnitude bits (282) of the predetermined magnitude bit plane of the tuple which is to be processed next and the tuple which is currently being processed, and of the first status bits (284; 504) for the transformation coefficients which are represented by the magnitude bits of the predetermined magnitude bit plane of the tuple to be processed next, of the tuple currently being processed, and of the tuple to be processed after the next one.

12. The device as claimed in claim 11, wherein the prediction means (200) is configured such that the prediction whether, and, if so, which of the magnitude bits among the adjacent magnitude bits of the predetermined magnitude bit plane of a tuple to be processed next according to the pass sequence belongs to the predetermined magnitude bits, also depends on a previous prediction (218) by the prediction means as to whether, and, if so, which of the magnitude bits among the adjacent magnitude bits of the predetermined magnitude bit plane of a tuple currently being processed according to the pass sequence belongs to the predetermined magnitude bit.

13. The device as claimed in claim 11, wherein the prediction means (200) is configured such that the prediction whether, and, if so, which of the magnitude bits among the adjacent magnitude bits of the predetermined magnitude bit plane of a tuple to be processed next according to the pass sequence belongs to the predetermined magnitude bit, also depends on first status bits (274_{3,2} to 274_{3,5}) for the transformation coefficients which are represented by the magnitude bits of the predetermined magnitude bit plane of the tuple which was the most recent one to be processed according to the pass sequence.

14. A method of coding a block (34; 708) of transformation coefficients (710), the transformation coefficients each being represented by means of several magnitude bits (252), so that same define a sequence of magnitude bit planes (38₁ ...38ₙ), the method comprising:
traversing the magnitude bits of a predetermined one of the magnitude bit planes (38₁ ...38ₙ) in tuples (292; 322; 506; 712) of a plurality of adjacent magnitude bits in each case, and for coding predetermined ones of the magnitude bits of the tuples into data words such that a predetermined magnitude bit is coded, along with an associated sign bit, into one of the data words (244; 444; 714), or that a predetermined magnitude bit is coded, along with any other predetermined magnitude bit of the same tuple, into one of the data words (318; 444; 714), and coding other magnitude bits of the tuples, which are different from the predetermined magnitude bits, into further data words such that one of the other magnitude bits is coded into one of the further data words (244; 444; 714) along with an associated sign bit, or that one of the other magnitude bits is coded into one of the further data words (318; 444; 714) along with another one of the other magnitude bits of the same tuple;
temporarily storing the data words (244; 318; 444; 714) in a data word buffer;
temporarily storing the further data words (244; 318; 444; 714) in a further data word buffer; and
coding the temporarily stored data words and the further data words (244; 318; 444; 714) from the data word buffer and the further data word buffer into a coded data stream, specifically by coding at first the data words in the buffer and then the further data words in the further buffer.

15. A program comprising a program code for performing the method of claim 14, when the program runs on a processor.

## Revendications

1. Dispositif de codage d'un bloc (34; 708) de coefficients de transformation (710), les coefficients de transformation étant représentés, chacun, au moyen de plusieurs bits de quantité (252), de sorte qu'ils définissent une succession de plans de bits de quantité (38₁ ... 38ₙ), avec un précodeur (108₁; 108₂; 108₃; 702) destiné à parcourir les bits de quantité de l'un prédéterminé des plans de bits de quantité (38₁ ... 38ₙ) dans les tuples (292; 322; 506; 712) de chaque fois une pluralité de bits de quantité adjacents et à coder certains prédéterminés des bits de quantité des tuples en mots de données de sorte qu'un bit de quantité prédéterminé soit codé, ensemble avec un bit de signe associé en l'un des mots de données (244; 444; 714), ou qu'un bit de quantité prédéterminé soit codé, ensemble avec un autre bit de quantité prédéterminé du même tuple, en l'un des mots de données (318; 444; 714), et à coder d'autres bits de quantité des tuples, différents des bits de quantité prédéterminés, en d'autres bits de quantité, de sorte que l'un des autres bits de quantité soit codé, ensemble avec un bit de signe associé, en l'un des autres mots de données (244; 444; 714), ou que l'un des autres bits de quantité soit codé, ensemble avec un autre des autres bits de quantité du même tuple, en l'un des autres mots de données (318; 444; 714);
une mémoire intermédiaire de mots de données (110₁) destinée à mémoriser temporairement les mots de données (244; 318; 444; 714);
une autre mémoire intermédiaire de mots de données (110₂) destinée à mémoriser temporairement les autres mots de données; et
un codeur entropique (112; 706) destiné à coder les mots de données et les autres mots de données (244; 318; 444; 714) de la mémoire intermédiaire de mots de données et de l'autre mémoire de mots de données en un flux de données codé, et ce en codant tout d'abord les mots de données dans la mémoire intermédiaire et ensuite les autres mots de données dans l'autre mémoire intermédiaire.

2. Dispositif selon la revendication 1, dans lequel les coefficients de transformation sont représentés, chacun, au moyen des plusieurs bits de quantité (252) ainsi que d'un bit de signe (250) associé, et le précodeur (108₁; 108₃; 702) est réalisé de sorte que le codage des bits de quantité prédéterminés dépende également du bit de signe associé à ce bit de quantité prédéterminé.

3. Précodeur selon la revendication 2, dans lequel le précodeur (108₁; 108₃; 702) est réalisé de sorte que le codage des bits de quantité prédéterminés dépende également des bits de signe qui appartiennent aux bits de quantité qui sont adjacents aux bits de quantité prédéterminés.

4. Dispositif selon la revendication 3, dans lequel le précodeur (108₁; 108₃; 702) est réalisé de sorte que le codage des bits de quantité prédéterminés dépende également des premiers bits de statut (274) qui indiquent, pour les coefficients de transformation qui sont représentés par les bits de quantité prédéterminés et les bits de quantité qui sont adjacents aux bits de quantité prédéterminés, une signification par rapport au plan de bits de quantité prédéterminé.

5. Dispositif selon l'une des revendications 1 à 4, dans lequel sont connectés, en amont du précodeur (108₁; 108₃; 702), une mémoire intermédiaire (106) ainsi qu'un extracteur de bits (104) pour remplir, lors du parcours des bits de quantité dans les tuples, la mémoire intermédiaire (106)
d'un tuple d'une pluralité de bits de quantité adjacents du plan de bits de quantité prédéterminé qui se présente, selon un ordre de parcours, au plus tôt comme le tuple suivant, de bits de signe associés aux bits de quantité du tuple se présentant au plus tôt comme le suivant, et
de premiers bits de statut qui indiquent, pour les coefficients de transformation représentés par une pluralité de bits de quantité adjacents du plan de bits de quantité prédéterminé d'un tuple se présentant, selon l'ordre de parcours, au plus tôt comme le deuxième tuple suivant, une signification par rapport au plan de bits de quantité prédéterminé,
et le précodeur est réalisé pour effectuer le codage sur base d'un contenu de la mémoire intermédiaire.

6. Dispositif selon la revendication 5, dans lequel l'extracteur de bits (104) est réalisé pour déterminer, pour remplir la mémoire intermédiaire (106), les premiers bits de statut (274) à partir des bits de quantité (276) qui représentent les mêmes coefficients de transformation que les bits de quantité du tuple qui se présente au plus tôt comme le deuxième tuple suivant, mais se situent dans des plans de bits de quantité plus significatifs que ces derniers.

7. Dispositif selon la revendication 5 ou 6, dans lequel l'extracteur de bits (104) est réalisé pour obtenir, pour remplir la mémoire intermédiaire (106), la pluralité de bits de quantité adjacents du tuple se présentant au plus tôt comme le suivant et les bits de signe associés par un accès (114) à une mémoire (102) qui mémorise les bits de quantité et les bits de signe.

8. Dispositif selon l'une des revendications 6 à 7, dans lequel la mémoire intermédiaire présente un registre à décalage qui ne perd les premiers bits de statut (274) par lesquels est remplie la mémoire intermédiaire (106) qu'après plus de cinq opérations de décalage, ne perd les bits de quantité (252) par lesquels est remplie la mémoire intermédiaire (106) qu'après plus de trois opérations de décalage ou les bits de signe (250) par lesquels est remplie la mémoire intermédiaire (106) qu'après plus de quatre opérations de décalage.

9. Dispositif selon l'une des revendications 1 à 8, dans lequel le précodeur (108₁) présente
une unité de précodage de bits de quantité (202) qui est réalisée pour générer sur base
d'un bit de quantité alimenté parmi les bits de quantité adjacents d'un tuple (282) se présentant actuellement selon un ordre de parcours, et
de premiers bits de statut (290) pour les coefficients de transformation qui sont représentés par une première pluralité de bits de quantité du plan de bits de quantité prédéterminé adjacents au bit de quantité alimenté,
un premier mot de données partiel à partir duquel peuvent être déterminés le bit de quantité alimenté (232) ainsi qu'un contexte de bit de quantité associé (236), et
une unité de précodage de bit de signe (208) qui est réalisée pour générer, sur base
du bit de signe (250) associé au bit de quantité alimenté;
de bits de signe (294) associés à une deuxième pluralité de bits de quantité du plan de bits de quantité prédéterminé adjacents au bit de quantité alimenté; et
des premiers bits de statut (290) pour les coefficients de transformation qui sont représentés par la deuxième pluralité de bits de quantité du plan de bits de quantité prédéterminé,
un deuxième mot de données partiel à partir duquel peuvent être déterminés le bit de signe (234) associé au bit de quantité alimenté ainsi qu'un contexte de bit de signe (236) associé,
et qui est réalisé de sorte que le mot de données (244) du bit de quantité alimenté comporte le premier mot de données partiel et le deuxième mot de données partiel, et
le codeur entropique (112) étant réalisé pour déterminer à partir du premier mot de données partiel le bit de quantité alimenté ainsi que le contexte de bits de quantité associé, et pour coder arithmétiquement dans le flux de données le bit de quantité alimenté à l'aide du contexte de bit de quantité alimenté en fonction du contexte et, si le bit de quantité alimenté est significatif, déterminer à partir du deuxième mot de données partiel le bit de signe associé au bit de quantité alimenté ainsi que le contexte de bit de signe associé à ce dernier, et pour coder arithmétiquement dans le flux de données le bit de signe associé au bit de quantité alimenté à l'aide du contexte de bit de signe associé en fonction du contexte.

10. Dispositif selon la revendication 9, dans lequel le précodeur (108) présente
un circuit multiplexeur qui présente
un premier circuit multiplexeur (204) par lequel peut être indiqué par un signal de commande l'un quelconque des bits de quantité du tuple (282) qui vient de se présenter, et qui est réalisé pour alimenter le bit de quantité indiqué comme bit de quantité alimenté vers l'unité de précodage de bits de quantité (202);
un deuxième circuit multiplexeur (206, 212) qui peut être commandé par le signal de commande pour alimenter vers l'unité de précodage de bits de quantité (202) les premiers bits de statut (290) pour les coefficients de transformation représentés par une troisième pluralité de bits de quantité du plan de bits de quantité prédéterminé adjacents au bit de quantité indiqué, comme les premiers bits de commande pour les coefficients de transformation représentés par la première pluralité de bits de quantité, et pour alimenter vers l'unité de précodage de bit de signe (208) les premiers bits de statut (290) pour les coefficients de transformation représentés par une quatrième pluralité de bits de quantité du plan de bits de quantité prédéterminé adjacents au bit de quantité indiqué, comme premiers bits de commande pour les coefficients de transformation représentés par la deuxième pluralité de bits de quantité;
une troisième unité de multiplexage (210) pouvant être commandée par le signal de commande pour alimenter vers l'unité de précodage de bit de signe (208), comme bit de signe associé au bit de quantité prédéterminé, les bits de signe (294) associés au bit de quantité indiqué et à la quatrième pluralité de bits de quantité du plan de bits de quantité prédéterminé et les bits de signe associés à la deuxième pluralité de bits de quantité.

11. Dispositif selon l'une des revendications 1 à 10, dans lequel le précodeur (108₁ ; 108₃) présente
un moyen de prédiction (200; 400) destiné à prédire si l'un des bits de quantité parmi les bits de quantité adjacents du plan de bits de quantité prédéterminé d'un tuple (274_{5,2} à 274_{5,5}; 274_{3,2} à 274_{3,5}) se présentant comme le suivant dans l'ordre du parcours appartient aux bits de quantité prédéterminés et, si tel est le cas, lequel des bits de quantité parmi les bits de quantité adjacents du plan de bits de quantité prédéterminé du tuple se présentant comme le suivant dans l'ordre du parcours appartient au bit de quantité prédéterminé, le moyen de prédiction étant réalisé pour effectuer la prédiction sur base des bits de quantité (282) du plan de bits de quantité prédéterminé du tuple se présentant comme le suivant et du tuple se présentant actuellement et des premiers bits de statut (284; 504) pour les coefficients de transformation représentés par les bits de quantité du plan de bits de quantité prédéterminé du tuple se présentant comme le suivant, du tuple se présentant actuellement et du tuple se présentant comme le deuxième qui suit.

12. Dispositif selon la revendication 11, dans lequel le moyen de prédiction (200) est réalisé de sorte que la prédiction de si l'un des bits de quantité parmi les bits de quantité adjacents du plan de bits de quantité prédéterminé d'un tuple se présentant, dans l'ordre du parcours, comme le suivant appartient aux bits de quantité prédéterminés et, si tel est le cas, lequel des bits de quantité parmi les bits de quantité adjacents du plan de bits de quantité prédéterminé du tuple se présentant comme le suivant dans l'ordre du parcours appartient au bit de quantité prédéterminé, dépende également d'une prédiction précédente du moyen de prédiction de si l'un des bits de quantité parmi les bits de quantité adjacents du plan de bits de quantité prédéterminé d'un tuple se présentant, dans l'ordre du parcours, actuellement appartient au bit de quantité prédéterminé et, si tel est le cas, lequel des bits de quantité parmi les bits de quantité adjacents du plan de bits de quantité prédéterminé du tuple se présentant, dans l'ordre du parcours, comme le suivant appartient au bit de quantité prédéterminé.

13. Dispositif selon la revendication 11, dans lequel le moyen de prédiction (200) est réalisé de sorte que la prédiction de si l'un des bits de quantité parmi les bits de quantité adjacents du plan de bits de quantité prédéterminé d'un tuple se présentant, dans l'ordre du parcours, comme le suivant appartient aux bits de quantité prédéterminés appartient au bit de quantité prédéterminé et, si tel est le cas, lequel des bits de quantité parmi les bits de quantité adjacents du plan de bits de quantité prédéterminé d'un tuple se présentant, dans l'ordre du parcours, comme le suivant appartient au bit de quantité prédéterminé dépende également des premiers bits de statut (274_{3,2} à 274_{3,5}) pour les coefficients de transformation représentés par les bits de quantité du plan de bits de quantité prédéterminé du tuple qui s'est présenté en dernier lieu.

14. Procédé de codage d'un bloc (34; 708) de coefficients de transformation (710), les coefficients de transformation étant représentés, chacun, au moyen de plusieurs bits de quantité (252), de sorte qu'ils définissent une succession de plans de bits de quantité (38₁ ... 38ₙ), aux étapes suivantes consistant à:
parcourir les bits de quantité de l'un prédéterminé des plans de bits de quantité (38₁ ... 38ₙ) dans les tuples (292; 322; 506; 712) de chaque fois une pluralité de bits de quantité adjacents tout en codant certains prédéterminés des bits de quantité en mots de données de sorte qu'un bit de quantité prédéterminé soit codé, ensemble avec un bit de signe associé, en l'un des mots de données (244; 444; 714), ou qu'un bit de quantité prédéterminé soit codé, ensemble avec un autre bit de quantité prédéterminé du même tuple, en l'un des mots de données (318; 444; 714), et en codant d'autres bits de quantité des tuples, différents des bits de quantité prédéterminés, en d'autres mots de données, de sorte que l'un des autres mots de données soit codé, ensemble avec un bit de signe associé, en l'un des autres mots de données (244; 444; 714), ou que l'un des autres bits de quantité soit codé, ensemble avec un autre des autres bits de quantité du même tuple, en l'un des autres mots de données (318; 444; 714);
mémoriser temporairement les mots de données (244; 318; 444; 714) dans une mémoire intermédiaire de mots de données;
mémoriser temporairement les autres mots de données (244; 318; 444; 714) dans une autre mémoire intermédiaire de mots de données; et
coder les mots de données et les autres mots de données (244; 318; 444; 714) mémorisés temporairement de la mémoire intermédiaire de mots de données et de l'autre mémoire de mots de données en un flux de données codé, et ce en codant tout d'abord les mots de données dans la mémoire intermédiaire et ensuite les autres mots de données dans l'autre mémoire intermédiaire.

15. Programme avec un code de programme pour réaliser le procédé selon la revendication 14 lorsque le programme est exécuté sur un processeur.
